(19) Europäisches Patentamt
European Patent Office
Office européen des brevets

(11) EP 4 653 988 A1

(12) EUROPEAN PATENT APPLICATION
published in accordance with Art. 153(4) EPC

(43) Date of publication:
**26.11.2025 Bulletin 2025/48**

(21) Application number: **24838337.4**

(22) Date of filing: **19.03.2024**

(51) International Patent Classification (IPC):
***G06F 3/0354*** *(2013.01)*

(52) Cooperative Patent Classification (CPC):
**G06F 3/023; G06F 3/0354; G06F 3/038; H04W 4/30; H04W 4/80; H04W 76/14; H04W 76/15**

(86) International application number:
**PCT/CN2024/082324**

(87) International publication number:
**WO 2025/011077 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 CN 202310862162**

(71) Applicant: **Honor Device Co., Ltd.**
**Shenzhen, Guangdong 518040 (CN)**

(72) Inventor: **LI, Pengfei**
**Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

# (54) SCREENHOP METHOD, COMMUNICATION SYSTEM, AND COMPUTER-READABLE STORAGE MEDIUM

(57) This application relates to the terminal control field, and in particular, to a keyboard-mouse traversal method, a communication system, and a computer-readable storage medium. The method includes: When a cursor of an input device is displayed on a screen of a first device, the first device controls, in response to a first operation, the cursor to move out of the screen of the first device and enter a screen of a second device for displaying. The second device is located in a first direction of the first device and establishes a connection to the first device. The second device controls, in response to a second operation, the cursor to move out of the screen of the second device and enter a screen of a third device for displaying. The third device is located in a second direction of the second device and establishes a connection to the second device. According to the method provided in this application, the input device can traverse between different devices, thereby avoiding complex operations and helping improve user experience.

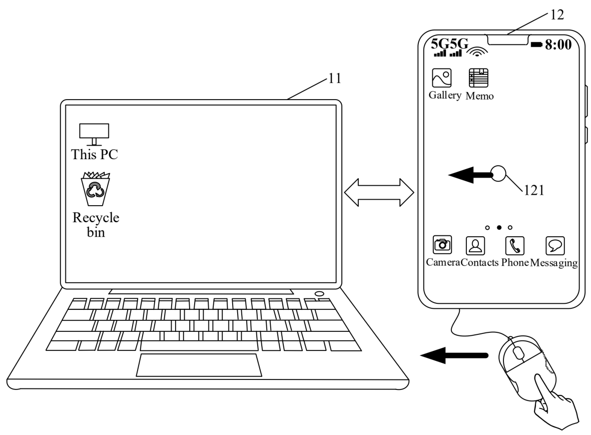


FIG. 14A

EP 4 653 988 A1

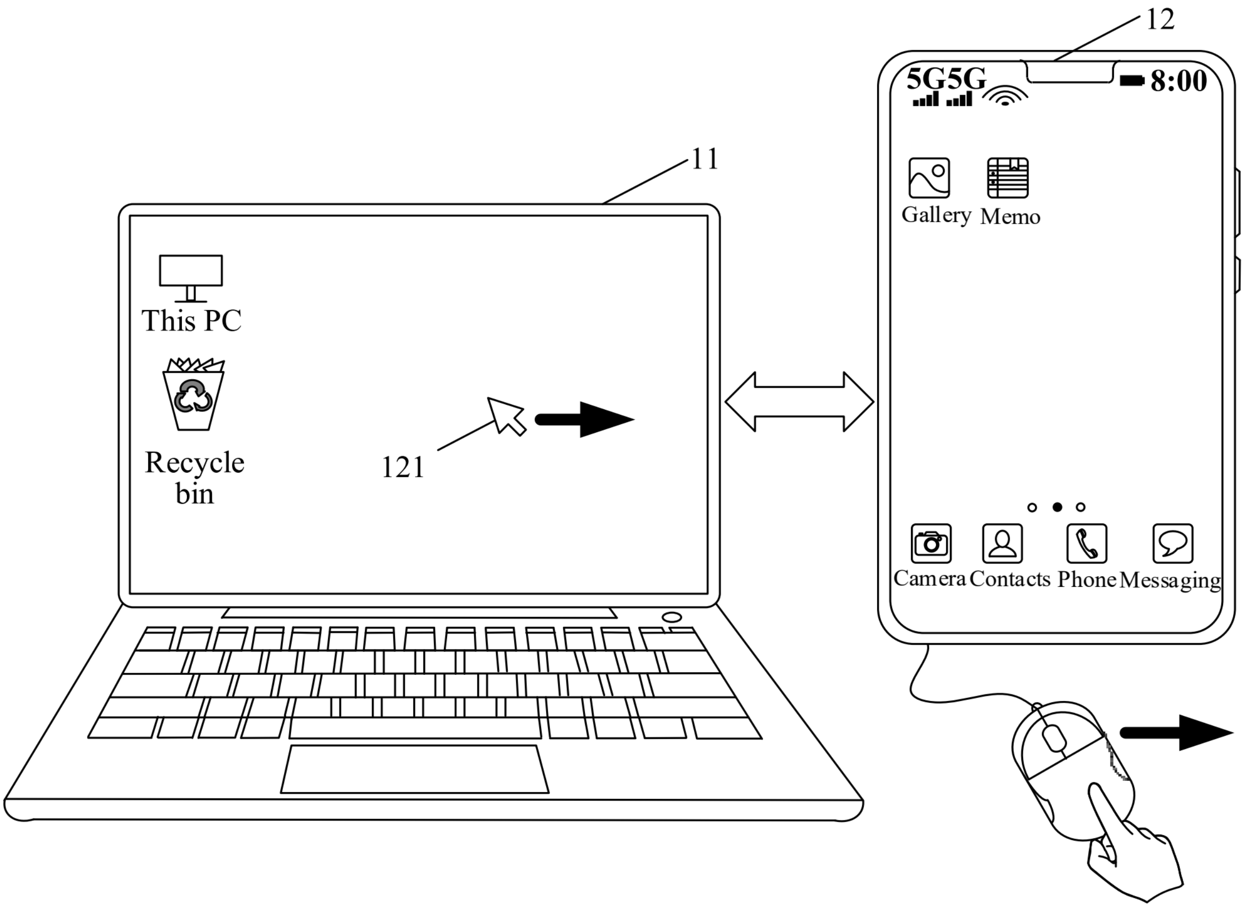
12
5G5G
8:00
Gallery
Memo
Camera
Contacts
Phone
Messaging
11
This PC
Recycle bin
121

FIG. 14B

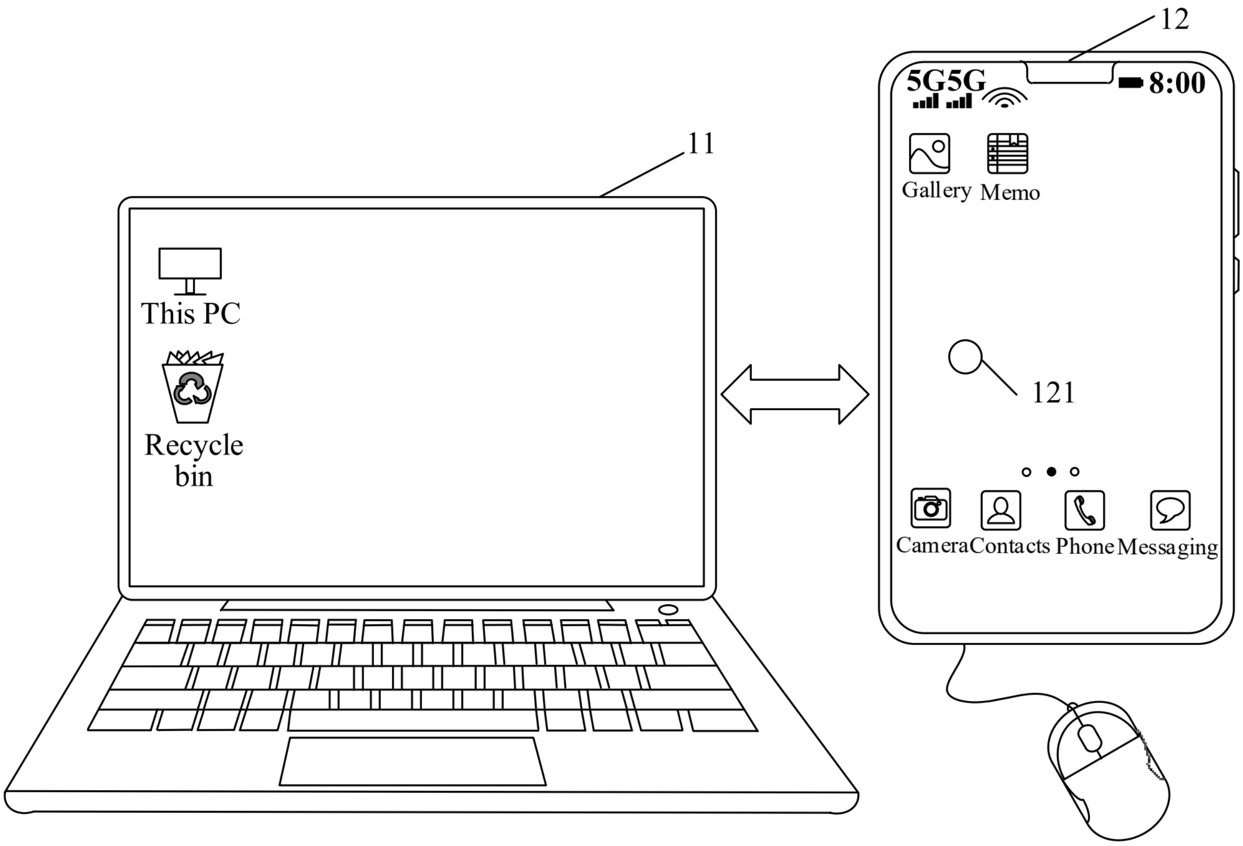
11
This PC
Recycle bin
12
5G5G
8:00
Gallery
Memo
121
Camera
Contacts
Phone
Messaging

FIG. 14C

## Description

This application claims priority to Chinese Patent Application No. 202310862162.5, filed with the China National Intellectual Property Administration on July 12, 2023 and entitled "KEYBOARD-MOUSE TRAVERSAL METHOD, COMMUNICATION SYSTEM, AND COMPUTER-READABLE STORAGE MEDIUM", which is incorporated herein by reference in its entirety.

## TECHNICAL FIELD

This application relates to the terminal control field, and in particular, to a keyboard-mouse traversal method, a communication system, and a computer-readable storage medium.

## BACKGROUND

With the development of terminal technologies, there are increasing types and quantities of terminal devices. Currently, one terminal device cannot meet requirements of a user, and the user may use a plurality of terminal devices to meet working and learning requirements. However, when the plurality of terminal devices all have services to be processed by the user, the user needs to switch operation modes back and forth between different terminal devices, which is complex and degrades user experience.

## SUMMARY

This application provides a keyboard-mouse traversal method, a communication system, and a computer-readable storage medium, so that different terminals can be operated by using a keyboard-mouse, to implement seamless access between the different terminal devices.

To achieve the foregoing objective, the following technical solutions are used in this application:

According to a first aspect, a keyboard-mouse method is provided. The method includes:

A first device detects, when a cursor of an input device is displayed on a screen of the first device, a first operation acting on the input device. The first operation is used to move the cursor displayed on the screen of the first device towards a first direction, and the input device is used to input a control instruction.

The first device controls, in response to the first operation, the cursor to move out of the screen of the first device and enter a screen of a second device for displaying. The second device is located in the first direction of the first device and establishes a connection to the first device.

The second device detects a second operation acting on the input device. The second operation is used to move the cursor displayed on the screen of the second device towards a second direction.

The second device controls, in response to the second operation, the cursor to move out of the screen of the second device and enter a screen of a third device for displaying. The third device is located in the second direction of the second device and establishes a connection to the second device.

In this embodiment of this application, the input device may include a mouse, a keyboard, a graphics tablet, and the like. For example, when the input device is a mouse, the cursor of the input device is a mouse pointer (or referred to as a mouse cursor).

For example, the first device and the third device are devices (Android devices) on which an Android system is deployed, and the second device is a device (PC) on which a Windows system is deployed. The first device and the third device are communicatively connected to the second device.

For example, in some application scenarios, a PC may be the second device, an Android device I may be the first device, and an Android device II may be the third device. Alternatively, the PC may be the second device, the Android device II may be the first device, and the Android device I may be the third device. In the application scenario, the second device is communicatively connected to the first device and the third device.

According to the keyboard-mouse traversal method provided in this application, the input device can traverse between different devices, so that different devices can be controlled by using one input device without switching operation modes back and forth between different terminal devices, thereby avoiding complex operations and helping improve user experience.

In an implementation, the first direction and the second direction may include leftwards or rightwards. In another implementation, the first direction and the second direction may further include upwards or downwards.

In this embodiment of this application, the first operation and the second operation may be operations of dragging or sliding the mouse.

In an implementation of the first aspect, that the first device controls, in response to the first operation, the cursor to move out of the screen of the first device and enter the screen of the second device for displaying includes:

The first device finds, in response to the first operation, the second device in the first direction that establishes the connection to the first device.

The first device controls the cursor to move out of the screen of the first device and enter the screen of the second device for displaying.

In this implementation, if the first device does not find the second device in the first direction that establishes the connection to the first device, keyboard-mouse traversal is not performed.

In this embodiment of this application, a moving direction (the first direction) of the cursor is a traversing direction, and it is equivalent to determining whether there is a traversal-available device in the traversing direction. With the foregoing predetermining step, a probability of a keyboard-mouse traversal failure can be effectively reduced.

In an implementation of the first aspect, the method further includes:

The first device determines, in response to the first operation, whether the input device is connected to the first device.

The first device updates a traversal status of the first device to traversing if the input device is connected to the first device.

The second device updates a traversal status of the second device to traversing.

In this implementation, the input device is connected to the first device, and the first operation is moving the cursor on the screen of the first device to the screen of the second device, which is equivalent to operating the input device of the first device, so that the input device of the first device traverses to the second device. The traversal statuses of the first device and the second device are updated, so that traversal status confusion can be effectively reduced, thereby ensuring reliability of keyboard-mouse traversal.

In an implementation of the first aspect, after the first device determines, in response to the first operation, whether the input device is connected to the first device, the method further includes:

The first device detects a third operation if the input device is connected to the first device. The third operation is used to input the control instruction.

The first device intercepts a first input event corresponding to the third operation.

The first device sends the first input event to the second device.

The second device executes the control instruction corresponding to the first input event after receiving the first input event.

In an implementation, when the first device is an Android device, a keyboard-mouse service module in the first device may invoke a preset interface of an input framework, to intercept the first input event corresponding to the third operation.

In this embodiment of this application, when a keyboard-mouse of the first device traverses to the second device, the first device intercepts an input event corresponding to a keyboard-mouse operation, and sends the input event to the second device, and the second device executes a control instruction corresponding to the operation acting on the input device, so that the input device can be shared between different devices without switching different operation modes between the different devices, thereby avoiding complex operations and improving user experience. In addition, by intercepting the input event, a response of the first device to the keyboard-mouse operation is prevented, thereby ensuring reliability of keyboard-mouse traversal.

In an implementation of the first aspect, that the second device controls, in response to the second operation, the cursor to move out of the screen of the second device and enter the screen of the third device for displaying includes:

The second device finds, in response to the second operation, the third device in the second direction that establishes the connection to the second device.

The second device controls the cursor to move out of the screen of the second device and enter the screen of the third device for displaying.

In this implementation, if the second device does not find the third device in the second direction that establishes the connection to the second device, keyboard-mouse traversal is not performed.

In this embodiment of this application, a moving direction (the second direction) of the cursor is a traversing direction, and it is equivalent to determining whether there is a traversal-available device in the traversing direction. With the foregoing predetermining step, a probability of a keyboard-mouse traversal failure can be effectively reduced.

In an implementation of the first aspect, after the first device determines, in response to the first operation, whether the input device is connected to the first device, the method further includes:

The second device determines, in response to a fourth operation, whether the first device is the same as the third device if the input device is connected to the first device. The fourth operation is used to move the cursor displayed on the screen of the second device towards the second direction.

The first device updates the traversal status of the first device to non-traversing if the first device is the same as the third device.

The second device updates the traversal status of the second device to non-traversing.

For example, when the first device is the same as the third device, a corresponding application scenario is that the keyboard-mouse of the first device traverses to the second device, and then traverses back from the second device to the first device.

In this embodiment of this application, the traversal statuses of the first device and the second device are updated in time, so that traversal confusion can be effectively reduced, thereby helping improve reliability of keyboard-mouse traversal.

In an implementation of the first aspect, after the second device determines, in response to the fourth operation, whether the first device is the same as the third device, the method further includes:

The first device stops intercepting the first input event corresponding to the third operation if the first device is the same as the third device.

The first device executes the control instruction corresponding to the first input event.

In this embodiment of this application, when the keyboard-mouse of the first device traverses to the second device and then traverses back from the second device to the first device, the first device stops intercepting the input event corresponding to the keyboard-mouse operation, and executes the control instruction corresponding to the operation on the input device, so that the input device can flexibly switch between different devices, thereby avoiding complex operations and improving user experience. In addition, by stopping intercepting the input event, a response of the first device to the keyboard-mouse operation is ensured in time, thereby ensuring reliability of keyboard-mouse traversal.

In an implementation of the first aspect, after the second device determines, in response to the fourth operation, whether the first device is the same as the third device, the method further includes:

The first device controls the cursor to be displayed at a first preset location on the screen of the first device if the first device is the same as the third device.

In this embodiment of this application, when the keyboard-mouse of the first device traverses to the second device and then traverses back from the second device to the first device, the cursor is restored to the first preset location on the screen of the first device, which helps a user to quickly locate the traversing cursor, thereby improving user experience.

In an implementation of the first aspect, after the second device determines, in response to the fourth operation, whether the first device is the same as the third device, the method further includes:
The second device sends a first instruction to the first device if the first device is different from the third device.

The first device controls, after receiving the first instruction, the cursor to move out of the screen of the second device and enter the screen of the third device for displaying.

In this embodiment of this application, the first instruction may be referred to as a transfer instruction. The transfer instruction is used to notify a source that a receiver of a keyboard-mouse event changes.

In this embodiment of this application, the first instruction is used to notify the first device that the receiver changes, so that the first device responds in time to control the cursor to traverse to an updated receiver. The foregoing manner helps improve efficiency and reliability of keyboard-mouse traversal.

In an implementation of the first aspect, that the first device controls, after receiving the first instruction, the cursor to move out of the screen of the second device and enter the screen of the third device for displaying includes:
The first device establishes a connection to the third device after receiving the first instruction.

The first device controls, after establishing the connection to the third device, the cursor to move out of the screen of the second device and enter the screen of the third device for displaying.

In this embodiment of this application, when the receiver changes, the first device establishes a connection to the updated receiver (the third device), thereby avoiding a case that the first device first communicates with the second device and then the second device performs forwarding to the third device. This effectively simplifies a communication process, and helps improve a keyboard-mouse response speed.

In an implementation of the first aspect, after the first device establishes the connection to the third device, the method further includes:
The second device updates the traversal status of the second device to non-traversing.

The third device updates a traversal status of the third device to traversing.

In this implementation, the traversal statuses of the second device and the third device are updated, so that traversal status confusion can be effectively reduced, thereby ensuring reliability of keyboard-mouse traversal.

In an implementation of the first aspect, after the first device establishes the connection to the third device, the method further includes:
The first device controls the cursor to be displayed at a first preset location on the screen of the first device if the first device is disconnected from the third device.

The first device maintains a communication connection to the second device.

Optionally, if the first device is disconnected from the third device, the first device restores a keyboard-mouse location.

In an implementation of keyboard-mouse location restoration, a keyboard-mouse location on an Android device may be restored based on a location at which a keyboard-mouse traverses back from a PC to a screen of the Android device.

In another implementation of keyboard-mouse location restoration, the keyboard-mouse location on the Android device may be restored based on a traversal location at which the keyboard-mouse traverses from the Android device to a screen of the PC.

In another implementation of keyboard-mouse location restoration, the keyboard-mouse location on the Android device may be restored to a preset location. For example, the preset location is a screen center of the Android device.

In this embodiment of this application, when the keyboard-mouse of the first device traverses to the third device and the first device is disconnected from the third device, the cursor is restored to the first preset location on the screen of the first device, which helps the user to quickly locate the traversing cursor, thereby improving user experience.

In an implementation of the first aspect, after the first device establishes the connection to the third device, the method further includes:
The first device stops intercepting the input event corresponding to the third operation if the first device is disconnected from the third device.

The first device executes the control instruction corresponding to the input event.

In this embodiment of this application, when the keyboard-mouse of the first device traverses to the third device and the first device is disconnected from the third device, the first device stops intercepting the input event corresponding to the keyboard-mouse operation, and executes the control instruction corresponding to the operation on the input device, so that the input device can flexibly switch between different devices, thereby avoiding complex operations and improving user experience. In addition, by stopping intercepting the input event, a response of the first device to the keyboard-mouse operation is ensured in time, thereby ensuring reliability of keyboard-mouse traversal.

In an implementation of the first aspect, after the first device determines, in response to the first operation, whether the input device is connected to the first device, the method further includes:

The first device updates the traversal status of the first device to non-traversing if the input device is not connected to the first device.

For example, a corresponding application scenario may be that a cursor of a keyboard-mouse of another device is displayed on the screen of the first device, and traverses from the first device to the second device.

In this embodiment of this application, the traversal status of the first device is updated in time, so that traversal confusion can be effectively reduced, thereby helping improve reliability of keyboard-mouse traversal.

In an implementation of the first aspect, after the first device determines, in response to the first operation, whether the input device is connected to the first device, the method further includes:

The first device sends a second instruction to the second device if the input device is not connected to the first device.

The first device determines, after receiving the second instruction, whether the input device is connected to the second device.

The second device controls, if the input device is connected to the second device, the cursor to move out of the screen of the first device and display the cursor at a second preset location on the screen of the second device.

In this embodiment of this application, the second instruction may be referred to as a return instruction. The return instruction is used to notify the second device that the mouse pointer traverses back to the second device.

For example, a corresponding application scenario may be that a cursor of a keyboard-mouse of the second device is displayed on the screen of the first device, and then traverses back from the first device to the second device.

In this embodiment of this application, the cursor is restored to the second preset location on the screen of the second device, which helps the user to quickly locate the traversing cursor, thereby improving user experience.

In an implementation of the first aspect, after it is determined whether the input device is connected to the second device, the method further includes:

The second device detects a fifth operation if the input device is connected to the second device. The fifth operation is used to input the control instruction.

The second device stops intercepting a second input event corresponding to the fifth operation.

The second device executes the control instruction corresponding to the second input event.

For example, a corresponding application scenario may be that the cursor of the keyboard-mouse of the second device is displayed on the screen of the first device, and then traverses back from the first device to the second device.

In this embodiment of this application, the second device stops intercepting the input event corresponding to the keyboard-mouse operation, and executes the control instruction corresponding to the operation on the input device, so that the input device can flexibly switch between different devices, thereby avoiding complex operations and improving user experience. In addition, by stopping intercepting the input event, a response of the second device to the keyboard-mouse operation is ensured in time, thereby ensuring reliability of keyboard-mouse traversal.

In an implementation of the first aspect, after it is determined whether the input device is connected to the second device, the method further includes:

The second device updates the traversal status of the second device to non-traversing if the input device is connected to the second device.

For example, a corresponding application scenario may be that the cursor of the keyboard-mouse of the second device is displayed on the screen of the first device, and then traverses back from the first device to the second device.

In this embodiment of this application, the traversal status of the second device is updated in time, so that traversal confusion can be effectively reduced, thereby helping improve reliability of keyboard-mouse traversal.

In an implementation of the first aspect, after it is determined whether the input device is connected to the second device, the method further includes:

The second device determines a first traversal location on the screen of the second device in response to the sixth operation if the input device is connected to the second device. The sixth operation is used to move the cursor displayed on the screen of the second device towards the second direction.

The second device sends the first traversal location to the third device.

The third device determines a second traversal location on the screen of the third device based on the first traversal location.

The second device controls the cursor to move out of the screen of the second device from the first traversal location.

The third device controls the cursor to enter the screen of the third device from the second traversal location.

For example, a corresponding application scenario may be that the cursor of the keyboard-mouse of the second device is displayed on the screen of the first device, and then traverses back from the first device to the second device.

For example, if a traversal location of a mouse pointer on a screen of a PC is (x1, y1), and a traversing direction is leftward traversal or rightward traversal, a conversion module of the PC may convert y1 based on $s_y$, that is, y1×$s_y$. A value of a horizontal coordinate is a preset value, and the preset value is a minimum value or a maximum value of an edge length of a screen on an X axis. $S_y = \frac{R_{1y}}{R_{2y}}$, $R_{1y}$ is an edge length of a screen of an Android device on a Y axis, and $R_{2y}$ is an edge length of the screen of the PC on the Y axis.

If the traversal location of the mouse on the screen of the PC is (x1, y1), and the traversing direction is upward traversal or downward traversal, the conversion module of the PC may convert x1 based on $s_x$, that is, x1×$s_x$. A value of a vertical coordinate is a preset value, and the preset value is a minimum value or a maximum value of an edge length of the screen on the X axis. $S_x = \frac{R_{1x}}{R_{2x}}$, $R_{1x}$ is an edge length of the screen of the Android device on the X axis, and $R_{2x}$ is an edge length of the screen of the PC on the X axis.

According to the foregoing method, when the second device and the third device have different resolutions, the traversal locations can be accurately determined, which helps improve orderliness of traversal, thereby improving reliability of keyboard-mouse traversal.

In an implementation of the first aspect, after the sixth operation is responded to, the method further includes:

The second device updates the traversal status of the second device to traversing.

The traversal status of the second device is updated in time, so that traversal confusion can be effectively reduced, thereby helping improve reliability of keyboard-mouse traversal.

In an implementation of the first aspect, after the sixth operation is responded to, the method further includes:

The second device detects a seventh operation. The seventh operation is used to input the control instruction.

The second device intercepts a third input event corresponding to the seventh operation.

The second device sends the third input event to the third device.

The third device executes the control instruction corresponding to the third input event after receiving the third input event.

For example, a corresponding application scenario may be that the keyboard-mouse of the second device traverses to the third device.

In an implementation, when the second device is a device on which a Windows system is deployed, the second device may intercept, through event interception, the third input event corresponding to the seventh operation. The event interception is used to intercept a keyboard-mouse event. Event interception indication information indicates an input framework to set a keyboard hook, a mouse hook, and a shortcut-key hook. The hook (Hook) is a platform of a Windows message processing mechanism. An application program may set a subprogram on the platform to monitor a message in a specified window, and the monitored window may be created by another process. After the message arrives, the message is processed before function processing of a target window. The hook mechanism allows an application program to intercept and process a window message or a particular event. The hook is actually a program segment for processing a message, and is invoked by the system and embedded into the system. Each time a particular message is sent, before the message reaches the target window, the hook program first captures the message, that is, a hook function first obtains a control right. In this case, the hook function may process (change) the message, or may continue to transmit the message without processing, or may compulsorily end transmission of the message.

The keyboard hook is configured to obtain an input operation performed by the user by using the keyboard. For example, the keyboard hook is configured to obtain an operation of inputting "memo information" by the user by using the keyboard. The mouse hook is configured to obtain a control operation performed by the user by using the mouse. For example, the mouse hook is configured to obtain a clicking or dragging operation performed by the user by using the mouse. The shortcut-key hook is configured to obtain an operation of the user on a shortcut key. For example, the shortcut-key hook is configured to obtain an operation of the user on Ctrl+C, Ctrl+V, Atl+TAB, or Ctrl+Alt+DELETE.

Through event interception, when the mouse traverses from the PC to the Android device, the input framework of the Windows system intercepts a detected keyboard-mouse event, so that a service on the PC does not respond to the keyboard-mouse event, and therefore the PC does not affect the mouse event.

The second device intercepts the input event corresponding to the keyboard-mouse operation, and sends the input event to the third device, and the third device executes the control instruction corresponding to the operation acting on the input device, so that the input device can be shared between different devices without switching different operation modes between the different devices, thereby avoiding complex operations and improving user experience. In addition, by intercepting the input event, a response of the second device to the keyboard-mouse operation is prevented, thereby ensuring reliability of keyboard-mouse traversal.

In an implementation of the first aspect, after it is determined whether the input device is connected to the second device, the method further includes:

The second device determines, if the input device is not connected to the second device, a fourth device connected to the input device.

The second device sends a third instruction to the fourth device.

The fourth device controls, after receiving the third instruction, the cursor to move out of the screen of the first device and enter the screen of the second device for displaying.

In this embodiment of this application, the third instruction may be referred to as a switching notification. The switching notification is used to notify the fourth device that the keyboard-mouse traverses from the first device to the second device.

In an implementation, that the second device sends the third instruction to the fourth device includes: The second device establishes a communication connection to the fourth device. The second device sends the third instruction to the fourth device after the second device establishes the communication connection to the fourth device.

In some application scenarios, the fourth device may be the third device. For example, a corresponding application scenario is that a keyboard-mouse of the third device traverses to the first device, traverses from the first device to the second device, and then traverses back from the second device to the third device.

In this embodiment of this application, the second device can determine a device (that is, a source) to which the input device belongs, and then send the third instruction to the source, to notify the source to transfer related data of keyboard-mouse traversal to the second device. In the foregoing manner, the input device can be shared between different devices without switching different operation modes between the different devices, thereby avoiding complex operations, helping ensure reliability of keyboard-mouse traversal, and improving user experience.

In an implementation of the first aspect, that the first device controls, in response to the first operation, the cursor to move out of the screen of the first device and enter the screen of the second device for displaying includes:

The first device determines, in response to the first operation, whether the cursor on the screen of the first device reaches an edge of the screen.

The first device controls, if the cursor on the screen of the first device reaches the edge of the screen, the cursor to move out of the screen of the first device and enter the screen of the second device for displaying.

In an implementation, a manner of determining whether the cursor reaches the edge of the screen includes: obtaining a current location of the cursor; obtaining a displacement of the cursor; calculating a moved-to location of the cursor based on the current location of the cursor and the displacement of the cursor; determining whether the moved-to location of the cursor goes beyond the screen; and determining that the cursor reaches the edge of the screen if the moved-to location of the cursor goes beyond the screen.

It should be noted that, if the first device determines whether the cursor reaches the edge of the screen, the foregoing determining process is performed by the first device. If the second device determines whether the cursor reaches the edge of the screen, the foregoing determining process is performed by the second device.

According to a second aspect, a communication system is provided. The communication system includes a first device, a second device, and a third device.

The second device is connected to the first device and the third device.

The first device, the second device, and the third device in the communication system are configured to perform the method according to any implementation of the first aspect.

According to a third aspect, a computer-readable storage medium is provided. The computer-readable storage medium stores a computer program. The computer program, when being executed by a processor, implements the method according to any implementation of the first aspect.

According to a fourth aspect, a computer program product is provided. The computer program product includes computer program code. When the computer program code is run on a computer, the computer is enabled to perform the method according to any implementation of the first aspect.

## BRIEF DESCRIPTION OF DRAWINGS

FIG. 1 is a diagram of a communication system according to an embodiment of this application;

FIG. 2 is a diagram of a software architecture of a Windows system according to an embodiment of this application;

FIG. 3 is a diagram of a software architecture of an Android system according to an embodiment of this application;

FIG. 4 is an interaction diagram of establishing a keyboard-mouse connection according to an embodiment of this application;

FIG. 5A to FIG. 5C are diagrams of interfaces of a computer manager according to an embodiment of this application;

FIG. 6 is a diagram of a location according to an embodiment of this application;

FIG. 7 is a diagram of a location according to another embodiment of this application;

FIG. 8 is a diagram of keyboard-mouse traversal according to an embodiment of this application;

FIG. 9A to FIG. 9C are diagrams of a keyboard-mouse traversal scenario according to an embodiment of this application;

FIG. 10 is a diagram of an interaction scenario according to an embodiment of this application;

FIG. 11 is a diagram of an implementation principle of a traversal manner according to an embodiment of this application;

FIG. 12 is a diagram of an interaction procedure of a keyboard-mouse traversal method according to an embodiment of this application;

FIG. 13 is a diagram of a traversal location on a screen according to an embodiment of this application;

FIG. 14A to FIG. 14C are diagrams of another keyboard-mouse traversal scenario according to an embodiment of this application;

FIG. 15 is a diagram of an implementation principle of a traversal manner according to an embodiment of this application;

FIG. 16 is a diagram of an interaction procedure of a keyboard-mouse traversal method according to an embodiment of this application;

FIG. 17A to FIG. 17C are diagrams of a keyboard-mouse traversal scenario according to an embodiment of this application;

FIG. 18A to FIG. 18C are diagrams of a keyboard-mouse traversal scenario according to an embodiment of this application;

FIG. 19 is a diagram of an interaction procedure of a keyboard-mouse traversal method according to an embodiment of this application; and

FIG. 20 is a diagram of an interaction procedure of a keyboard-mouse traversal method according to an embodiment of this application.

## DESCRIPTION OF EMBODIMENTS

In the following descriptions, for description rather than limitation, specific details such as particular system structures and technologies are provided to facilitate thorough understanding of embodiments of this application. However, it should be clear to a person skilled in the art that this application can still be implemented in other embodiments without these specific details.

It should be understood that the term "including" when used in the specification of this application and the appended claims indicates presence of the described feature, whole, step, operation, element, and/or component, but does not exclude existence or addition of one or more other features, wholes, steps, operations, elements, components, and/or a set thereof.

It should be understood that, in embodiments of this application, "one or more" means one, two, or more than two. The term "and/or" describes an association relationship between associated objects and represents that three relationships may exist. For example, A and/or B may represent the following cases: only A exists, both A and B exist, and only B exists, where A and B may be singular or plural. The character "/" in this specification generally indicates an "or" relationship between the associated objects.

In addition, in descriptions of the specification of this application and the appended claims, the terms such as "first", "second", "third", and "fourth" are used only for distinguishing descriptions, but cannot be understood as indicating or implying relative importance.

Reference to "an embodiment", "some embodiments", or the like described in the specification of this application means that one or more embodiments of this application include a specific feature, structure, or characteristic described with reference to the embodiment. Therefore, statements such as "in an embodiment", "in some embodiments", "in some other embodiments", and "in some other embodiments" throughout this specification do not necessarily refer to a same embodiment, but mean "one or more but not all embodiments", unless otherwise specifically emphasized. The terms "include", "have", and variants thereof all mean "include but not limited to", unless otherwise specifically emphasized.

With the development of terminal technologies, there are increasing types and quantities of terminal devices. Currently, one terminal device cannot meet requirements of a user, and the user may use a plurality of terminal devices to meet working and learning requirements. However, when the plurality of terminal devices all have services to be processed by the user, the user needs to switch operation modes back and forth between different terminal devices, which is complex and degrades user experience.

Embodiments of this application provide a keyboard-mouse traversal method, so that different terminal devices can be operated by using one input device, to implement seamless access between the different terminal devices.

The method in embodiments of this application may be applied to a terminal device having a screen and an accessible input device. For example, the terminal device in embodiments of this application may be a personal computer (personal computer, PC) (for example, a desktop computer, a notebook computer, a mini-notebook computer, or an ultrabook), a tablet computer (briefly referred to as a tablet), or a mobile phone. A specific form of the terminal device is not specifically limited in embodiments of this application. For ease of description, the PC (or referred to as a computer), the tablet, and the mobile phone are used as examples for description in the following embodiments.

In embodiments of this application, the input device may be a device configured to input information to the terminal device, such as a keyboard, a mouse, or a graphics tablet (which may include a stylus). A specific form of the input device is not specifically limited in embodiments of this application. For ease of description, in the following embodiments, the keyboard and the mouse are briefly referred to as a keyboard-mouse, and an example that the input device is the keyboard-mouse is used for description.

In embodiments of this application, keyboard-mouse traversal may be implemented between two or more terminal devices. Three terminal devices are used as an example for description below.

FIG. 1 is a diagram of a communication system according to an embodiment of this application. As shown in FIG. 1, the communication system includes a computer 11, a mobile phone 12, and a tablet 13. The computer 11 is communicatively connected to the mobile phone 12 and the tablet 13.

In the communication system shown in FIG. 1, keyboard-mouse traversal may be implemented between the computer 11 and the mobile phone 12, keyboard-mouse traversal may be implemented between the computer 11 and the tablet 13, and keyboard-mouse traversal may be implemented between the mobile phone 12 and the tablet 13 via the computer 11. In other words, the computer 11, the mobile phone 12, and the tablet 13 may share a mouse and a keyboard.

It may be understood that, the computer 11 may alternatively implement keyboard-mouse traversal only with the mobile phone 12 or the tablet 13. In other words, the computer 11 shares a mouse and a keyboard with the mobile phone 12, or the computer 11 shares a mouse and a keyboard with the tablet 13.

In this embodiment of this application, a keyboard-mouse of the computer 11 may be a keyboard and a mouse connected to the computer 11, and a keyboard-mouse of the mobile phone 12 or the tablet 13 may be a keyboard and a mouse externally connected to the mobile phone 12 or the tablet 13.

A left side or a right side of the computer 11 may implement keyboard-mouse traversal with one device. For example, the computer 11 can support the mouse in traversing from a left side of a screen of the computer 11 to the tablet 13, and can support the mouse in traversing from a right side of the screen of the computer 11 to the mobile phone 12. The computer 11 may implement keyboard-mouse traversal with one device (the mobile phone 12 or the tablet 13) at a time. In other words, if a device is currently in a traversing state, the device does not perform keyboard-mouse traversal with another device.

In embodiments of this application, a software system of a terminal device related to keyboard-mouse traversal may be a Windows system or an Android (Android) system. For example, an operating system of the computer 11 shown in FIG. 1 is a Windows system, and operating systems of the mobile phone 12 and the tablet 13 are Android (Android) systems. A device on which an Android system is deployed may be referred to as an Android device.

To better understand embodiments of this application, the following describes software architectures of the Windows system and the Android system in embodiments of this application.

For example, FIG. 2 is a diagram of a software architecture of a Windows system according to an embodiment of this application. As shown in FIG. 2, the software architecture of the Windows system may include a driver layer, a basic framework layer, and an application layer.

The driver layer includes a virtual driver module and an input driver module. The virtual driver module is configured to set a virtual driver for an input device of an Android device. The input driver module is configured to provide a human interface device (human interface device, HID), to drive an input device (such as a keyboard and a mouse) connected to the PC.

The basic framework layer includes an input framework module, configured to report an input event to each service module at the application layer, so that each service module at the application layer implements a corresponding function. For example, the input framework module reports a keyboard-mouse event to a keyboard-mouse service module at the application layer, so that the keyboard-mouse service module performs event processing on the keyboard-mouse event, thereby implementing keyboard-mouse traversal.

The application layer includes a communication module (such as Magic Link) and the keyboard-mouse service module. The communication module is configured to provide a connection channel between devices and a data transmission capability. The keyboard-mouse service module is configured to provide a keyboard-mouse traversal function. The keyboard-mouse service module includes a connection scheduler submodule, a keyboard-mouse manager submodule, and a virtual driver loader submodule. The connection scheduler submodule is configured to provide a connection channel to the communication module and a data transmission capability. The keyboard-mouse manager submodule is configured to invoke the connection scheduler submodule and the virtual driver loader submodule, and provide a capability of processing a keyboard-mouse event. The virtual driver loader submodule is configured to inject the keyboard-mouse event processed by the keyboard-mouse manager submodule to the virtual driver module at the driver layer, to report the keyboard-mouse event to the input framework module at the basic layer of the system via the virtual driver module.

It should be noted that, the communication module is a module for communication between different devices. When data obtained by another module is to be transmitted to another device, the data needs to be first transmitted to the communication module, and then is transmitted by the communication module to the another device. In subsequent embodiments, to simplify steps, when a module other than the communication module performs cross-device communication between different devices, it may be understood as that the module first transmits data to the communication module, then the communication module transmits the data to a communication module of another device, and then the communication module of the another device transmits the data to a module needing the data.

It should be noted that, the connection scheduler submodule is needed for data exchange between the keyboard-mouse service module and the communication module. For example, a data packet of a keyboard-mouse event sent by another device is first transmitted to the communication module, the communication module sends the data packet to the connection scheduler subunit, and then the connection scheduler subunit sends the data packet to the keyboard-mouse manager submodule. In subsequent embodiments, to simplify steps, communication between another submodule other than the connection scheduler submodule in the keyboard-mouse service module and the communication module may be understood as that the another submodule first transmits data to the connection scheduler submodule, and then the connection scheduler submodule transmits the data to the communication module, or the communication module first transmits data to the connection scheduler submodule, and then the connection scheduler submodule transmits the data to the another submodule.

For example, FIG. 3 is a diagram of a software architecture of an Android system according to an embodiment of this application. As shown in FIG. 3, the software architecture of the Android system may include a driver layer, a basic framework layer, and an application layer.

The driver layer includes a virtual input driver module (Uinput Driver). The virtual input driver module is configured to drive an input device of an Android device.

The basic framework layer includes an input framework module, configured to report an input event to each service module at the application layer, so that each service module at the application layer implements a corresponding function. For example, the input framework module reports a keyboard-mouse event to a keyboard-mouse service module at the application layer, so that the keyboard-mouse service module performs event processing on the keyboard-mouse event, thereby implementing keyboard-mouse traversal.

The application layer includes a communication module (such as Magic Link) and the keyboard-mouse service module. The communication module is configured to provide a connection channel between devices and a data transmission capability. The keyboard-mouse service module is configured to provide a keyboard-mouse traversal function. The keyboard-mouse service module includes a connection scheduler submodule and a keyboard-mouse manager submodule. The connection scheduler submodule is configured to provide a connection channel to the communication module and a data transmission capability. The keyboard-mouse manager submodule is configured to invoke the connection scheduler submodule, provide a capability of processing a keyboard-mouse event, and inject a processed keyboard-mouse event to the virtual input driver module at the driver layer, to report the keyboard-mouse event to the input framework module at the basic layer of the system via the virtual input driver module.

It should be noted that, the communication module is a module for communication between different devices. When data obtained by another module is to be transmitted to another device, the data needs to be first transmitted to the communication module, and then is transmitted by the communication module to the another device. In subsequent embodiments, to simplify steps, when a module other than the communication module performs cross-device communication between different devices, it may be understood as that the module first transmits data to the communication module, then the communication module transmits the data to a communication module of another device, and then the communication module of the another device transmits the data to a module needing the data.

It should be noted that, the connection scheduler submodule is needed for data exchange between the keyboard-mouse service module and the communication module. For example, a data packet of a keyboard-mouse event sent by another device is first transmitted to the communication module, the communication module sends the data packet to the connection scheduler subunit, and then the connection scheduler subunit sends the data packet to the keyboard-mouse manager submodule. In subsequent embodiments, to simplify steps, communication between another submodule other than the connection scheduler submodule in the keyboard-mouse service module and the communication module may be understood as that the another submodule first transmits data to the connection scheduler submodule, and then the connection scheduler submodule transmits the data to the communication module, or the communication module first transmits data to the connection scheduler submodule, and then the connection scheduler submodule transmits the data to the another submodule.

To better understand embodiments of this application, in embodiments of this application, the method provided in embodiments of this application is specifically described with reference to the communication system shown in FIG. 1 and the software architectures shown in FIG. 2 and FIG. 3.

In embodiments of this application, a condition for implementing keyboard-mouse traversal between terminal devices may be that a communication connection is established between the terminal devices. For example, a PC and an Android device may be communicatively connected through Wi-Fi or Bluetooth, where Wi-Fi may include a local area network or a peer-to-peer (peer-to-peer, P2P) network; or may be communicatively connected in a wired manner, for example, connected by using a data cable such as type-A, type-B, or type-C. In some other implementations, the PC and the Android device are logged in to by using a same account. For example, when the computer 11, the mobile phone 12, and the tablet 13 are logged in to by using a same account, communication connections are established between the computer 11, the mobile phone 12, and the tablet 13.

For example, FIG. 4 is an interaction diagram of establishing a keyboard-mouse connection according to an embodiment of this application. As shown in FIG. 4, a process in which a PC establishes a keyboard-mouse connection to any Android device may include the following steps.

S401. Start a keyboard-mouse manager submodule of the PC.

The keyboard-mouse manager submodule in a keyboard-mouse service module of the PC may be automatically started when the PC is powered on, or may be manually started by a user. For example, when the user manually starts the keyboard-mouse manager submodule, the user may enable a keyboard-mouse traversal function in a setting interface on the PC. In response to the operation of enabling the keyboard-mouse traversal function by the user, the keyboard-mouse service module of the PC is started, and correspondingly, the keyboard-mouse manager submodule in the keyboard-mouse service module of the PC is started.

S402. The keyboard-mouse manager submodule of the PC sends indication information a to a connection scheduler submodule of the PC.

The indication information a indicates the connection scheduler submodule of the PC to establish a communication connection to an Android device.

S403. After receiving the indication information a, the connection scheduler submodule of the PC sends request information b to a communication module of the PC.

The request information b is used to request the communication module of the PC to notify a detected online Android device.

The communication module of the PC may detect whether there is an online Android device. If there is an online Android device, the communication module of the PC sends a device identity (identity, ID) of the online Android device to the keyboard-mouse manager submodule of the PC via the connection scheduler submodule of the PC based on the request information b. If there is no online Android device, the communication module of the PC may monitor, in real time, whether there is an online Android device, or detect, every preset period, whether there is an online Android device.

That the connection scheduler submodule of the PC sends the request information b to the communication module of the PC may also be understood as that the connection scheduler submodule of the PC registers a device online/offline fence with the communication module of the PC, and when the communication module of the PC detects that there is an online device, a device ID is returned to the keyboard-mouse manager submodule of the PC via the connection scheduler submodule.

S404. Start a keyboard-mouse manager submodule of the Android device.

The keyboard-mouse manager submodule in a keyboard-mouse service module of the Android device may be automatically started when the Android device is powered on, or may be manually started by the user. For example, when the user manually starts the keyboard-mouse manager submodule, the user may enable a keyboard-mouse traversal function in a setting interface on the Android device. In response to the operation of enabling the keyboard-mouse traversal function by the user, the keyboard-mouse service module of the Android device is started, and correspondingly, the keyboard-mouse manager submodule in the keyboard-mouse service module of the Android device is started.

S405. After the communication module of the PC receives the indication information b, the communication module of the PC and a communication module of the Android device discover each other, to form a trust loop.

As can be learned from the above, a premise of keyboard-mouse traversal between the PC and the Android device is that a communication connection is established between the PC and the Android device. The communication connection herein means that the communication module of the PC and the communication module of the Android device can discover each other and establish a trust loop.

It should be noted that, S402 is a step performed after the keyboard-mouse manager submodule of the PC is started. A sequence of performing the two steps S402 and S404 is not limited in this embodiment of this application. In other words, if step S404 has been performed, that is, the keyboard-mouse manager submodule of the Android device is started, before S402, after S402 is performed, the communication module of the PC may detect that the Android device is online, so that S405 may be performed. If step S404 has not been performed, that is, the keyboard-mouse manager submodule of the Android device is not started, before S402, after S402 is performed, the communication module of the PC detects, in real time or every preset period, whether there is an online Android device, until the keyboard-mouse manager submodule of the Android device is started, and after the communication module of the PC detects that there is an online Android device, S405 is performed.

The trust loop indicates that a communication connection is established between different terminal devices. For example, the PC and the Android device are in a same Bluetooth range, or are connected to a same Wi-Fi, or are connected by using a same data cable, or are logged in to by using a same account. In this case, the communication module of the PC and the communication module of the Android device may sense each other and discover each other, to form a trust loop, and the communication module of the PC may obtain a device ID of the Android device.

The device ID may be at least one of a digit, a letter, or a symbol. This is not limited in this embodiment of this application.

There may be one or more online Android devices. This is not limited in this embodiment of this application. If there are a plurality of online Android devices, the communication module of the PC may send device IDs of the plurality of Android devices to the keyboard-mouse service module of the PC.

In an implementation, the keyboard-mouse service module of the PC may include a device manager submodule. If the PC is communicatively connected to the Android device for the first time, the device manager submodule of the PC may perform authentication on the Android device based on the device ID, and after the authentication succeeds, the communication module of the PC is notified by using the connection scheduler submodule of the PC to perform S405, and the device ID is stored. In a next communication connection process, when the communication module of the PC detects an online Android device, the communication module of the PC reports a device ID of the Android device to the device manager submodule of the PC via the connection scheduler submodule of the PC. The device manager submodule of the PC searches to determine whether the device ID is stored. If the device ID is stored, indication information is sent to the communication module of the PC via the connection scheduler submodule of the PC, to indicate the communication module of the PC to perform S405.

S406. After the trust loop is formed, the communication module of the Android device sends a notification c to a connection scheduler submodule of the Android device.

The notification c indicates the connection scheduler submodule of the Android device to report a success in being communicatively connected to the PC to the keyboard-mouse manager submodule of the Android device.

S407. After receiving the notification c, the connection scheduler submodule of the Android device sends a notification d to the keyboard-mouse manager submodule of the Android device.

The notification d indicates the success in being communicatively connected to the PC.

S408. After the trust loop is formed, the communication module of the PC sends a notification e to the connection scheduler submodule of the PC.

The notification e indicates the connection scheduler submodule of the PC to report a success in being communicatively connected to the Android device to the keyboard-mouse manager submodule of the PC.

S409. After receiving the notification e, the connection scheduler submodule of the PC sends a notification f to the keyboard-mouse manager submodule of the PC.

The notification f indicates the success in being communicatively connected to the Android device.

It should be noted that, the two steps S406 and S408 are not necessarily performed in a particular sequence, and may be processed in parallel.

So far, the keyboard-mouse connection between the PC and the Android device succeeds.

It may be understood that, to implement keyboard-mouse traversal between the PC and the Android device, not only a communication connection between the PC and the Android device (that is, the trust loop formed between the communication module of the PC and the communication module of the Android device) needs to be established, but also a keyboard-mouse connection between the PC and the Android device (that is, an event connection between the keyboard-mouse service module of the PC and the keyboard-mouse service module of the Android device) needs to be established. In other words, FIG. 4 shows a process of establishing the keyboard-mouse connection between the PC and the Android device. A success of the keyboard-mouse connection between the PC and the Android device indicates a success of the event connection between the keyboard-mouse service module of the PC and the keyboard-mouse service module of the Android device.

It should be noted that, the embodiment of FIG. 4 shows a process of establishing a keyboard-mouse connection by using a PC as a center, that is, the PC initiates the keyboard-mouse connection. In an application scenario centered on a PC, to implement keyboard-mouse traversal between the PC and a plurality of Android devices, the PC needs to establish a keyboard-mouse connection to each Android device. In some other embodiments, a keyboard-mouse connection may alternatively be established by using an Android device as a center, that is, the Android device initiates the keyboard-mouse connection. In an application scenario centered on an Android device, to implement keyboard-mouse traversal between the Android device and a plurality of terminal devices, the Android device needs to establish a keyboard-mouse connection to each terminal device. For ease of description, application scenarios in embodiments of this application are all scenarios centered on a PC.

There are two manners of establishing the keyboard-mouse connection between the PC and the Android device. One possible implementation is automatically establishing the keyboard-mouse connection. In this manner, after the keyboard-mouse manager submodule of the PC is started in S401, subsequent steps are automatically performed, and the PC may autonomously select a connectable device. The other possible implementation is manually establishing the keyboard-mouse connection. In this manner, after the keyboard-mouse manager submodule of the PC is started in S401, when the communication module of the PC detects an online Android device, the user may manually select a connectable device in a visual interface. After the user selects the connectable device, steps after S401 are performed.

A keyboard-mouse connection manner setting option may be located differently in different devices. For example, the keyboard-mouse connection manner setting option may be in a computer manager of the computer 11, or the keyboard-mouse connection manner setting option may be in a control center or settings of the mobile phone 12 or the tablet 13.

For example, FIG. 5A to FIG. 5C are diagrams of interfaces of a computer manager according to an embodiment of this application. As shown in FIG. 5A to FIG. 5C, an interface of the computer manager may include options such as a home page, multi-screen collaboration, smart connection, online skills, official services, intelligent audio visual, and system optimization. When the computer 11 detects that a user clicks the smart connection option by using a mouse, a keyboard-mouse sharing interface may be displayed. The keyboard-mouse sharing interface includes two options. A first option is "control the mouse pointer to consecutively touch a side edge of the computer screen twice, to establish a connection". A second option is "automatically adjust screen arrangement with change of a device placement location".

It may be understood that the first option is an option of automatically establishing a keyboard-mouse connection. When this option is selected, the computer 11 may automatically connect to a device meeting a keyboard-mouse traversal condition. When the first option (that is, the option of automatically establishing a communication connection) is not selected, the computer 11 provides a manner of manually establishing a keyboard-mouse connection to connect to the device meeting the keyboard-mouse traversal condition.

In an example of manually establishing a keyboard-mouse connection, as shown in FIG. 5A to FIG. 5C, the first option is in an unselected state. In this case, the computer 11 provides the manual connection manner. The keyboard-mouse sharing interface may display a connected device and an online device. In a keyboard-mouse sharing interface shown in FIG. 5A, the left side of the computer 11 is connected to the mobile phone 12, and two online devices (devices with which trust loops are established) are further displayed. The two online devices include the tablet 13 and a mobile phone 14. The user may select, from the two online devices through a clicking or dragging operation, a device for connection. As shown in FIG. 5A, the user controls, by operating the mouse, a mouse pointer to click an icon of the tablet 13. In response to the operation of clicking the icon of the tablet 13, the computer 11 establishes a keyboard-mouse connection to the tablet 13, and displays a keyboard-mouse sharing interface shown in FIG. 5B. As shown in FIG. 5B, in the keyboard-mouse sharing interface, the right side of the computer 11 is connected to the tablet 13.

In the keyboard-mouse sharing interfaces shown in FIG. 5A and FIG. 5B, a selection identifier 501 may be displayed on an icon of a connected device of the computer 11. The user may operate the mouse to control the mouse pointer to click the selection identifier 501 or drag an icon of a connected device, so as to cut off a connection between the PC and the device. For example, the user clicks, in the interface shown in FIG. 5B by operating the mouse, the selection identifier 501 on the mobile phone on the left side of the computer 11. In response to the user operation, the computer 11 cuts off a keyboard-mouse connection to the mobile phone 12, and displays a keyboard-mouse sharing interface shown in FIG. 5C. As shown in FIG. 5C, in the keyboard-mouse sharing interface, the left side of the computer 11 is connected to no device, the right side of the computer 11 is connected to the tablet 13, and the mobile phone 12 is displayed in a connectable-device area.

In the manner of manually establishing a keyboard-mouse connection, the PC determines, based on a location of the device selected by the user in the keyboard-mouse sharing interface, a traversing direction of the device. For example, as shown in FIG. 5B, the mobile phone 12 is on the left side of the computer 11, and the tablet 13 is on the right side of the computer 11, so that the computer 11 determines that a traversing direction of the mobile phone 12 is to the left side (that is, when the mouse of the computer 11 slides leftwards, the mouse pointer can reach a screen of the mobile phone 12), and a traversing direction of the tablet 13 is to the right side (that is, when the mouse of the computer 11 slides rightwards, the mouse pointer can reach a screen of the tablet 13).

In an example of automatically establishing a keyboard-mouse connection, if the first option in FIG. 5A to FIG. 5C is in a selected state, when the computer 11 detects that the mouse pointer consecutively touches a side edge of the computer screen twice, the computer 11 may automatically connect to a device meeting a keyboard-mouse traversal condition (for example, being connected to a same network and/or logged in to by using a same account). For example, after S403 is performed, if the communication module of the computer 11 detects an online Android device, S405 is performed. If detecting a plurality of online Android devices, the communication module of the computer 11 may establish a keyboard-mouse connection to each online Android device, or automatically select one or more of the online Android devices to establish a keyboard-mouse connection.

In the manner of automatically establishing a keyboard-mouse connection, the PC may automatically set a traversing direction of the connected device, or the user may manually set the traversing direction of the connected device.

In an example of automatically setting a traversing direction, when the user enables an option of automatically identifying an orientation, the PC may detect, by using an ultrasonic method, a location of a device to which a keyboard-mouse connection is established, and automatically set, based on the detected location, a traversing direction of the device to which the keyboard-mouse connection is established.

For example, in the interfaces shown in FIG. 5A to FIG. 5C, if the user checks or selects the option of "automatically adjust screen arrangement with change of a device placement location", the PC detects the checking or selecting operation of the user, and may automatically identify a location of a currently connected device in response to the operation. For example, in the application scenario shown in FIG. 1, when the user enables the option of automatically identifying an orientation, the mobile phone 12 or the tablet 13 may detect motion of the mobile phone 12 or the tablet 13 by using a motion sensor; calculates, after detecting that the motion stops, a location of the computer 11 relative to the mobile phone 12 or the tablet 13 by using data obtained by an ultrasonic sensor; and transmits the location to the computer 11. The computer 11 receives the location, and may determine that the mobile phone 12 is on the left side of the computer 11 and the tablet 13 is on the right side of the computer 11. Then, the computer 11 sets the traversing direction of the mobile phone 12 to the left side (that is, when the mouse of the computer 11 slides leftwards, the mouse pointer can reach the screen of the mobile phone 12), and the computer 11 sets the traversing direction of the tablet 13 to the right side (that is, when the mouse of the computer 11 slides rightwards, the mouse pointer can reach the screen of the tablet 13).

It may be understood that, when the user enables the option of automatically identifying an orientation, if a location of a device to which a keyboard-mouse connection currently has been established by the PC changes, the PC can detect, by using the ultrasonic method, the location change of the device to which the keyboard-mouse connection is established, and automatically adjust a traversing direction of the connected device.

It should be noted that, the keyboard-mouse not only may traverse towards a left side or a right side of a screen, but also may traverse towards an upper side or a lower side of the screen. This is not limited in this embodiment of this application.

In a possible implementation, a screen of a terminal device may be divided into a left side, a right side, and middle. For example, the computer 11 may establish a coordinate system by using the center of the screen as an origin, a parallel line of a length side of the screen, and a parallel line of a width side of the screen, to obtain a left-side area, a right-side area, and a middle area through division. If the computer 11 detects that the mobile phone 12 and/or the tablet 13 is in the left-side area, it may be determined that the mobile phone 12 and/or the tablet 13 are/is on the left side of the computer 11. If the computer 11 detects that the mobile phone 12 and/or the tablet 13 is in the right-side area, it may be determined that the mobile phone 12 and/or the tablet 13 are/is on the right side of the computer 11. If the computer 11 detects that the mobile phone 12 and/or the tablet 13 is in the middle area, it may be determined that the mobile phone 12 and/or the tablet 13 are/is in the middle of the computer 11.

For example, FIG. 6 is a diagram of a location according to an embodiment of this application. As shown in FIG. 6, the computer 11 sets an area within (-45°, 45°) in the coordinate system as the right-side area, sets areas within (45°, 135°) and (-45°, -135°) as the middle area, and sets an area within (-135°, 135°) as the left-side area. If an angle of the mobile phone 12 relative to the computer 11 is within (-45°, 45°), the computer 11 detects that the mobile phone 12 is in the right-side area, and may determine that the mobile phone 12 is on the right side of the computer 11.

In another possible implementation, the screen of the terminal device may be divided into a left side, a right side, an upper side, and a lower side. For example, FIG. 7 is a diagram of a location according to another embodiment of this application. As shown in FIG. 7, the computer 11 sets the area within (-45°, 45°) in the coordinate system as a right-side area, sets the area within (45°, 135°) as an upper-side area, sets the area within (-45°, -135°) as a lower-side area, and sets the area within (-135°, 135°) as a left-side area. If the angle of the mobile phone 12 relative to the computer 11 is within (45°, 135°), the computer 11 detects that the mobile phone 12 is in the upper-side area, and may determine that the mobile phone 12 is on the upper side of the computer 11.

It should be noted that, angle ranges of area division shown in FIG. 6 and FIG. 7 are merely examples, and the angle ranges of the areas may be adjusted based on user experience. For example, the angle range of the middle area may be adjusted from (45°, 135°) to (30°, 150°) and from (-45°, -135°) to (-30°, -150°) based on user experience.

In an example of manually setting a traversing direction, in the manner in which the user manually sets a traversing direction of a connected device, when the PC detects that the mouse pointer is at an edge of the computer screen, a bubble box may be displayed at the edge of the screen, to indicate that there is a traversal-available device (a device to which a keyboard-mouse connection is established). After the user performs an operation on the bubble box and selects a traversal-available device, the PC sets, based on the edge at which the mouse pointer is currently located on the computer screen, a traversing direction of the device selected by the user.

For example, FIG. 8 is a diagram of keyboard-mouse traversal according to an embodiment of this application. As shown in FIG. 8, traversal-available devices of the computer 11 include the mobile phone 12 and the tablet 13. When the computer 11 detects that the mouse pointer is at a right edge of the computer screen, bubble boxes 801 are displayed at the right edge of the computer screen, to indicate that there are traversal-available devices. In addition, an icon 8011 of the mobile phone 12 and an icon 8012 of the tablet 13 are displayed in the bubble boxes 801.

The user may operate the mouse to control the mouse pointer to click the icon 8011 of the mobile phone 12, and in response to the user operation, the computer 11 sets a traversing direction of the mobile phone 12 to the right side, that is, when the mouse of the computer 11 slides rightwards, the mouse pointer can reach the screen of the mobile phone 12.

Alternatively, the user may operate the mouse to control the mouse pointer to click the icon 8012 of the tablet 13, and in response to the user operation, the computer 11 sets a traversing direction of the tablet 13 to the right side, that is, when the mouse of the computer 11 slides rightwards, the mouse can reach the screen of the tablet 13.

The bubble box is merely an example of a name. This is not limited in this embodiment of this application. There may be one or more traversal-available devices (devices that have formed trust loops with the PC). This is not limited in this embodiment of this application. When there is one traversal-available device, there may be one bubble box. The bubble box may display an icon and a model of the traversal-available device. For example, the traversal-available device is a mobile phone, and an icon of the mobile phone and a model of the mobile phone may be displayed. Alternatively, the icon and/or the model of the traversal-available device may be not displayed. This is not limited in this embodiment of this application.

When there are a plurality of traversal-available devices, a quantity of bubble boxes may be one, or may be the same as a quantity of the traversal-available devices. This is not limited in this embodiment of this application. If there are a plurality of traversal-available devices and a plurality of bubble boxes, each of the plurality of bubble boxes may correspond to one traversal-available device, and each bubble box may display an icon and/or a model of the corresponding traversal-available device. The user may click a bubble box to select a traversal-available device from the plurality of traversal-available devices to perform keyboard-mouse traversal, or may click an icon or a model of a traversal-available device to select the traversal-available device from the plurality of traversal-available devices to perform keyboard-mouse traversal. This is not limited in this embodiment of this application. If there are a plurality of traversal-available devices and there is one bubble box, the one bubble box may display icons and/or models of the plurality of traversal-available devices. The user may click an icon or a model of a traversal-available device to select the traversal-available device from the plurality of traversal-available devices to perform keyboard-mouse traversal.

FIG. 8 merely shows an example of the bubble box. For a case that the bubble box does not display an icon and/or a model of a traversal-available device, or a case that a plurality of bubble boxes are displayed when there are a plurality of traversal-available devices, and another display form of the bubble box, examples are not described in this embodiment of this application.

In a possible implementation, each time the computer 11 detects that the mouse pointer is at an edge of the computer screen, the computer 11 displays a bubble box corresponding to a current traversal-available device.

In another possible implementation, when the computer 11 detects, for the first time, that the mouse pointer is at an edge side1 of the computer screen, the computer 11 displays a bubble box corresponding to a current traversal-available device. After the user selects a traversal-available device, when the computer 11 detects again that the mouse pointer is at the edge side1 of the computer screen, the computer 11 does not display the bubble box corresponding to the current traversal-available device. When the computer 11 detects that the mouse pointer is at an edge side2 of the computer screen, the computer 11 displays a bubble box corresponding to a current traversal-available device. In this implementation, when the computer 11 detects that the mouse pointer is at the edge side2 of the computer screen, the computer 11 may display bubble boxes corresponding to all current traversal-available devices, or may display only a bubble box corresponding to a current traversal-available device that is not selected. For example, the current traversal-available devices are a device 1, a device 2, and a device 3. If the user selects a bubble box corresponding to the device 1 when the mouse pointer of the computer 11 is at the right edge of the computer screen, it indicates that the user sets the device 1 as a device to which the keyboard-mouse traverses from the right side of the computer 11, that is, when the mouse of the computer 11 slides rightwards, the mouse can reach a screen of the device 1. When the mouse pointer of the computer 11 is at a left edge of the computer screen, the computer 11 displays bubble boxes corresponding to the device 2 and the device 3 at the left edge of the computer screen for selection by the user. If the user selects the device 2, it indicates that the user sets the device 2 as a device to which the keyboard-mouse traverses from the left side of the computer 11, that is, when the mouse of the computer 11 slides leftwards, the mouse can reach a screen of the device 2.

It should be noted that, a keyboard-mouse traversing direction may or may not be related to locations between devices. This is not limited in this embodiment of this application. For example, when the keyboard-mouse traversing direction is related to locations between devices, if a device 1 is on a left side of a device 2, when a mouse of the device 2 slides leftwards, the mouse can reach a screen of the device 1. When the keyboard-mouse traversing direction is not related to locations between devices, if the device 1 is on the left side of the device 2, a traversing direction of the device 1 may be set to a right side of the device 2 in the foregoing manner of manually establishing communication or manually setting a traversing direction, that is, when the mouse of the device 2 slides rightwards, the mouse can reach the screen of the device 1.

When a keyboard-mouse connection is established between terminal devices, keyboard-mouse traversal between the terminal devices may be implemented. The following describes a keyboard-mouse traversal manner centered on a PC. In the keyboard-mouse traversal manner centered on the PC, a keyboard-mouse connection is usually initiated by the PC, and the PC is a communication center. The PC may be connected to one or more traversal-available Android devices. In other words, keyboard-mouse traversal between devices needs to pass through the PC. The keyboard-mouse traversal manner centered on the PC may be applied to the communication system shown in FIG. 1. As shown in FIG. 1, the computer 11 is connected to the mobile phone 12 and the tablet 13. In this case, the computer 11 is a communication center between the mobile phone 12 and the tablet 13.

In this embodiment of this application, in the traversal manner centered on the PC, when the computer 11 initiates a keyboard-mouse traversal event, and the keyboard-mouse of the computer 11 traverses to the mobile phone 12 or the tablet 13, the computer 11 may be referred to as a source device or an initiator, and the mobile phone 12 or the tablet 13 may be referred to as a peer device or a receiver. When the mobile phone 12 initiates a keyboard-mouse traversal event, and the keyboard-mouse of the mobile phone 12 traverses to the computer 11 or the tablet 13, the mobile phone 12 may be referred to as a source device or an initiator, and the computer 11 or the tablet 13 may be referred to as a peer device or a receiver. However, embodiments of this application are not limited thereto.

Keyboard-mouse traversal centered on a PC may be classified into two manners: In a first traversal manner, an operation task is mainly on a PC side, and an Android device needs to be operated. In this manner, a keyboard-mouse of the PC may traverse to the Android device. For example, in FIG. 1, the keyboard-mouse of the computer 11 traverses to the screen of the mobile phone 12 or the screen of the tablet 13. In a second traversal manner, an operation task is mainly on an Android device side, and the PC needs to be operated. In this manner, a keyboard-mouse of the Android device may traverse to the PC. For example, the keyboard-mouse of the mobile phone 12 or the keyboard-mouse of the tablet 13 in FIG. 1 traverses to the screen of the computer 11.

The following separately describes the two traversal manners.

In an example of the first traversal manner (a keyboard-mouse of a PC traverses to an Android device), FIG. 9A to FIG. 9C are diagrams of a keyboard-mouse traversal scenario according to an embodiment of this application. The keyboard-mouse traversal scenario shown in FIG. 9A to FIG. 9C may be applied to the communication system shown in FIG. 1. As shown in FIG. 1, the right side of the computer 11 is connected to the mobile phone 12, and the left side of the computer 11 is connected to the tablet 13.

As shown in FIG. 9A, when the user operates the mouse of the computer 11 to move a mouse pointer 111 on the screen of the computer 11 rightwards, as shown in FIG. 9A and FIG. 9B, the computer 11 may implement keyboard-mouse traversal with the mobile phone 12. To be specific, the mouse pointer 111 displayed on the computer 11 may traverse rightwards from the screen of the computer 11 to the screen of the mobile phone 12. When the mouse pointer 111 of the computer 11 traverses to the screen of the mobile phone 12, as shown in FIG. 9B, the mouse pointer 111 may be displayed in a circle form on the screen of the mobile phone 12. As shown in FIG. 9B, the user may further operate the mouse of the computer 11 to move the mouse pointer 111 on the screen of the mobile phone 12 leftwards. As shown in FIG. 9B and FIG. 9C, the mouse pointer 111 on the screen of the mobile phone 12 traverses leftwards and back to the screen of the computer 11. As shown in FIG. 9C, the mouse pointer 111 is displayed on the screen of the computer 11 in an arrow form.

In some implementations, when the mouse of the computer 11 traverses to screens of different Android devices, the mouse pointer 111 may be displayed in a same form on the screens of the different Android devices. For example, in the communication system shown in FIG. 1, the computer 11 may also perform keyboard-mouse traversal with the tablet 13. To be specific, the mouse pointer 111 displayed on the computer 11 may traverse leftwards from the screen of the computer 11 to the screen of the tablet 13. When the mouse pointer 111 of the computer 11 traverses to the screen of the tablet 13, the mouse pointer 111 may also be displayed in the circle form on the screen of the tablet 13.

In some other implementations, when the mouse of the computer 11 traverses to screens of different Android devices, the mouse pointer 111 may be displayed in different forms on the screens of the different Android devices. For example, when the mouse pointer 111 of the computer 11 traverses to the screen of the tablet 13, the mouse pointer 111 may be displayed in a rhombus form on the screen of the tablet 13.

In this example, an external mouse of the computer 11 is displayed in the arrow form on the screen of the computer 11, and an external mouse of the mobile phone 12 is displayed in the circle form on the screen of the mobile phone 12. When the mouse pointer 111 traverses from the screen of the computer 11 to the screen of the mobile phone 12, the mouse pointer 111 is displayed in the circle form on the screen of the mobile phone 12. When the mouse pointer 111 traverses back from the screen of the mobile phone 12 to the screen of the computer 11, the mouse pointer 111 is displayed in the arrow form again on the screen of the computer 11. It should be noted that, in another example, after the mouse pointer traverses from the computer to the mobile phone, the mouse pointer may alternatively be displayed in another form. This is not limited herein.

After the keyboard-mouse of the computer 11 traverses to the mobile phone 12 or the tablet 13, the user may perform an operation such as clicking, dragging, or double-clicking on the mobile phone 12 or the tablet 13 by using the mouse, and may input information on the mobile phone 12 or the tablet 13 by using the keyboard.

FIG. 10 is a diagram of an interaction scenario according to an embodiment of this application. As shown in the example in FIG. 10, after the mouse pointer 111 of the computer 11 traverses to the screen of the mobile phone 12, the user may operate the mouse to move a location of the mouse pointer 111 on the screen of the mobile phone. As shown in (a) in FIG. 10, the mouse pointer 111 is located on a "memo" application icon. The user may click the "memo" application icon by using the mouse pointer 111, and in response to the operation of clicking the "memo" application icon by the user, the mobile phone 12 may display an interface shown in (b) in FIG. 10. As shown in (b) in FIG. 10, the mobile phone 12 displays a memo interface. The user may input information "memo information" in the memo interface by using the keyboard, and the mobile phone 12 displays a text "memo information" in the memo interface in response to the operation of inputting the information in the memo interface by the user.

To better understand embodiments of this application, an implementation principle of the first traversal manner (a keyboard-mouse of a PC traverse to an Android device) is described below with reference to the software architectures shown in FIG. 2 and FIG. 3.

FIG. 11 is a diagram of an implementation principle of a traversal manner according to an embodiment of this application. As shown in FIG. 11, the implementation principle in which the keyboard-mouse of the PC traverses to the Android device may include the following steps.

Step 000: The input driver of the Windows system detects a keyboard-mouse event of the PC, and reports the keyboard-mouse event of the Windows system to the input framework of Windows.

Step 001: The input framework of the Windows system reports the received keyboard-mouse event to the keyboard-mouse service module of the Windows system.

In this embodiment of this application, the input framework of the Windows system may obtain a keyboard-mouse event, and the keyboard-mouse event includes a keyboard-mouse displacement (or referred to as a location offset). The input framework of the Windows system reports the keyboard-mouse event to the keyboard-mouse service module of Windows. The keyboard-mouse service module of Windows determines, based on the keyboard-mouse displacement, whether keyboard-mouse traversal currently occurs.

Step 002: If the keyboard-mouse service module of the Windows system identifies, based on the received keyboard-mouse event, that keyboard-mouse traversal currently occurs (that is, the keyboard-mouse of the PC traverses to the Android device), the keyboard-mouse service module of the Windows system sends event interception indication information to the input framework of the Windows system.

The event interception is used to intercept a keyboard-mouse event. The event interception indication information indicates the input framework to set a keyboard hook, a mouse hook, and a shortcut-key hook. The hook (Hook) is a platform of a Windows message processing mechanism. An application program may set a subprogram on the platform to monitor a message in a specified window, and the monitored window may be created by another process. After the message arrives, the message is processed before function processing of a target window. The hook mechanism allows an application program to intercept and process a window message or a particular event. The hook is actually a program segment for processing a message, and is invoked by the system and embedded into the system. Each time a particular message is sent, before the message reaches the target window, the hook program first captures the message, that is, a hook function first obtains a control right. In this case, the hook function may process (change) the message, or may continue to transmit the message without processing, or may compulsorily end transmission of the message.

The keyboard hook is configured to obtain an input operation performed by the user by using the keyboard. For example, the keyboard hook is configured to obtain an operation of inputting "memo information" by the user by using the keyboard. The mouse hook is configured to obtain a control operation performed by the user by using the mouse. For example, the mouse hook is configured to obtain a clicking or dragging operation performed by the user by using the mouse. The shortcut-key hook is configured to obtain an operation of the user on a shortcut key. For example, the shortcut-key hook is configured to obtain an operation of the user on Ctrl+C, Ctrl+V, Atl+TAB, or Ctrl+Alt+DELETE.

Through event interception, when the mouse traverses from the PC to the Android device, the input framework of the Windows system intercepts a detected keyboard-mouse event, so that a service on the PC does not respond to the keyboard-mouse event, and therefore the PC does not affect the mouse event.

It should be noted that, the input framework of the Windows system has event distribution and data input capabilities. The data input means that the input framework of Windows reports related data of an event to a service module at the application layer. The event distribution means that the input framework of Windows reports the event to a service module at the application layer. For the application layer, if a service module at the application layer receives an event and related data of the event that are reported by the input framework, the service module may respond to the event based on the related data of the event. For example, related data of the keyboard-mouse event includes the keyboard-mouse displacement. After a service module of the application layer responds to the keyboard-mouse event, a moving action and a reached location of the keyboard-mouse are displayed on the display screen of the PC based on the keyboard-mouse displacement. If a service module of the application layer receives related data of an event but does not receive the event, the service module cannot respond to the event. In other words, the event interception is equivalent to notifying each service module of the application layer of the Windows system not to respond to the keyboard-mouse event, but does not affect reporting of the data (keyboard-mouse displacement) of the keyboard-mouse event.

Step 003: The keyboard-mouse service module of the Windows system packages the keyboard-mouse event according to a preset protocol, to obtain a data packet of the keyboard-mouse event.

When the keyboard-mouse event is packaged according to the preset protocol, related data of the keyboard-mouse event may be converted into data in a corresponding format based on a data format defined in the preset protocol, and then data obtained through the format conversion is packaged.

Optionally, the keyboard-mouse service module of the Windows system may encrypt the data packet, to prevent leakage of the keyboard-mouse event.

Step 004: The keyboard-mouse service module of the Windows system sends the data packet of the keyboard-mouse event to the communication module of the Windows system.

Optionally, the keyboard-mouse service module of the Windows system may send the data packet of the keyboard-mouse event and keyboard-mouse traversal indication information to the communication module of the Windows system. The keyboard-mouse traversal indication information indicates the keyboard-mouse service module of the Android system to perform keyboard-mouse traversal.

Step 005: The communication module of the Windows system sends the data packet of the keyboard-mouse event to the communication module of the Android system.

Step 006: The communication module of the Android system reports the received data packet to the keyboard-mouse service module of the Android system.

Step 007: The keyboard-mouse service module of the Android system parses the data packet according to a preset protocol, to obtain the keyboard-mouse event.

As described in step 003, if the keyboard-mouse service module of the Windows system encrypts the data packet, the keyboard-mouse service module of the Android system first decrypts the encrypted data packet to obtain the data packet, and then parses the data packet according to the preset protocol to obtain the keyboard-mouse event. Data obtained through parsing by the keyboard-mouse service module of the Android system includes the keyboard-mouse event and related data (such as the keyboard-mouse displacement) of the keyboard-mouse event.

It should be noted that, the preset protocol used by the keyboard-mouse service module of the Android system for parsing is consistent with the preset protocol used by the keyboard-mouse service module of the Windows system for packaging. In some application scenarios, the preset protocol may be shared after a keyboard-mouse connection is established between the PC and the Android device.

Step 008: The keyboard-mouse service module of the Android system injects the keyboard-mouse event to the virtual input driver of the Android system.

Step 009: The virtual input driver of the Android system reports the keyboard-mouse event to the input framework of the Android system.

The input framework of the Android system may report the keyboard-mouse event to each service module at the application layer of Android, to implement a keyboard-mouse function.

Through the foregoing steps, keyboard-mouse traversal may be implemented between the PC and the Android device.

It should be noted that, a premise of implementing keyboard-mouse traversal between the PC and the Android device is that a keyboard-mouse connection is established between the PC and the Android device. For details of a manner for establishing the keyboard-mouse connection, refer to content in the embodiment of FIG. 4. The details are not described herein again.

To simplify steps, a process of performing data exchange between terminal devices by using communication modules and a process of performing data exchange between a keyboard-mouse manager submodule and a communication module by using a connection scheduler submodule are omitted in the following embodiments. However, it may be understood that data (for example, a data packet of a keyboard-mouse event) exchange between the keyboard-mouse service module of the PC and the keyboard-mouse service module of the Android device may be all understood as that the keyboard-mouse service module of the PC first transmits data to the communication module of the PC, then the communication module of the PC transmits the data to the communication module of the Android device, and the communication module of the Android device transmits the data to the keyboard-mouse service module of the Android device. In addition, the keyboard-mouse service module is described as a whole in the following embodiments, but it may be understood that exchange between the keyboard-mouse service module and the communication module all needs to be performed via the connection scheduler submodule in the keyboard-mouse service module, that is, another submodule other than the connection scheduler submodule in the keyboard-mouse service module first transmits data to the connection scheduler submodule, and then the connection scheduler submodule transmits the data to the communication module, or the communication module first transmits data to the connection scheduler submodule, and then the connection scheduler submodule transmits the data to the another submodule in the keyboard-mouse service module.

Based on the foregoing implementation principle, the following describes a method of the first traversal manner (a keyboard-mouse of a PC traverses to an Android device).

FIG. 12 is a diagram of an interaction procedure of a keyboard-mouse traversal method according to an embodiment of this application. As shown in FIG. 12, the interaction procedure in which the keyboard-mouse of the PC traverses to the Android device may include the following steps.

S1201. Establish a keyboard-mouse connection between the PC and the Android device.

For the keyboard-mouse connection in this step, refer to the descriptions in the embodiment of FIG. 4. Details are not described herein again.

S1202. The keyboard-mouse service module of the PC registers a keyboard-mouse event monitoring event with the input framework of the PC.

The keyboard-mouse service module of the PC may detect a keyboard-mouse event after registering the keyboard-mouse event monitoring event.

S1203. After the monitoring event is registered, the input framework of the PC continuously reports keyboard-mouse displacements to the keyboard-mouse service module of the PC.

For example, when the user performs a pressing operation on the keyboard and performs an operation such as moving, clicking, or dragging on the mouse, the input framework of the PC may obtain, by using the input driver of the PC, a keyboard-mouse event and a keyboard-mouse displacement (or referred to as a location offset) corresponding to the current keyboard-mouse event.

S1204. The keyboard-mouse service module of the PC determines, based on the keyboard-mouse displacement, whether the mouse pointer currently reaches an edge of the screen of the PC.

It may be understood that S1203 to S1204 may be continuously performed. To be specific, after the monitoring event is registered, the input framework of the PC continuously reports keyboard-mouse displacements to the keyboard-mouse service module of the PC, and each time the keyboard-mouse service module of the PC receives a keyboard-mouse displacement, the keyboard-mouse service module determines, based on the current keyboard-mouse displacement, whether the keyboard-mouse currently reaches an edge of the screen of the PC.

For a process of determining a keyboard-mouse location, refer to descriptions in the following embodiment of S1301 to S1305.

S1205. If the keyboard-mouse currently reaches an edge of the screen of the PC, the keyboard-mouse service module of the PC obtains a traversal location of the keyboard-mouse.

If the keyboard-mouse currently does not reach an edge of the screen of the PC, the keyboard-mouse service module of the PC continues to monitor a keyboard-mouse event.

In this step, the keyboard-mouse service module of the PC may determine the traversal location based on the keyboard-mouse displacement reported by the input framework.

S1206. Send a traversal instruction to the keyboard-mouse service module of the Android device.

Correspondingly, the keyboard-mouse service module of the Android device receives the traversal instruction. The keyboard-mouse service module of the PC notifies the keyboard-mouse service module of the Android device of keyboard-mouse traversal by using the traversal instruction.

S1207. After receiving the traversal instruction, the keyboard-mouse service module of the Android device returns acknowledgment information to the keyboard-mouse service module of the PC.

S1208. The keyboard-mouse service module of the Android device determines a traversal location based on the traversal instruction.

In an implementation, the traversal instruction may include the traversal location of the keyboard-mouse on the screen of the PC. If the Android device and the PC have different screen resolutions, when the mouse traverses between the two devices, locations of the mouse on the screens are different. The keyboard-mouse service module of the Android device may determine a traversal location of the mouse on the screen of the Android device based on a location of the mouse on the screen of the PC.

For example, if a traversal location of the mouse pointer on the screen of the PC is (x1, y1), and a traversing direction is leftward traversal or rightward traversal, a conversion module of the PC may convert y1 based on $s_y$, that is, $y1 \times s_y$. A value of a horizontal coordinate is a preset value, and the preset value is a minimum value or a maximum value of an edge length of a screen on an X axis. $s_y = \frac{R_{1y}}{R_{2y}}$, $R_{1y}$ is an edge length of the screen of the Android device on a Y axis, and $R_{2y}$ is an edge length of the screen of the PC on the Y axis.

If the traversal location of the mouse on the screen of the PC is (x1, y1), and the traversing direction is upward traversal or downward traversal, the conversion module of the PC may convert x1 based on $s_x$, that is, $x1 \times s_x$. A value of a vertical coordinate is a preset value, and the preset value is a minimum value or a maximum value of an edge length of the screen on the X axis. $s_x = \frac{R_{1x}}{R_{2x}}$, $R_{1x}$ is an edge length of the screen of the Android device on the X axis, and $R_{2x}$ is an edge length of the screen of the PC on the X axis.

For example, in an example shown in FIG. 13, assuming that the PC has a screen resolution of 1920×1080, a traversal location is (1920, 960), and a traversing direction is rightward traversal, a converted location may be (0, 960×$s_y$). If a traversal location is (0, 960), a traversing direction is rightward traversal, and the Android device has a screen resolution of 2000×1000, a converted location may be (2000, 960×$s_y$). $s_y = \frac{R_{1y}}{R_{2y}} = \frac{1000}{1080}$.

It may be understood that, in another implementation, the traversal instruction may include proportions of the traversal location of the keyboard-mouse on the screen of the PC in edge lengths of the screen, that is, $\frac{y1}{R_{2y}}$ and $\frac{x1}{R_{2x}}$. The keyboard-mouse service module of the Android device calculates the traversal location of the keyboard-mouse on the screen of the Android device based on the received proportions and edge lengths of the screen of the Android device.

It should be noted that, $s_x$ and $s_y$ may be calculated by the keyboard-mouse service module of the PC or the Android device after the keyboard-mouse connection is established between the Android device and the PC. The data may be exchanged by using the traversal instruction.

S1209. The keyboard-mouse service module of the Android device updates a traversal status based on the traversal instruction.

Updating the traversal status in this step means updating the traversal status from non-traversing to traversing.

S1210. The keyboard-mouse service module of the PC sends event interception indication information to the input framework of the PC after receiving the acknowledgment information.

The event interception in this step has a same function as that in step 002 in the embodiment of FIG. 11. For details, refer to the descriptions in the embodiment of FIG. 11. The details are not described herein again.

It should be noted that, S1208 to S1210 are not necessarily performed in a particular sequence, and may be performed in parallel.

S1211. The keyboard-mouse service module of the PC packages a reported keyboard-mouse event according to a preset protocol, to obtain a data packet of the keyboard-mouse event.

S1212. The keyboard-mouse service module of the PC sends the data packet to the keyboard-mouse service module of the Android device.

S1213. The keyboard-mouse service module of the Android device responds to the keyboard-mouse event.

Specifically, the keyboard-mouse service module of the Android device parses the data packet to obtain a keyboard-mouse displacement of the keyboard-mouse event, updates a keyboard-mouse location based on the keyboard-mouse displacement, and injects the keyboard-mouse event to the virtual input driver of the Android device based on an updated keyboard-mouse location. The virtual input driver of the Android device reports the keyboard-mouse event to the input framework of the Android device, and then the input framework of the Android device distributes the keyboard-mouse event to each service module at the application layer of the Android device, to implement a function of the keyboard-mouse of the PC on the Android device.

A principle of steps S1211 to S1213 is the same as that of steps 003 to 008 in the embodiment of FIG. 11. For details, refer to the descriptions in the embodiment of FIG. 11. No further details are shown in FIG. 12.

S1214. The keyboard-mouse service module of the Android device monitors keyboard-mouse traversal.

In this embodiment of this application, a process in which the keyboard-mouse service module of the Android device monitors keyboard-mouse traversal includes: The keyboard-mouse service module of the Android device continuously receives each data packet sent by the keyboard-mouse service module of the PC, parses out a keyboard-mouse event based on the data packet, and injects the keyboard-mouse event to the virtual input driver. The virtual input driver reports the keyboard-mouse event to the input framework of the Android device. The input framework reports the keyboard-mouse event to each service module, including the keyboard-mouse service module, at the application layer of the Android device. The keyboard-mouse service module obtains a keyboard-mouse displacement based on the reported keyboard-mouse event.

It may be understood that, during traversal of the keyboard-mouse of the PC to the Android device, S1211 to S1214 may be continuously performed. To be specific, during traversal of the keyboard-mouse of the PC to the Android device, the keyboard-mouse service module of the PC continuously sends data packets to the keyboard-mouse service module of the Android device, and the keyboard-mouse service module of the Android device continuously monitors keyboard-mouse traversal, and performs, each time a data packet is received, corresponding processing based on a keyboard-mouse event parsed out from the data packet.

Because the keyboard-mouse service module of the PC continuously sends the data packets to the keyboard-mouse service module of the Android device, this may be more vividly understood as that the keyboard-mouse service module of the PC sends a data stream to the keyboard-mouse service module of the Android device.

After the keyboard-mouse traverses to the Android device, the keyboard-mouse may further traverse back. In a scenario in which the keyboard-mouse traverses back to the PC, a keyboard-mouse traversal operation may be understood as an operation for the keyboard-mouse to traverse back, that is, traverse back from the Android device to the PC, which is further described below.

S1215. The keyboard-mouse service module of the Android device determines, based on a detected keyboard-mouse displacement, whether the keyboard-mouse currently reaches an edge of the screen of the Android device.

For a process of determining a keyboard-mouse location, refer to descriptions in the following embodiment of S1301 to S1305.

S1216. Send traversal end information to the keyboard-mouse service module of the PC if the keyboard-mouse currently reaches an edge of the screen of the Android device.

S1217. The keyboard-mouse service module of the PC receives the traversal end information, and sends a stop indication for stopping event interception to the input framework of the PC.

The input framework of the PC receives the event interception stop indication, and stops intercepting a keyboard-mouse event. After stopping intercepting the keyboard-mouse event, the input framework of the PC resumes keyboard-mouse event distribution to each service module at the application layer of the PC.

S1218. The keyboard-mouse service module of the PC performs state restoration.

**In** this step, the state restoration includes updating the traversal status and restoring a keyboard-mouse location. The updating the traversal status means updating the traversal status from traversing to non-traversing.

In an implementation of keyboard-mouse location restoration, the keyboard-mouse location of the PC may be restored based on a location on the screen of the PC to which the keyboard-mouse traverses back from the Android device.

In another implementation of keyboard-mouse location restoration, the keyboard-mouse location of the PC may be restored based on the traversal location at which the keyboard-mouse traverses from the PC to the screen of the Android device.

**In** another implementation of keyboard-mouse location restoration, the keyboard-mouse location of the PC may be restored to a preset location. For example, the preset location is a center of the screen of the PC.

S1219. The keyboard-mouse service module of the PC sends setting completion information to the keyboard-mouse service module of the Android device.

Correspondingly, the keyboard-mouse service module of the Android device receives the setting completion information. The setting completion information indicates that keyboard-mouse traversal ends.

It should be noted that, in this embodiment of this application, a sequence between S1219 and S1217 is not limited, and the two may be performed in parallel.

S1220. The keyboard-mouse service module of the Android device updates the traversal status based on the setting completion information.

In this step, updating the traversal status means updating the traversal status from traversing to non-traversing.

According to the keyboard-mouse traversal method provided in this embodiment of this application, after the keyboard-mouse implements cross-device traversal, a traversal location of the keyboard-mouse may be adjusted based on different devices. After the mouse traverses successfully, the PC intercepts a keyboard-mouse event, and the Android device side responds to the keyboard-mouse event. In this way, cross-device traversal of the keyboard-mouse can be implemented.

In the foregoing method, S1204 and S1215 relate to determining of the keyboard-mouse location. The following describes a mouse location detection method. The mouse location detection method may include the following steps.

S1301. The keyboard-mouse service module obtains a current location of the mouse.

The current location of the mouse is coordinates of the mouse on the screen. The keyboard-mouse service module may create a two-dimensional coordinate system on the screen, and coordinates of the mouse in the two-dimensional coordinate system are the current location of the mouse.

For example, FIG. 13 is a diagram of establishing a screen coordinate system. As shown in FIG. 13, a coordinate system is established on a screen OABC by using the point O as an origin, an OA direction as a positive direction of an X axis, and an OC direction as a positive direction of a Y axis. A screen resolution is $1920\times1080$, a length of a line segment OA is equal to a length of a line segment CB (corresponding to 1920 pixels), and a length of a line segment OC is equal to a length of a line segment AB (corresponding to 1080 pixels). In the coordinate system, coordinates of the point O are (0, 0), coordinates of the point A are (1920, 0), coordinates of the point B are (1920, 1080), and coordinates of the point C are (0, 1080). The mouse location is coordinates of the mouse in the coordinate system. For example, the mouse location may be (1920, 960).

S1302. The keyboard-mouse service module obtains a mouse displacement.

For example, when the user moves or drags the mouse, the virtual input driver of the PC reports a keyboard-mouse event to the input framework of the PC, and the input framework of the PC obtains a mouse displacement based on the keyboard-mouse event, and reports the mouse displacement to the keyboard-mouse service module of the PC.

The mouse displacement is a distance over which the mouse is moved. The mouse displacement may be represented by (Lx, Ly). Lx and Ly may be positive values or negative values. This is not limited in this embodiment of this application.

S1303. The keyboard-mouse service module calculates a moved-to location of the mouse based on the mouse location and the mouse displacement.

For example, the current location of the mouse may be represented by (XRaw, YRaw), and the moved-to location of the mouse may be represented by (curX, curY). The moved-to location of the mouse may be represented by using the following formulas: curX=XRaw+Lx; and curY=YRaw+Ly.

S1304. The keyboard-mouse service module determines whether the moved-to location of the mouse goes beyond the screen.

In a scenario in which the mouse traverses in a leftward or rightward direction on the screen, if curX is less than a minimum value of the screen on the X axis or greater than a maximum value of the screen on the X axis, the keyboard virtualization capability module of the PC may determine that the mouse goes beyond the screen.

In a scenario in which the mouse traverses in an upward or downward direction on the screen, if curY is less than a minimum value of the screen on the Y axis or greater than a maximum value of the screen on the Y axis, the keyboard virtualization capability module of the PC may determine that the mouse goes beyond the screen.

If the moved-to location of the mouse goes beyond the screen, it may be determined that the mouse is traversing, that is, S1305 is performed. If the moved-to location of the mouse does not go beyond the screen, the moved-to location of the mouse may be determined as a current location, and movement of the mouse is further obtained, that is, S1302 is performed.

S1305. If the moved-to location of the mouse goes beyond the screen, the keyboard-mouse service module may determine that the mouse is traversing.

The keyboard-mouse service module may further determine a traversing direction of the mouse. For example, in the scenario in which the mouse traverses in the leftward or rightward direction on the screen, the traversing direction may be leftward traversal or rightward traversal. In the scenario in which the mouse traverses in the upward or downward direction on the screen, the traversing direction may be upward traversal or downward traversal.

For example, in the example shown in FIG. 13, in the scenario in which the mouse traverses in the leftward or rightward direction on the screen, if curX is less than 0, the keyboard-mouse service module may determine that the traversing direction of the mouse is leftward traversal. If curX is greater than 1920, the keyboard-mouse service module may determine that the traversing direction of the mouse is rightward traversal. In the scenario in which the mouse traverses in the upward or downward direction on the screen, if curY is less than 0, the keyboard-mouse service module may determine that the traversing direction of the mouse is upward traversal. If curX is greater than 1080, the keyboard-mouse service module may determine that the traversing direction of the mouse is downward traversal.

It should be noted that, the method in S1301 to S1305 may be performed by the PC or the Android device. For example, in S1204, the keyboard-mouse service module of the PC performs the method in S1301 to S1305. In S1215, the keyboard-mouse service module of the Android device performs the method in S1301 to S1305.

According to the mouse traversal detection method provided in this embodiment of this application, whether the mouse goes beyond the screen may be determined based on a mouse location and a mouse displacement, and a traversing direction may be determined, which helps improve accuracy of mouse traversal detection.

In an example of the second traversal manner (a keyboard-mouse of an Android device traverses to a PC), FIG. 14A to FIG. 14C are diagrams of another keyboard-mouse traversal scenario according to an embodiment of this application. The keyboard-mouse traversal scenario shown in FIG. 14A to FIG. 14C may be applied to the communication system shown in FIG. 1. As shown in FIG. 1, the right side of the computer 11 is connected to the mobile phone 12, and the left side of the computer 11 is connected to the tablet 13.

As shown in FIG. 14A, when the user operates the mouse of the mobile phone 12 to move a mouse pointer 121 on the screen of the mobile phone 12 leftwards, as shown in FIG. 14 A and FIG. 14B, keyboard-mouse traversal may be implemented between the mobile phone 12 and the computer 11. To be specific, the mouse pointer 121 displayed on the mobile phone 12 may traverse leftwards from the screen of the mobile phone 12 to the screen of the computer 11. When the mouse pointer 121 of the mobile phone 12 traverses to the screen of the computer 11, as shown in FIG. 14B, the mouse pointer 121 may be displayed in the arrow form on the screen of the computer 11. As shown in FIG. 14B, the user may further operate the mouse of the mobile phone 12 to move the mouse pointer 121 on the screen of the computer 11 rightwards. As shown in FIG. 14B and FIG. 14C, the mouse pointer 121 on the screen of the computer 11 traverses rightwards and back to the screen of the mobile phone 12. As shown in FIG. 14C, the mouse pointer 121 is displayed in the circle form on the screen of the mobile phone 12.

In this example, the mouse pointer 121 is displayed in the circle form on the mobile phone 12. When the mouse pointer 121 traverses from the mobile phone 12 to the computer 11, the mouse pointer 121 is displayed in the arrow form on the computer 11. When the mouse pointer 121 traverses back from the computer 11 to the mobile phone 12, the mouse pointer 121 is displayed in the circle form again on the mobile phone 12. When the computer 11 is externally connected to a mouse, a mouse pointer is also displayed in the arrow form on the computer 11. In another example, after the mouse pointer traverses from the mobile phone to the computer, the mouse pointer may alternatively be displayed in another form. This is not limited herein.

After the keyboard-mouse of the mobile phone 12 traverses to the computer 11, the user may perform an operation such as clicking, dragging, or double-clicking on the computer 11 by using the mouse, and may input information on the computer 11 by using the keyboard. No further details are shown herein.

To better understand embodiments of this application, an implementation principle of the second traversal manner (a keyboard-mouse of an Android device traverses to a PC) is described below with reference to the software architectures shown in FIG. 2 and FIG. 3.

FIG. 15 is a diagram of an implementation principle of a traversal manner according to an embodiment of this application. As shown in FIG. 15, the implementation principle in which the keyboard-mouse of the Android device traverses to the PC may include the following steps.

Step 010: The keyboard-mouse service module of the Windows system loads the virtual driver.

As shown in FIG. 2 and FIG. 15, the driver layer of the Windows system includes the virtual driver and the input driver. The virtual driver is configured to drive the keyboard-mouse of the Android device, and the input driver is configured to drive the keyboard-mouse of the PC. In this step, the keyboard-mouse service module of the Windows system loads the virtual driver, to provide driver support for the keyboard-mouse of the Android device to traverse to the PC subsequently.

As shown in FIG. 2, the keyboard-mouse service module of the Windows system includes the virtual driver loader submodule. Correspondingly, in step 010, the virtual driver may be loaded by the virtual driver loader submodule of the Windows system.

It should be noted that, step 010 may be a step performed immediately after a keyboard-mouse connection is established between the PC and the Android device, or may be a step performed before step 019. This is not limited.

Step 011: The virtual input driver of the Android system detects a keyboard-mouse event of the Android device, and reports the keyboard-mouse event of the Android system to the input framework of Android.

Step 012: The input framework of the Android system reports the received keyboard-mouse event to the keyboard-mouse service module of the Android system.

In this embodiment of this application, the input framework of the Android system may obtain a keyboard-mouse displacement (or referred to as a location offset) corresponding to the keyboard-mouse event. The input framework of the Android system reports the keyboard-mouse event and the keyboard-mouse displacement corresponding to the keyboard-mouse event to the keyboard-mouse service module of Android. The keyboard-mouse service module of Android determines, based on the keyboard-mouse displacement, whether keyboard-mouse traversal currently occurs.

Step 013: If the keyboard-mouse service module of the Android system identifies, based on the received keyboard-mouse event, that keyboard-mouse traversal currently occurs (that is, the keyboard-mouse of the Android device traverses to the screen of the PC), invoke a preset interface of the input framework of the Android system to intercept a keyboard-mouse event to be reported.

Different from the Windows system, the Android system intercepts the keyboard-mouse event by invoking the preset interface of the input framework, rather than through event interception. The preset interface is invoked so that when the mouse traverses from the Android device to the PC, the input framework of the Android system intercepts a detected keyboard-mouse event, so that a service on the Android device does not respond to the keyboard-mouse event, and therefore the Android device does not affect the keyboard-mouse event.

A principle/function of invoking the preset interface of the input framework in the Android system is the same as a principle/function of performing event interception by the input framework in the Windows system. For detailed content, refer to the descriptions of step 002 in the embodiment of FIG. 11. Details are not described herein again.

Step 014: The keyboard-mouse service module of the Android system packages the keyboard-mouse event according to a preset protocol, to obtain a data packet of the keyboard-mouse event.

Optionally, the keyboard-mouse service module of the Android system may encrypt the data packet, to prevent leakage of the keyboard-mouse event.

Step 015: The keyboard-mouse service module of the Android system sends the data packet of the keyboard-mouse event to the communication module of the Android system.

Optionally, the keyboard-mouse service module of the Android system may send the data packet of the keyboard-mouse event and keyboard-mouse traversal indication information to the communication module of the Android system. The keyboard-mouse traversal indication information indicates the keyboard-mouse service module of the Windows system to perform keyboard-mouse traversal.

Step 016: The communication module of the Android system sends the data packet of the keyboard-mouse event to the communication module of the Windows system.

Step 017: The communication module of the Windows system reports the received data packet to the keyboard-mouse service module of the Windows system.

Step 018: The keyboard-mouse service module of the Windows system parses the data packet according to a preset protocol, to obtain the keyboard-mouse event.

As described in step 014, if the keyboard-mouse service module of the Android system encrypts the data packet, the keyboard-mouse service module of the Windows system first decrypts the encrypted data packet to obtain the data packet, and then parses the data packet according to the preset protocol to obtain the keyboard-mouse event. Data obtained through parsing by the keyboard-mouse service module of the Windows system includes the keyboard-mouse event and related data (such as the keyboard-mouse displacement) of the keyboard-mouse event.

It should be noted that, the preset protocol used by the keyboard-mouse service module of the Windows system for parsing is consistent with the preset protocol used by the keyboard-mouse service module of the Android system for packaging. In some application scenarios, the preset protocol may be shared after the keyboard-mouse connection is established between the PC and the Android device.

Step 019: The keyboard-mouse service module of the Windows system injects the keyboard-mouse event to the virtual driver of the Windows system.

Step 020: The virtual driver of the Windows system reports the keyboard-mouse event to the input framework of the Windows system.

The input framework of the Windows system may report the keyboard-mouse event to each service module at the application layer of Windows, to implement a keyboard-mouse function.

Through the foregoing steps, keyboard-mouse traversal may be implemented between the Android device and the PC.

It should be noted that, a premise of implementing keyboard-mouse traversal between the Android device and the PC is that the keyboard-mouse connection is established between the PC and the Android device. For details of a manner for establishing the keyboard-mouse connection, refer to content in the embodiment of FIG. 4. The details are not described herein again.

Based on the foregoing implementation principle, the following describes a method of the second traversal manner (a keyboard-mouse of an Android device traverse to a PC). FIG. 16 is a diagram of an interaction procedure of a keyboard-mouse traversal method according to an embodiment of this application. As shown in FIG. 16, the interaction procedure in which the keyboard-mouse of the Android device traverses to the PC may include the following steps.

S1601. Establish a keyboard-mouse connection between the PC and the Android device.

For the keyboard-mouse connection in this step, refer to the descriptions in the embodiment of FIG. 4. Details are not described herein again.

S 1602. The keyboard-mouse service module of the Android device registers a keyboard-mouse event monitoring event with the input framework of the Android device.

The keyboard-mouse service module of the Android device may detect a keyboard-mouse event after registering the keyboard-mouse event monitoring event.

S1603. After the monitoring event is registered, the input framework of the Android device continuously reports keyboard-mouse displacements to the keyboard-mouse service module of the Android device.

For example, when the user performs a pressing operation on the keyboard and performs an operation such as moving, clicking, or dragging on the mouse, the input framework of the Android device may obtain, by using the virtual input driver of the Android device, a keyboard-mouse event and a keyboard-mouse displacement (or referred to as a location offset) corresponding to the current keyboard-mouse event.

S1604. The keyboard-mouse service module of the Android device determines, based on the keyboard-mouse displacement, whether the mouse pointer currently reaches an edge of the screen of the Android device.

It may be understood that S1603 to S1604 may be continuously performed. To be specific, after the monitoring event is registered, the input framework of the Android device continuously reports keyboard-mouse displacements to the keyboard-mouse service module of the Android device, and each time the keyboard-mouse service module of the Android device receives a keyboard-mouse displacement, the keyboard-mouse service module determines, based on the current keyboard-mouse displacement, whether the keyboard-mouse currently reaches an edge of the screen of the Android device.

For a process of determining a keyboard-mouse location, refer to the descriptions in the method embodiment of S1301 to S1305. Details are not described herein again.

S1605. Obtain a traversal location of the keyboard-mouse if the keyboard-mouse currently reaches an edge of the screen of the Android device.

If the keyboard-mouse currently does not reach an edge of the screen of the Android device, the keyboard-mouse service module of the Android device continues to monitor a keyboard-mouse event.

S1606. Send a traversal instruction to the keyboard-mouse service module of the PC.

Correspondingly, the keyboard-mouse service module of the PC receives the traversal instruction. The keyboard-mouse service module of the Android device notifies the keyboard-mouse service module of the PC of keyboard-mouse traversal by using the traversal instruction.

S1607. After the keyboard-mouse service module of the PC receives the traversal instruction, if a current traversal status is non-traversing, the keyboard-mouse service module of the PC returns acknowledgment information to the keyboard-mouse service module of the Android device.

S1608. The keyboard-mouse service module of the PC determines a traversal location based on the traversal instruction.

In this step, a method for determining the traversal location by the keyboard-mouse service module of the PC is the same as a principle of step S1208 in the embodiment of FIG. 12. For details, refer to the descriptions in S1208. The details are not described herein again.

S 1609. The keyboard-mouse service module of the PC updates the traversal status based on the traversal instruction.

Updating the traversal status in this step means updating the traversal status from non-traversing to traversing.

S1610. After receiving the acknowledgment information, the keyboard-mouse service module of the Android device invokes the preset interface of the input framework of the Android device, to intercept a keyboard-mouse event to be reported.

The preset interface in this step has a same function as that in step 013 in the embodiment of FIG. 15. For details, refer to the descriptions in the embodiment of FIG. 15. The details are not described herein again.

It should be noted that, S1608 to S1610 are not necessarily performed in a particular sequence, and may be performed in parallel.

S1611. The keyboard-mouse service module of the Android device packages the reported keyboard-mouse displacement according to a preset protocol, to obtain a data packet of the keyboard-mouse event.

S1612. The keyboard-mouse service module of the Android device sends the data packet to the keyboard-mouse service module of the PC.

S1613. The keyboard-mouse service module of the PC responds to the keyboard-mouse event.

Specifically, the keyboard-mouse service module of the PC parses the data packet to obtain a keyboard-mouse displacement of the keyboard-mouse event, updates a keyboard-mouse location based on the keyboard-mouse displacement, and injects the keyboard-mouse event to the virtual driver of the PC based on an updated keyboard-mouse location. The virtual driver of the PC reports the keyboard-mouse event to the input framework of the PC, and then the input framework of the PC distributes the keyboard-mouse event to each service module at the application layer of the PC, to implement a function of the keyboard-mouse of the Android device on the PC.

A principle of steps S1611 to S1613 is the same as that of steps 014 to 020 in the embodiment of FIG. 15. For details, refer to the descriptions in the embodiment of FIG. 15. The details are not described herein again.

S1614. The keyboard-mouse service module of the PC monitors keyboard-mouse traversal.

In this embodiment of this application, a process in which the keyboard-mouse service module of the PC monitors keyboard-mouse traversal includes: The keyboard-mouse service module of the PC continuously receives each data packet sent by the keyboard-mouse service module of the Android device, parses out a keyboard-mouse displacement corresponding to a keyboard-mouse event based on the data packet, updates the keyboard-mouse location based on the keyboard-mouse displacement, and injects an updated keyboard-mouse location to the virtual driver, to update the keyboard-mouse location on the screen of the PC. The keyboard-mouse service module of the PC detects keyboard-mouse traversal, and may obtain a keyboard-mouse displacement of a keyboard-mouse event corresponding to the keyboard-mouse traversal.

It may be understood that, during traversal of the keyboard-mouse of the Android device to the PC, S1611 to S1614 may be continuously performed. To be specific, during traversal of the keyboard-mouse of the Android device to the PC, the keyboard-mouse service module of the Android device continuously sends data packets to the keyboard-mouse service module of the PC, and the keyboard-mouse service module of the PC continuously monitors keyboard-mouse traversal, and performs, each time a data packet is received, corresponding processing based on a keyboard-mouse event parsed out from the data packet.

Because the keyboard-mouse service module of the Android device continuously sends the data packets to the keyboard-mouse service module of the PC, this may be more vividly understood as that the keyboard-mouse service module of the Android device sends a data stream to the keyboard-mouse service module of the PC.

After the keyboard-mouse traverses to the PC, the keyboard-mouse may further traverse back. In a scenario in which the keyboard-mouse traverses back to the Android device, a keyboard-mouse traversal operation may be understood as an operation for the keyboard-mouse to traverse back, that is, traverse back from the PC to the Android device, which is further described below.

S1615. The keyboard-mouse service module of the PC determines, based on a detected keyboard-mouse displacement, whether the keyboard-mouse currently reaches an edge of the screen of the PC.

For a process of determining a keyboard-mouse location, refer to the descriptions in the method embodiment of S1301 to S1305. Details are not described herein again.

S1616. Send traversal end information to the keyboard-mouse service module of the Android device if the keyboard-mouse currently reaches an edge of the screen of the PC.

S1617. The keyboard-mouse service module of the Android device receives the traversal end information, and stops invoking the preset interface of the input framework of the Android device, to stop intercepting a keyboard-mouse event to be reported.

After the preset interface stops being invoked, the input framework of the Android device stops intercepting the keyboard-mouse event. After stopping intercepting the keyboard-mouse event, the input framework of the Android device resumes keyboard-mouse event distribution to each service module at the application layer of the Android device.

S1618. The keyboard-mouse service module of the Android device performs state restoration.

In this step, the state restoration includes updating the traversal status and restoring the keyboard-mouse location. The updating the traversal status means updating the traversal status from traversing to non-traversing.

In an implementation of keyboard-mouse location restoration, the keyboard-mouse location on the Android device may be restored based on a location at which the keyboard-mouse traverses back from the PC to the screen of the Android device.

In another implementation of keyboard-mouse location restoration, the keyboard-mouse location on the Android device may be restored based on the traversal location at which the keyboard-mouse traverses from the Android device to the screen of the PC.

In another implementation of keyboard-mouse location restoration, the keyboard-mouse location on the Android device may be restored based on a preset location. For example, the mouse location is restored to a center location of the screen of the Android device.

S1619. The keyboard-mouse service module of the Android device sends setting completion information to the keyboard-mouse service module of the PC.

Correspondingly, the keyboard-mouse service module of the PC receives the setting completion information. The setting completion information indicates that keyboard-mouse traversal ends.

It should be noted that, in this embodiment of this application, a sequence between S1619 and S1617 is not limited, and the two may be performed in parallel.

S1620. The keyboard-mouse service module of the PC updates the traversal status based on the setting completion information.

In this step, updating the traversal status means updating the traversal status from traversing to non-traversing.

According to the keyboard-mouse traversal method provided in this embodiment of this application, after the keyboard-mouse implements cross-device traversal, a traversal location of the keyboard-mouse may be adjusted based on different devices. After the mouse traverses successfully, the Android device intercepts a keyboard-mouse event, and the PC side responds to the keyboard-mouse event. In this way, cross-device traversal of the keyboard-mouse can be implemented.

The embodiment of FIG. 12 and the embodiment of FIG. 16 are the same in the premise that a keyboard-mouse connection is established between the PC and the Android device, and the keyboard-mouse connection is centered on the PC. A difference between the two lies in that in FIG. 12, the PC is an initiator of a keyboard-mouse traversal event and the Android device is a receiver, while in FIG. 16, the Android device is an initiator of a keyboard-mouse traversal event and the PC is a receiver.

Based on the foregoing two keyboard-mouse traversal methods in the embodiments of FIG. 12 to FIG. 16, the user can flexibly operate a plurality of terminal devices by using a same keyboard-mouse, thereby avoiding switching operation modes back and forth between the plurality of terminal devices, simplifying operations, and helping improve user experience.

The application scenarios shown in FIG. 9A to FIG. 9C and FIG. 14A to FIG. 14C are scenarios of keyboard-mouse traversal between two terminal devices. In some other application scenarios, the user may need to operate three or more terminal devices, which relates to keyboard-mouse traversal between a plurality of terminal devices.

In an example of keyboard-mouse traversal between a plurality of terminal devices, keyboard-mouse traversal between three terminal devices is used as an example for description. FIG. 17A to FIG. 17C and FIG. 18A to FIG. 18C are diagrams of keyboard-mouse traversal scenarios according to an embodiment of this application. The keyboard-mouse traversal scenarios shown in FIG. 17A to FIG. 17C and FIG. 18A to FIG. 18C may be applied to the communication system shown in FIG. 1. As shown in FIG. 1, the right side of the computer 11 is connected to the mobile phone 12, and the left side of the computer 11 is connected to the tablet 13.

As shown in FIG. 17A, when the user operates to move the mouse pointer on the screen of the mobile phone 12 leftwards, as shown in FIG. 17A and FIG. 17B, keyboard-mouse traversal may be implemented between the mobile phone 12 and the computer 11. To be specific, the mouse pointer 121 displayed on the mobile phone 12 may traverse leftwards from the screen of the mobile phone 12 to the screen of the computer 11. As shown in FIG. 17B, when the user continues to operate the mouse of the mobile phone 12 to move the mouse pointer on the screen of the computer 11 leftwards, as shown in FIG. 17B and FIG. 17C, keyboard-mouse traversal may be implemented between the computer 11 and the tablet 13. To be specific, the mouse pointer 121 displayed on the computer 11 may continue to traverse leftwards from the screen of the computer 11 to the screen of the tablet 13.

In the scenario shown in FIG. 17C, the mouse pointer 121 is currently on the screen of the tablet 13. As shown in FIG. 18A, when the user operates to move the mouse pointer on the screen of the tablet 13 rightwards, as shown in FIG. 18A and FIG. 18B, keyboard-mouse traversal may be implemented between the tablet 13 and the computer 11. To be specific, the mouse pointer 121 displayed on the tablet 13 may traverse rightwards from the screen of the tablet 13 to the screen of the computer 11. As shown in FIG. 18B, when the user continues to operate to move the mouse pointer on the screen of the computer 11 rightwards, keyboard-mouse traversal may be implemented between the computer 11 and the mobile phone 12. To be specific, the mouse pointer 121 displayed on the computer 11 may traverse from the screen of the computer 11 back to the screen of the mobile phone 12, as shown in FIG. 18C.

In the application scenarios shown in FIG. 17A to FIG. 17C and FIG. 18A to FIG. 18C, the mouse pointer of the mobile phone 12 traverses a plurality of times between the computer 11, the mobile phone 12, and the tablet 13, thereby implementing keyboard-mouse traversal across a PC.

In PC-centered application scenarios in which a plurality of Android devices implement keyboard-mouse traversal across the PC, a keyboard-mouse event detected by an Android device I may be a keyboard-mouse event of the Android device I, where the Android device I is in a non-traversing state; or may be a keyboard-mouse event of keyboard-mouse traversal of an Android device II or the PC, where the Android device I is in a traversing state. If scenarios are not distinguished, traversal status confusion may be caused.

Based on this consideration, an embodiment of this application provides a keyboard-mouse traversal method, to distinguish between scenarios in which a plurality of terminal device implement keyboard-mouse traversal, thereby avoiding traversal status confusion, and ensuring reliability of keyboard-mouse traversal.

In the application scenarios shown in FIG. 17A to FIG. 17C and FIG. 18A to FIG. 18C, keyboard-mouse traversal occurs a plurality of times between the computer 11, the mobile phone 12, and the tablet 13, which may be classified into two cases: In a first case, the mouse pointer traverses from the screen of the PC to a screen of an Android device. In a second case, the mouse pointer traverses from a screen of an Android device to the screen of the PC. The following separately describes keyboard-mouse traversal methods in the two cases.

It should be noted that, in the application scenarios shown in FIG. 17A to FIG. 17C and FIG. 18A to FIG. 18C, keyboard-mouse traversal may occur between the PC and both Android devices. Therefore, a premise of the following embodiments is that the PC establishes a keyboard-mouse connection to each of the two Android devices. For a method for establishing the keyboard-mouse connection, refer to the descriptions in the foregoing embodiment of FIG. 4. Details are not described herein again.

The following describes the keyboard-mouse traversal method in the first case. FIG. 19 is a diagram of an interaction procedure of a keyboard-mouse traversal method according to an embodiment of this application. The method shown in FIG. 19 may be applied to a case that a mouse pointer traverses from a screen of a PC to a screen of an Android device. For example rather than limitation, as shown in FIG. 19, the keyboard-mouse traversal method may include the following steps.

S1901. A keyboard-mouse service module of an Android device I monitors a keyboard-mouse displacement of a keyboard-mouse event.

A principle of this step is the same as that of S1214. For details, refer to the descriptions of S1214. The details are not described herein again.

S1902. The keyboard-mouse service module of the Android device I determines, based on a detected keyboard-mouse displacement, whether a mouse pointer currently reaches an edge of a screen.

For a method for determining whether the mouse pointer reaches an edge of the screen, refer to the descriptions in the embodiment of S1301 to S1305. Details are not described herein again.

S1903. If the mouse pointer currently reaches an edge of the screen, determine whether there is a traversal-available device currently at the edge of the screen.

For example, when the Android device I is the tablet 13 shown in FIG. 17A to FIG. 17C, because the Android device I is on the left side of the PC, there is no traversal-available device on a left side of the Android device I. Therefore, if the mouse pointer currently reaches a left edge of the screen, keyboard-mouse traversal does not need to be considered. If the mouse pointer currently reaches a right edge of the screen, S1904 is performed. When the Android device I is the mobile phone 12 shown in FIG. 17A to FIG. 17C, because the Android device I is on the right side of the PC, there is no traversal-available device on a right side of the Android device I. Therefore, if the mouse pointer currently reaches a right edge of the screen, keyboard-mouse traversal does not need to be considered. If the mouse pointer currently reaches a left edge of the screen, S1904 is performed.

S1904. If there is a traversal-available device currently at the edge of the screen, determine whether the current mouse pointer belongs to a local keyboard-mouse (a keyboard-mouse of the Android device I).

It can be learned from the application scenarios shown in FIG. 17A to FIG. 17C and FIG. 18A to FIG. 18C that a mouse pointer on a screen of an Android device may be a mouse pointer of a keyboard-mouse of the Android device, or may be a mouse pointer that traverses from a PC.

If the current mouse pointer belongs to the local keyboard-mouse (the keyboard-mouse of the Android device I), it is the case shown in FIG. 14A to FIG. 14C that a keyboard-mouse of an Android device traverses to a PC. For a keyboard-mouse traversal method, refer to steps S1605 to S1615 in the embodiment of FIG. 16. Details are not described herein again.

It should be noted that, the application scenario shown in FIG. 14A to FIG. 14C relates to keyboard-mouse traversal between the PC and only one Android device. Different from the application scenario shown in FIG. 14A to FIG. 14C, the application scenarios shown in FIG. 17A to FIG. 17C and FIG. 18A to FIG. 18C relate to keyboard-mouse traversal between the PC and a plurality of Android devices. Therefore, before the keyboard-mouse of the Android device I traverses to the PC, a keyboard-mouse of the PC may have traversed to an Android device II. In this case, the PC is in a traversing state, that is, an input framework of the PC is performing event interception to intercept a keyboard-mouse event to be reported.

To ensure that the PC can execute a keyboard-mouse event after the keyboard-mouse of the Android device I traverses to the PC, in an embodiment, after S 1606, after receiving a traversal instruction sent by the Android device I, a keyboard-mouse service module of the PC sends an event interception stop indication to the input framework of the PC, to indicate the input framework of the PC to stop intercepting a keyboard-mouse event.

If the current mouse pointer does not belong to the local keyboard-mouse, it indicates that the current mouse pointer traverses from a screen of the PC, and step S1905 is performed.

**In** some embodiments, in a keyboard-mouse traversal process, a device ID of a device to which the keyboard-mouse belongs may be packaged into a data packet together with a keyboard-mouse event. For example, when the keyboard-mouse of the Android device I traverses to the PC, the keyboard-mouse service module of the Android device I packages a device ID of the Android device I and a keyboard-mouse event together into a data packet, and sends the data packet to the keyboard-mouse service module of the PC. The keyboard-mouse service module of the PC parses out the keyboard-mouse event and the device ID from the received data packet, and may determine, based on the device ID, that the current keyboard-mouse traverses from the Android device I.

Correspondingly, an implementation of determining whether a keyboard-mouse is a local keyboard-mouse may include:

A keyboard-mouse service module obtains a device ID corresponding to a current keyboard-mouse event, and determines, based on the device ID, whether the keyboard-mouse is the local keyboard-mouse.

It should be noted that, when the Android device determines whether a keyboard-mouse is a local keyboard-mouse, the keyboard-mouse service module of the Android device performs the foregoing determining step. when the PC device determines whether a keyboard-mouse is a local keyboard-mouse, the keyboard-mouse service module of the PC performs the foregoing determining step.

In some other implementations, in a keyboard-mouse traversal process, the device ID may be carried in each transmitted data packet of a keyboard-mouse event. Alternatively, the device ID may be carried in a data packet of a keyboard-mouse event that is transmitted for the first time, and the device ID is not carried in a data packet of a keyboard-mouse event that is transmitted subsequently. In some other implementations, the device ID may alternatively be carried in a traversal instruction sent when keyboard-mouse traversal occurs for the first time.

In some other embodiments, a traversing direction of keyboard-mouse traversal may also be packaged into a data packet together with a keyboard-mouse event. For example, if the keyboard-mouse of the Android device I traverses to the PC, and the Android device I is on the left side of the PC, a traversing direction is rightward. The keyboard-mouse service module of the Android device I packages the traversing direction (rightward) and a keyboard-mouse event together into a data packet, and sends the data packet to the keyboard-mouse service module of the PC. The keyboard-mouse service module of the PC parses out the keyboard-mouse event and the traversing direction (rightward) from the received data packet, and may determine, based on the traversing direction, that the current keyboard-mouse traverses from the Android device I.

In the application scenarios shown in FIG. 17A to FIG. 17C and FIG. 18A to FIG. 18C, a keyboard-mouse of the Android device II first traverses to the PC and then traverses to the Android device I. When the mouse pointer traverses back from the Android device I to the PC, if based only on the traversing direction, it may be determined incorrectly that the current keyboard-mouse belongs to the Android device I. To prevent incorrect determination, in some other embodiments, a traversing direction of keyboard-mouse traversal and a device ID to which the keyboard-mouse belongs may be packaged into a data packet together with a keyboard-mouse event. In this manner, a terminal to which the keyboard-mouse belongs can be determined based on the traversing direction and determined based on the device ID. Double determination can effectively prevent incorrect determination, which helps distinguish between different traversal cases more clearly.

In some other implementations, a preset function may be invoked to determine whether the keyboard-mouse is a local keyboard-mouse or a virtual keyboard-mouse. For example, the preset function may return a function value. When the function value is false, it indicates that the keyboard-mouse is a virtual keyboard-mouse. When the function value is "true", it indicates that the keyboard-mouse is a local keyboard-mouse.

S 1905. If the current mouse pointer does not belong to the local keyboard-mouse (the keyboard-mouse of the Android device I), the keyboard-mouse service module of the Android device I sends a return instruction (a second instruction) to the keyboard-mouse service module of the PC, and ends traversal.

The keyboard-mouse service module of the Android device I may end traversal according to steps S1617 to S1619.

Correspondingly, the keyboard-mouse service module of the PC receives the return instruction. The keyboard-mouse service module of the Android device I notifies, by using the return instruction, the keyboard-mouse service module of the PC that the mouse pointer traverses back to the PC.

S 1906. The keyboard-mouse service module of the PC receives the return instruction, and determines whether the currently traversing mouse pointer belongs to a local keyboard-mouse (the keyboard-mouse of the PC).

A principle of determining whether the keyboard-mouse is the local keyboard-mouse in this step is the same as that in S1904. For details, refer to the descriptions in S1904. The details are not described herein again.

If the currently traversing mouse pointer belongs to the local keyboard-mouse (the keyboard-mouse of the PC), it is the case shown in FIG. 9A to FIG. 9C that a keyboard-mouse of a PC traverses back from an Android device to the PC. For a keyboard-mouse traversal method, refer to steps S1616 to S1620 in the embodiment of FIG. 16. Details are not described herein again.

If the currently traversing mouse pointer does not belong to the local keyboard-mouse (the keyboard-mouse of the PC), it indicates that the current mouse pointer traverses from the Android device II, and S1907 is performed.

It should be noted that, in this embodiment of this application, when the keyboard-mouse service module of the PC determines that the current mouse pointer does not belong to the local keyboard-mouse, the keyboard-mouse service module of the PC may determine, based on a type of an instruction received from the Android device I, whether the currently traversing keyboard-mouse belongs to the Android device I or the Android device II. For example, if a traversal instruction is received, it indicates that the currently traversing keyboard-mouse belongs to the Android device I. If a return instruction is received, it indicates that the currently traversing keyboard-mouse belongs to the Android device II. Certainly, determination may alternatively be performed in combination with the device ID in the data packet.

S1907. The keyboard-mouse service module of the PC sends a switching notification (a third instruction) to a keyboard-mouse service module of the Android device II.

S1908. The keyboard-mouse service module of the Android device II receives the switching notification, and sends a data packet of a keyboard-mouse event to the keyboard-mouse service module of the PC.

Then, the keyboard-mouse service module of the PC detects the data packet of the keyboard-mouse event, and performs steps S1613 to S1615.

A case corresponding to this step is the same as the case shown in FIG. 14A to FIG. 14C that a keyboard-mouse of an Android device traverses to a PC. A principle of this step is the same as that of S1613 to S1615. For details, refer to the descriptions of S1613 to S1615. The details are not described herein again.

It should be noted that, to simplify steps, FIG. 19 shows only parts of software architectures in the PC and the Android device, which does not represent that other modules that are not shown do not participate in keyboard-mouse traversal. For modules participating in keyboard-mouse traversal, refer to descriptions in other embodiments.

For example, in some application scenarios, in the embodiment of FIG. 19, the PC may be a second device, the Android device I may be a first device, and the Android device II may be a third device. Alternatively, the PC may be the second device, the Android device II may be the first device, and the Android device I may be the third device. In the application scenario, the second device is communicatively connected to the first device and the third device.

In this embodiment of this application, in an application scenario in which keyboard-mouse traversal occurs between a plurality of terminal devices, for a case that the mouse pointer traverses from the Android device I to the screen of the PC, the Android device I side determines whether the keyboard-mouse is the local keyboard-mouse, to distinguish whether the case is that the keyboard-mouse of the Android device I traverses to the PC or the keyboard-mouse traverses back from the Android device I to the PC. For the case that the keyboard-mouse traverses back from the Android device I to the PC, the PC side determines whether the keyboard-mouse is the local keyboard-mouse, to distinguish whether the case is that the keyboard-mouse traverses back from the Android device I to the PC or the keyboard-mouse of the Android device II traverses to the PC. The foregoing method can distinguish between scenarios in which a plurality of terminal device implement keyboard-mouse traversal, thereby avoiding traversal status confusion, and ensuring reliability of keyboard-mouse traversal.

The following describes the keyboard-mouse traversal method in the second case. FIG. 20 is a diagram of an interaction procedure of a keyboard-mouse traversal method according to an embodiment of this application. The method shown in FIG. 20 may be applied to a case that a mouse pointer traverses from a screen of an Android device to a screen of a PC. For example rather than limitation, as shown in FIG. 20, the keyboard-mouse traversal method may include the following steps.

S2001. A keyboard-mouse service module of a PC monitors a keyboard-mouse displacement of a keyboard-mouse event.

A principle of this step is the same as that of S1614. For details, refer to the descriptions of S1614. The details are not described herein again.

S2002. The keyboard-mouse service module of the PC determines, based on a detected keyboard-mouse displacement, whether a mouse pointer currently reaches an edge of a screen.

For a method for determining whether the mouse pointer reaches an edge of the screen, refer to the descriptions in the embodiment of S1301 to S1305. Details are not described herein again.

S2003. If the mouse pointer currently reaches an edge of the screen, determine whether there is a traversal-available device currently at the edge of the screen.

For example, if there is a tablet 13 on a left side of the PC, and there is no connected device on a right side of the PC, when the mouse pointer on the screen of the PC currently reaches a left edge of the screen, there is the traversal-available tablet 13, and S2004 is performed. When the mouse pointer on the screen of the PC currently reaches a right edge of the screen, there is no traversal-available device. In this case, keyboard-mouse traversal does not need to be considered.

S2004. If there is a traversal-available device currently at the edge of the screen, determine whether the current mouse pointer belongs to a local keyboard-mouse (a keyboard-mouse of the PC).

It can be learned from the application scenarios shown in FIG. 17A to FIG. 17C and FIG. 18A to FIG. 18C that a mouse pointer on a screen of a PC may be a mouse pointer of a keyboard-mouse of the PC, or may be a mouse pointer that traverses from an Android device.

If the current mouse pointer belongs to the local keyboard-mouse (the keyboard-mouse of the PC), it is the case shown in FIG. 9A to FIG. 9C that a keyboard-mouse of a PC traverses to an Android device. For a keyboard-mouse traversal method, refer to steps S1205 to S1215 in the embodiment of FIG. 12. Details are not described herein again.

It should be noted that, FIG. 20 shows a case that the mouse pointer traverses from a left side of the screen of the PC to an Android device I. Correspondingly, steps S1205 to S1215 are performed between the PC and the Android device I. It may be understood that, if the mouse pointer traverses from a right side of the screen of the PC to an Android device II, steps S1205 to S1215 are performed between the PC and the Android device II.

If the current mouse pointer does not belong to the local keyboard-mouse (the keyboard-mouse of the PC), step S2005 is performed.

S2005. If the current mouse pointer does not belong to the local keyboard-mouse (the keyboard-mouse of the PC), determine whether the current mouse pointer belongs to a receiver.

The receiver represents an Android device corresponding to a current traversing direction. For example, in the communication system shown in FIG. 1, if the current mouse pointer traverses leftwards from the screen of the computer 11, as the tablet 13 is on the left side of the computer 11, the tablet 13 is a receiver. If the current mouse pointer traverses rightwards from the screen of the computer 11, as the mobile phone 12 is on the right side of the computer 11, the mobile phone 12 is a receiver.

If the current mouse pointer belongs to the receiver, the receiver is a source, and it is the case shown in FIG. 14A to FIG. 14C that a keyboard-mouse of an Android device traverses back from a PC to the Android device. For a keyboard-mouse traversal method, refer to steps S1616 to S1620 in the embodiment of FIG. 16. Details are not described herein again.

The source is an Android device to which the current mouse pointer belongs. For example, in the communication system shown in FIG. 1, if the current mouse pointer belongs to the mobile phone 12, the mobile phone 12 is a source, indicating that the keyboard-mouse of the mobile phone 12 first traverses to the computer 11 and then traverses from the computer 11 to the tablet 13. If the current mouse pointer belongs to the tablet 13, the tablet 13 is a source, indicating that the keyboard-mouse of the tablet 13 first traverses to the computer 11 and then traverses back from the computer 11 to the tablet 13.

If the current mouse pointer does not belong to the receiver, it indicates that the current mouse pointer traverses from the Android device II, and S2006 is performed.

It should be noted that, FIG. 20 shows a case that the mouse pointer traverses from the left side of the screen of the PC to the Android device I. In this case, the Android device I is a receiver, and the Android device II is a source.

S2006. Send a transfer instruction (a first instruction) to the source (the Android device II) if the current mouse pointer does not belong to the receiver (the Android device I).

Correspondingly, the source can receive the transfer instruction. The transfer instruction is used to notify the source that a receiver of a keyboard-mouse event changes.

This step represents a scenario in which a keyboard-mouse traverses from an Android device to another Android device via a PC. For example, in the communication system shown in FIG. 1, if the current mouse pointer on the screen of the computer 11 belongs to the keyboard-mouse of the mobile phone 12 (a source), when the current mouse pointer traverses leftwards to the tablet 13 (a receiver), it is equivalent to that a receiver of keyboard-mouse traversal changes from the computer 11 to the tablet 13.

S2007. After receiving the transfer instruction, a keyboard-mouse service module of the source (the Android device II) sends a traversal instruction to a keyboard-mouse service module of the receiver (the Android device I).

In some implementations, the source may send the traversal instruction to the receiver via the PC, that is, the source first sends the traversal instruction to the PC, and then the PC forwards the traversal instruction to the receiver.

In some other implementations, the source may request to directly establish a keyboard-mouse connection to the receiver. After the keyboard-mouse connection is established, the source directly sends the traversal instruction to the receiver.

S2008. After the receiver (the Android device I) receives the traversal instruction, if a current traversal status is non-traversing, the receiver returns acknowledgment information to the keyboard-mouse service module of the source (the Android device II).

In some scenarios, if the current traversal status of the receiver is traversing, occupancy information is returned to the keyboard-mouse service module of the source, to notify the source that the receiver is currently in a traversing state. In this case, the source may notify, on the screen, a user that keyboard-mouse traversal cannot be performed at this time.

It should be noted that, in this embodiment of this application, if a device is currently in a traversing state, the device does not perform keyboard-mouse traversal with another device.

S2009. The keyboard-mouse service module of the receiver (the Android device I) updates the traversal status based on the traversal instruction.

In this step, updating the traversal status means updating the traversal status from non-traversing to traversing.

S2010. The keyboard-mouse service module of the receiver (the Android device I) determines a traversal location based on the traversal instruction.

In this step, for a method for determining the traversal location by the receiver, refer to the descriptions of the embodiment of S1301 to S1305.

S2011. After receiving the acknowledgment information, the keyboard-mouse service module of the source (the Android device II) packages, according to a preset protocol, a keyboard-mouse event reported by an input framework of the source (the Android device II), to obtain a data packet of the keyboard-mouse event.

S2012. The source (the Android device II) sends the data packet of the keyboard-mouse event to the keyboard-mouse service module of the receiver (the Android device I).

In this embodiment of this application, the communication system uses the PC as a communication center. In other words, interaction between the Android device I and the Android device II all needs to pass through the PC. In an implementation of this step, the keyboard-mouse service module of the source sends the data packet of the keyboard-mouse event to a communication module of the source, and the communication module of the source sends the data packet to a communication module of the PC. The communication module of the PC forwards the data packet to a communication module of the receiver. The communication module of the receiver sends the data packet to the keyboard-mouse service module of the receiver.

To improve communication efficiency, in another implementation of step S2012, the source and the receiver establish a communication connection via the PC. After the communication connection between the source and the receiver is established, the keyboard-mouse service module of the source sends the data packet of the keyboard-mouse event to the communication module of the source, and the communication module of the source sends the data packet to the communication module of the receiver. The communication module of the receiver sends the data packet to the keyboard-mouse service module of the receiver.

It should be noted that, to simplify steps of the diagram, the foregoing data exchange process is omitted in S2012 in FIG. 20.

S2013. The keyboard-mouse service module of the receiver (the Android device I) responds to the keyboard-mouse event.

S2014. The keyboard-mouse service module of the receiver (the Android device I) monitors keyboard-mouse traversal.

A principle of steps S2013 to S2014 is the same as that of steps S1213 to S1214. For details, refer to the descriptions of steps S1213 to S1214. The details are not described herein again.

In some scenarios, a communication fault may occur between the source and the receiver, and cuts off the communication connection between the source and the receiver. In this scenario, S2015 is performed.

S2015. If the communication connection between the source terminal and the receiver is cut off, the source and the receiver respectively perform state restoration.

The state restoration of the source includes: The source stops sending a data packet of a keyboard-mouse event to the receiver, restores the mouse pointer of the keyboard-mouse of the source to a first preset location on a screen of the source, and maintains a communication connection to the PC. For example, the first preset location may be a center location of the screen of the source, or a location on the screen of the source from which the keyboard-mouse initially traverses. The state restoration of the receiver includes restoring a mouse pointer of a keyboard-mouse of the receiver to a second preset location on a screen of the receiver, and maintaining a communication connection to the PC. For example, the second preset location may be a center location of the screen of the receiver, or a location of the mouse pointer on the screen of the receiver before keyboard-mouse traversal occurs. In other words, after the state restoration, mouse pointers of respective keyboard-mouses of the source and the receiver return to respective screens.

It should be noted that, to simplify steps, FIG. 20 shows only parts of software architectures in the PC and the Android device, which does not represent that other modules that are not shown do not participate in keyboard-mouse traversal. For modules participating in keyboard-mouse traversal, refer to descriptions in other embodiments.

It should be noted that, FIG. 20 shows a case that the Android device II is a source terminal and the Android device I or the PC is a receiver. A principle of a case that the Android device I is a source terminal and the Android device II or the PC is a receiver is similar thereto, and details are not described herein again.

For example, in some application scenarios, in the embodiment of FIG. 20, the PC may be a second device, the Android device I may be a first device, and the Android device II may be a third device. Alternatively, the PC may be the second device, the Android device II may be the first device, and the Android device I may be the third device. In the application scenario, the second device is communicatively connected to the first device and the third device.

In this embodiment of this application, in an application scenario in which keyboard-mouse traversal occurs between a plurality of terminal devices, for a case that the mouse pointer traverses from the screen of the PC to the screen of the Android device I, the PC side determines whether the keyboard-mouse is the local keyboard-mouse, to distinguish whether the case is that the keyboard-mouse of the PC traverses to the Android device I, or the keyboard-mouse of the Android device II traverses to the Android device I. The foregoing method can distinguish between scenarios in which a plurality of terminal device implement keyboard-mouse traversal, thereby avoiding traversal status confusion, and ensuring reliability of keyboard-mouse traversal.

In this embodiment of this application, after the mouse pointer traverses, the traversing mouse pointer and a local mouse pointer may be combined into one mouse pointer. In this way, mouse pointer confusion can be avoided.

It should be noted that, the foregoing embodiments are all described by using a PC as a communication center. In an actual application, an Android device may be used as a center, that is, the Android device is connected to a plurality of terminal devices, and the Android device initiates a keyboard-mouse connection. In other words, the Android device is an initiator, and a PC is a receiver. A principle of a keyboard-mouse traversal manner using an Android device as a communication center is the same as that of the keyboard-mouse traversal manner using a PC as a communication center. Details are not described in embodiments of this application again.

The embodiments described in this application may be independent solutions, or may be combined based on intrinsic logic. These solutions all fall within the protection scope of this application.

The solutions provided in embodiments of this application are mainly described above from a perspective of method steps. It may be understood that, to implement the foregoing functions, the electronic device implementing the method includes corresponding hardware structures and/or software modules for performing the functions. A person skilled in the art may be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions. When the computer instructions are run on an electronic device, the electronic device is enabled to perform the foregoing related method steps to implement the method in the foregoing embodiments.

An embodiment further provides a computer program product. The computer-readable storage medium stores program code. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the gazing point estimation method in the foregoing method embodiments.

The electronic device, the computer-readable storage medium, the computer program product, and the chip provided in embodiments are all configured to perform the corresponding method provided above. Therefore, for beneficial effect that can be achieved by them, refer to the beneficial effect of the corresponding method provided above. Details are not described herein again.

In the several embodiments provided in this application, it should be understood that the disclosed apparatus and method may be implemented in other manners. For example, the described apparatus embodiment is merely an example. For example, division of modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A keyboard-mouse traversal method, comprising:

    detecting, by a first device when a cursor of an input device is displayed on a screen of the first device, a first operation acting on the input device, wherein the first operation is used to move the cursor displayed on the screen of the first device towards a first direction, and the input device is configured to input a control instruction;
    controlling, by the first device in response to the first operation, the cursor to move out of the screen of the first device and enter a screen of a second device for displaying, wherein the second device is located in the first direction of the first device and establishes a connection to the first device;
    detecting, by the second device, a second operation acting on the input device, wherein the second operation is used to move the cursor displayed on the screen of the second device towards a second direction; and
    controlling, by the second device in response to the second operation, the cursor to move out of the screen of the second device and enter a screen of a third device for displaying, wherein the third device is located in the second direction of the second device and establishes a connection to the second device.

2. The method according to claim 1, wherein controlling, by the first device in response to the first operation, the cursor to move out of the screen of the first device and enter the screen of the second device for displaying comprises:

    finding, by the first device in response to the first operation, the second device in the first direction that establishes the connection to the first device; and
    controlling, by the first device, the cursor to move out of the screen of the first device and enter the screen of the second device for displaying.

3. The method according to claim 1 or 2, wherein the method further comprises:

    determining, by the first device in response to the first operation, whether the input device is connected to the first device;
    updating, by the first device, a traversal status of the first device to traversing if the input device is connected to the first device; and
    updating, by the second device, a traversal status of the second device to traversing.

4. The method according to claim 3, wherein after the first device determines, in response to the first operation, whether the input device is connected to the first device, the method further comprises:

    detecting, by the first device, a third operation if the input device is connected to the first device, wherein the third operation is used to input the control instruction;
    intercepting, by the first device, a first input event corresponding to the third operation;
    sending, by the first device, the first input event to the second device; and
    executing, by the second device, the control instruction corresponding to the first input event after receiving the first input event.

5. The method according to any one of claims 1 to 4, wherein controlling, by the second device in response to the second operation, the cursor to move out of the screen of the second device and enter the screen of the third device for displaying comprises:

    finding, by the second device in response to the second operation, the third device in the second direction that establishes the connection to the second device; and
    controlling, by the second device, the cursor to move out of the screen of the second device and enter the screen of the third device for displaying.

6. The method according to claim 3, wherein after the first device determines, in response to the first operation, whether the input device is connected to the first device, the method further comprises:

    determining, by the second device in response to a fourth operation, whether the first device is the same as the third device if the input device is connected to the first device, wherein the fourth operation is used to move the cursor displayed on the screen of the second device towards the second direction;
    updating, by the first device, the traversal status of the first device to non-traversing if the first device is the same as the third device; and
    updating, by the second device, the traversal status of the second device to non-traversing.

**7.** The method according to claim 6, wherein after the second device determines, in response to the fourth operation, whether the first device is the same as the third device, the method further comprises:

stopping, by the first device, intercepting the first input event corresponding to the third operation if the first device is the same as the third device; and
executing, by the first device, the control instruction corresponding to the first input event.

**8.** The method according to claim 6, wherein after the second device determines, in response to the fourth operation, whether the first device is the same as the third device, the method further comprises: controlling, by the first device, the cursor to be displayed at a first preset location on the screen of the first device if the first device is the same as the third device.

**9.** The method according to claim 6, wherein after the second device determines, in response to the fourth operation, whether the first device is the same as the third device, the method further comprises:

sending, by the second device, a first instruction to the first device if the first device is different from the third device; and
controlling, by the first device after receiving the first instruction, the cursor to move out of the screen of the second device and enter the screen of the third device for displaying.

**10.** The method according to claim 9, wherein controlling, by the first device after receiving the first instruction, the cursor to move out of the screen of the second device and enter the screen of the third device for displaying comprises:

establishing, by the first device, a connection to the third device after receiving the first instruction; and
controlling, by the first device after establishing the connection to the third device, the cursor to move out of the screen of the second device and enter the screen of the third device for displaying.

**11.** The method according to claim 10, wherein after the first device establishes the connection to the third device, the method further comprises:

updating, by the second device, the traversal status of the second device to non-traversing; and
updating, by the third device, a traversal status of the third device to traversing.

**12.** The method according to claim 10, wherein after the first device establishes the connection to the third device, the method further comprises:

controlling, by the first device, the cursor to be displayed at a first preset location on the screen of the first device if the first device is disconnected from the third device; and
maintaining, by the first device, a communication connection to the second device.

**13.** The method according to claim 10, wherein after the first device establishes the connection to the third device, the method further comprises:

stopping, by the first device, intercepting the input event corresponding to the third operation if the first device is disconnected from the third device; and
executing, by the first device, the control instruction corresponding to the input event.

**14.** The method according to claim 3, wherein after the first device determines, in response to the first operation, whether the input device is connected to the first device, the method further comprises: updating, by the first device, the traversal status of the first device to non-traversing if the input device is not connected to the first device.

**15.** The method according to claim 14, wherein after the first device determines, in response to the first operation, whether the input device is connected to the first device, the method further comprises:

sending, by the first device, a second instruction to the second device if the input device is not connected to the first device;
determining, by the second device after receiving the second instruction, whether the input device is connected to the second device; and
controlling, by the second device if the input device is connected to the second device, the cursor to move out of the screen of the first device and display the cursor at a second preset location on the screen of the second device.

**16.** The method according to claim 15, wherein after it is determined whether the input device is connected to the second device, the method further comprises:

detecting, by the second device, a fifth operation if the input device is connected to the second device, wherein the fifth operation is used to input the control instruction;
stopping, by the second device, intercepting a second input event corresponding to the fifth operation; and

executing, by the second device, the control instruction corresponding to the second input event.

**17.** The method according to claim 15, wherein after it is determined whether the input device is connected to the second device, the method further comprises: updating, by the second device, the traversal status of the second device to non-traversing if the input device is connected to the second device.

**18.** The method according to claim 15, wherein after it is determined whether the input device is connected to the second device, the method further comprises:

determining, by the second device, a first traversal location on the screen of the second device in response to the sixth operation if the input device is connected to the second device, wherein the sixth operation is used to move the cursor displayed on the screen of the second device towards the second direction;
sending, by the second device, the first traversal location to the third device;
determining, by the third device, a second traversal location on the screen of the third device based on the first traversal location;
controlling, by the second device, the cursor to move out of the screen of the second device from the first traversal location; and
controlling, by the third device, the cursor to enter the screen of the third device from the second traversal location.

**19.** The method according to claim 18, wherein after the sixth operation is responded to, the method further comprises:
updating, by the second device, the traversal status of the second device to traversing.

**20.** The method according to claim 18, wherein after the sixth operation is responded to, the method further comprises:

detecting, by the second device, a seventh operation, wherein the seventh operation is used to input the control instruction;
intercepting, by the second device, a third input event corresponding to the seventh operation;
sending, by the second device, the third input event to the third device; and
executing, by the third device, the control instruction corresponding to the third input event after receiving the third input event.

**21.** The method according to claim 15, wherein after it is determined whether the input device is connected to the second device, the method further comprises:

determining, by the second device if the input device is not connected to the second device, a fourth device connected to the input device;
sending, by the second device, a third instruction to the fourth device; and
controlling, by the fourth device after receiving the third instruction, the cursor to move out of the screen of the first device and enter the screen of the second device for displaying.

**22.** The method according to any one of claims 1 to 21, wherein controlling, by the first device in response to the first operation, the cursor to move out of the screen of the first device and enter the screen of the second device for displaying comprises:

determining, by the first device in response to the first operation, whether the cursor on the screen of the first device reaches an edge of the screen; and
controlling, by the first device if the cursor on the screen of the first device reaches the edge of the screen, the cursor to move out of the screen of the first device and enter the screen of the second device for displaying.

**23.** A communication system, wherein the communication system comprises a first device, a second device, and a third device;

the second device is connected to the first device and the third device; and
the first device, the second device, and the third device in the communication system are configured to perform the method according to any one of claims 1 to 22.

**24.** A computer-readable storage medium, wherein the computer-readable storage medium stores a computer program, and the computer program, when executed by a processor, implements the method according to any one of claims 1 to 22.

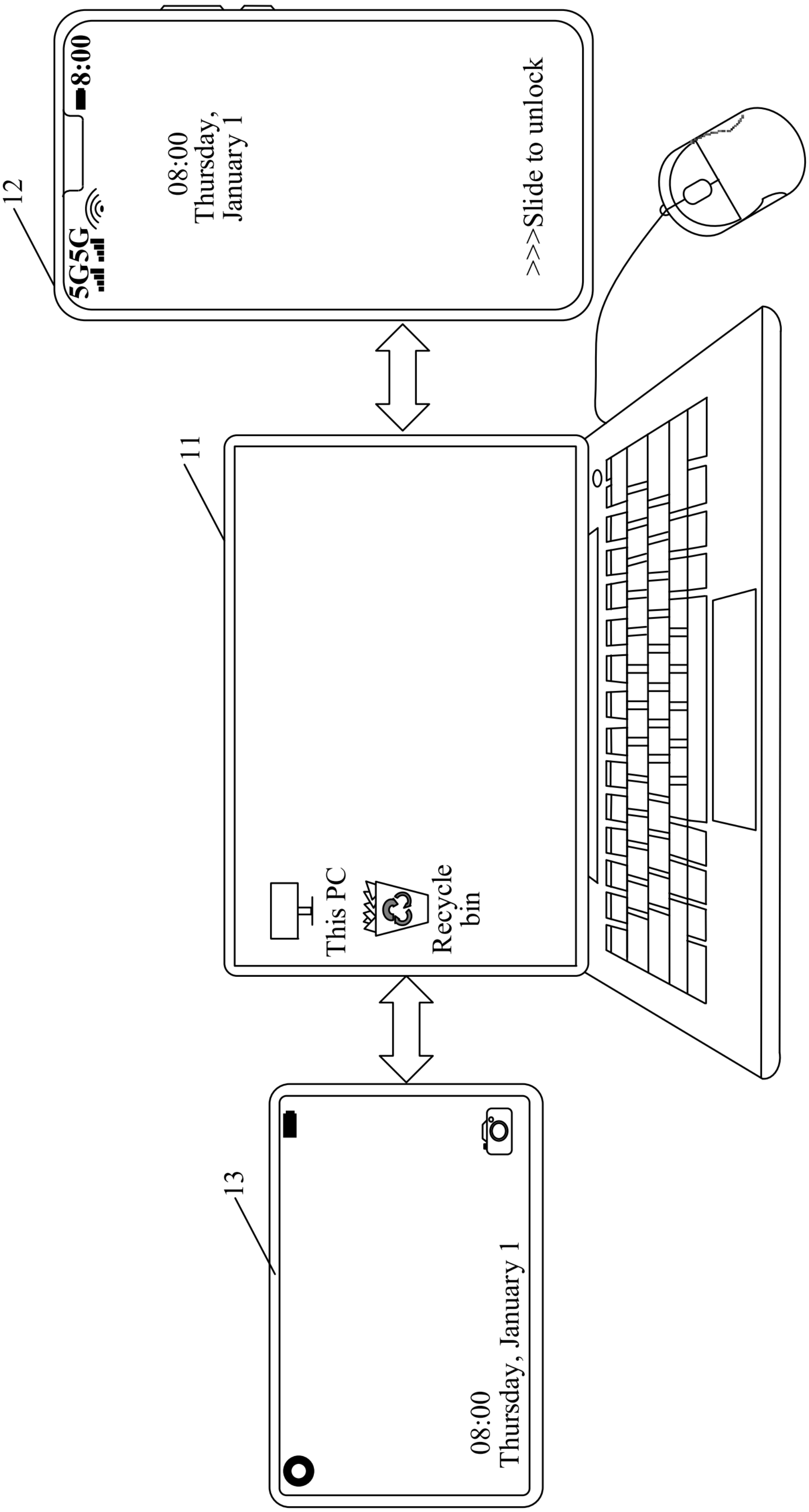
12
5G5G
8:00
08:00
Thursday,
January 1
>>>Slide to unlock
11
This PC
Recycle
bin
13
08:00
Thursday, January 1

FIG. 1

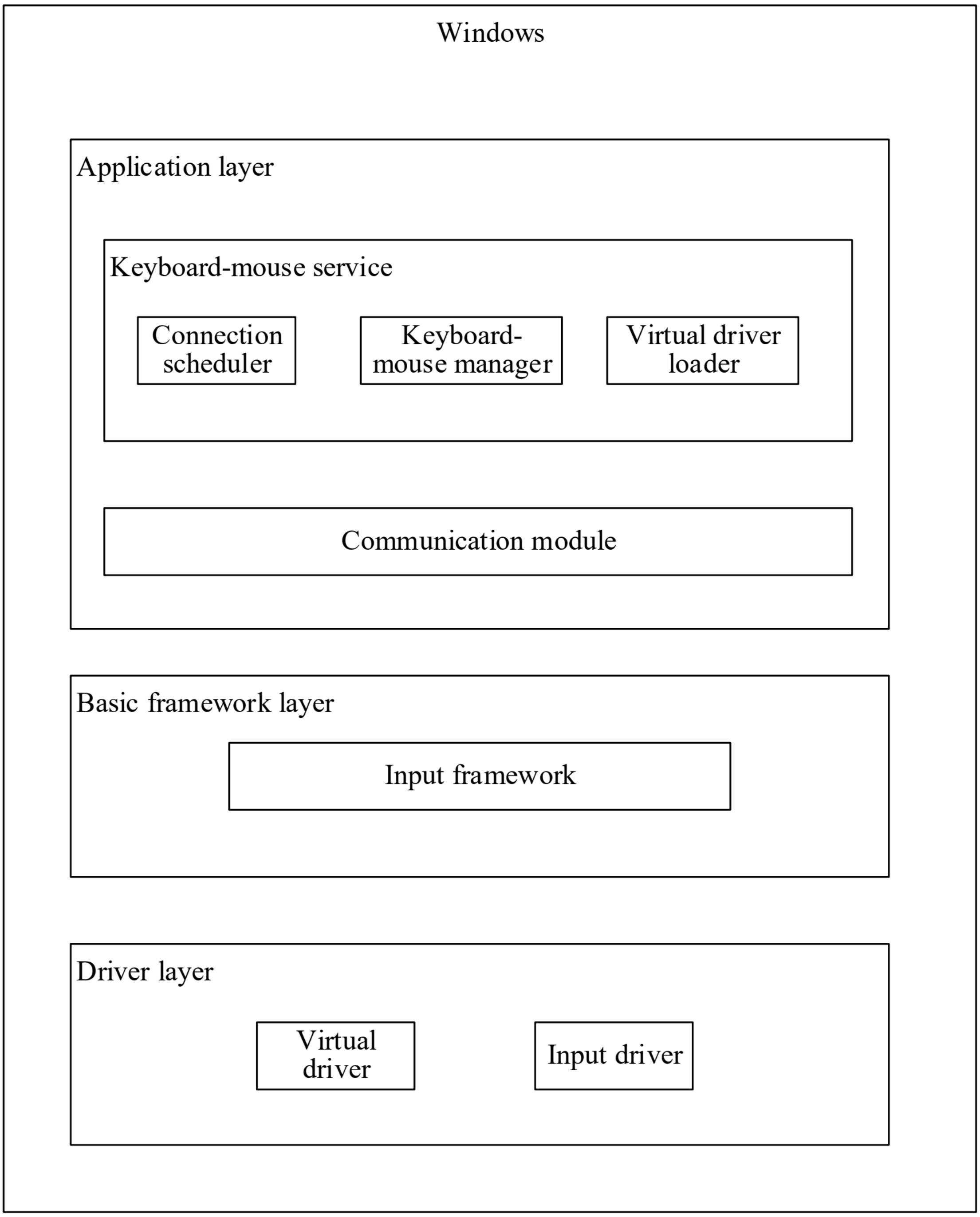
Windows
Application layer
Keyboard-mouse service
Connection scheduler
Keyboard-mouse manager
Virtual driver loader
Communication module
Basic framework layer
Input framework
Driver layer
Virtual driver
Input driver

FIG. 2

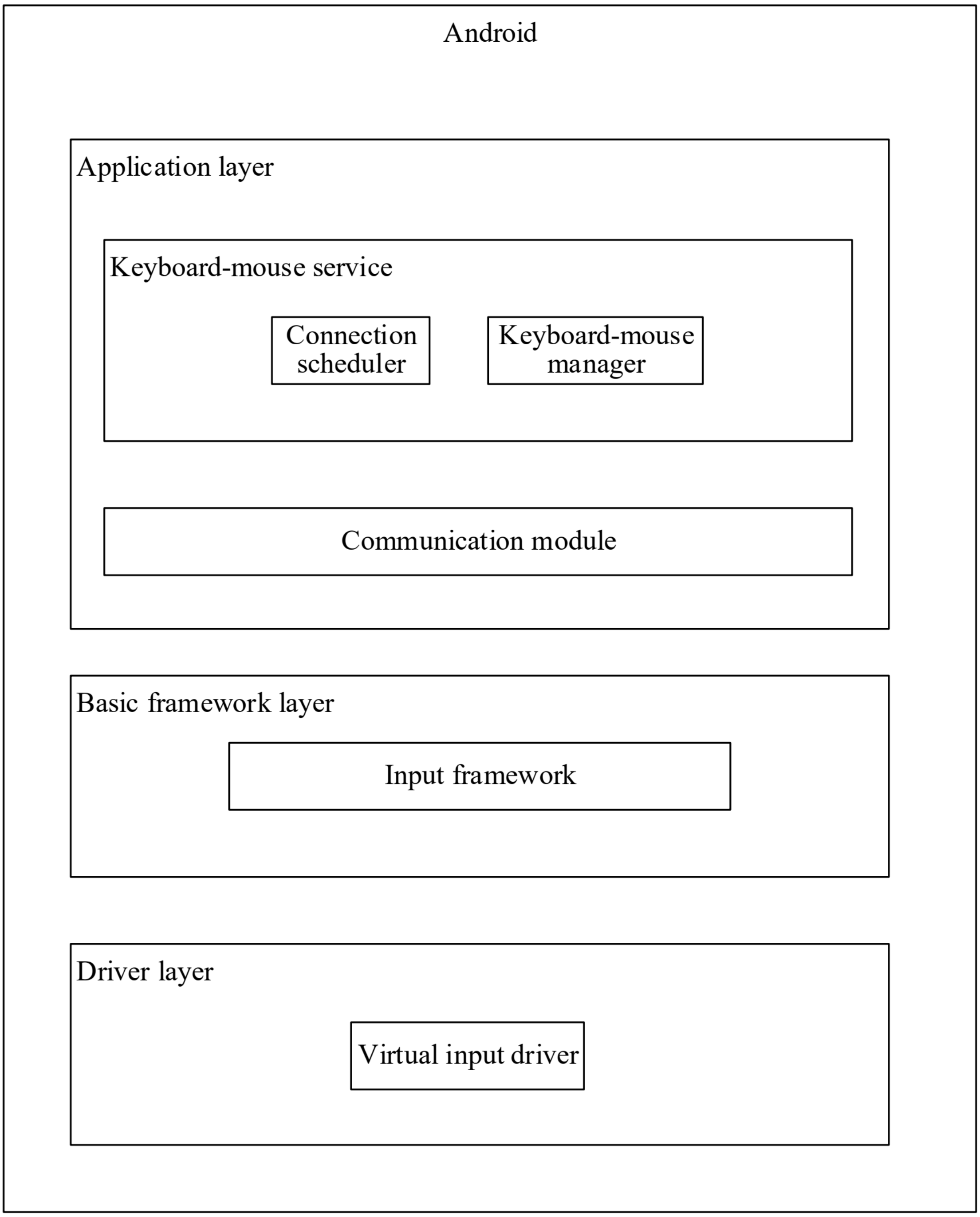
Android
Application layer
Keyboard-mouse service
Connection scheduler
Keyboard-mouse manager
Communication module
Basic framework layer
Input framework
Driver layer
Virtual input driver

FIG. 3

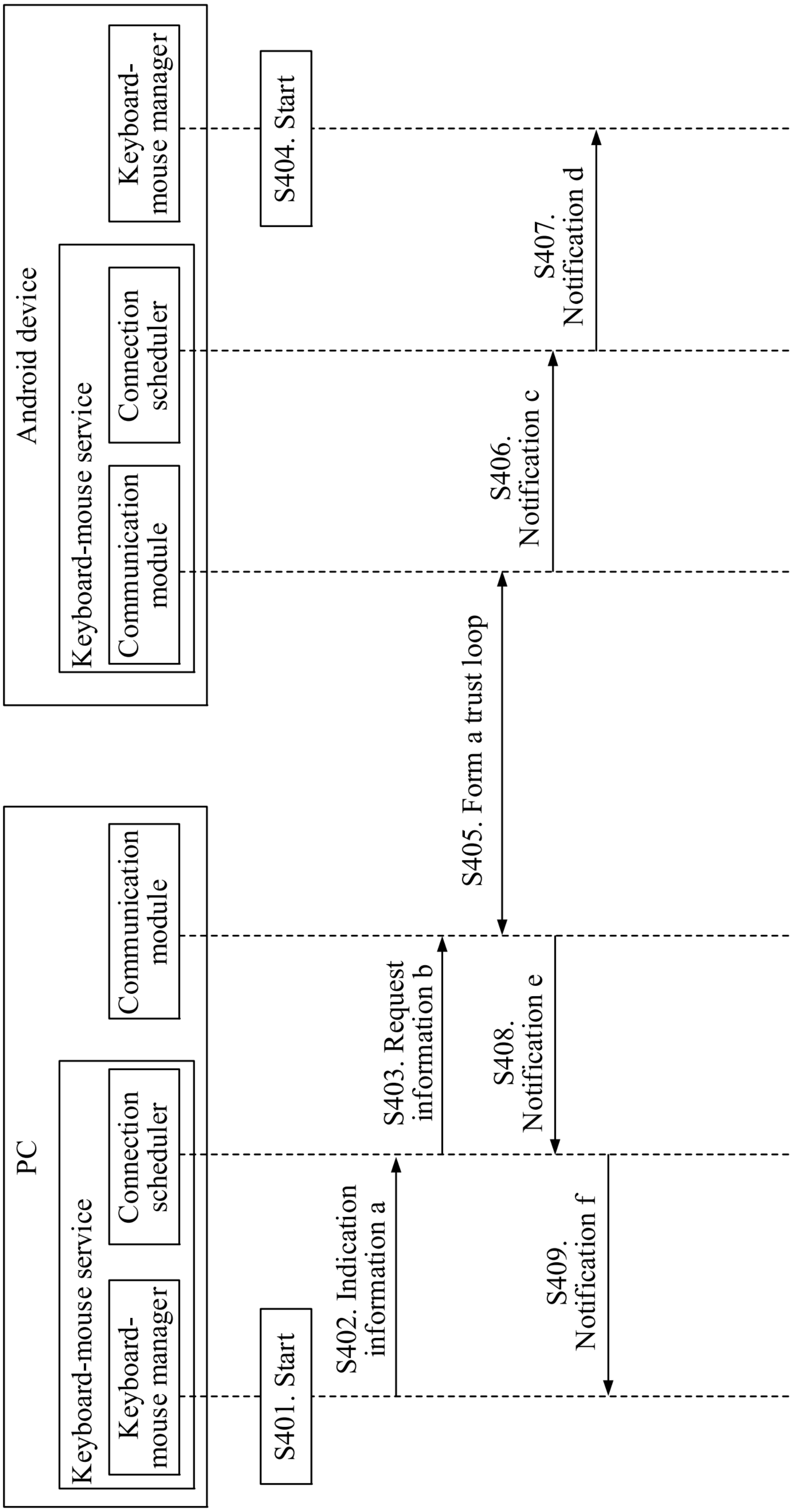
PC
Keyboard-mouse service
Keyboard-mouse manager
Connection scheduler
Communication module
S401. Start
S402. Indication information a
S403. Request information b
S405. Form a trust loop
S408. Notification e
S409. Notification f
Android device
Keyboard-mouse service
Communication module
Connection scheduler
Keyboard-mouse manager
S404. Start
S406. Notification c
S407. Notification d

FIG. 4

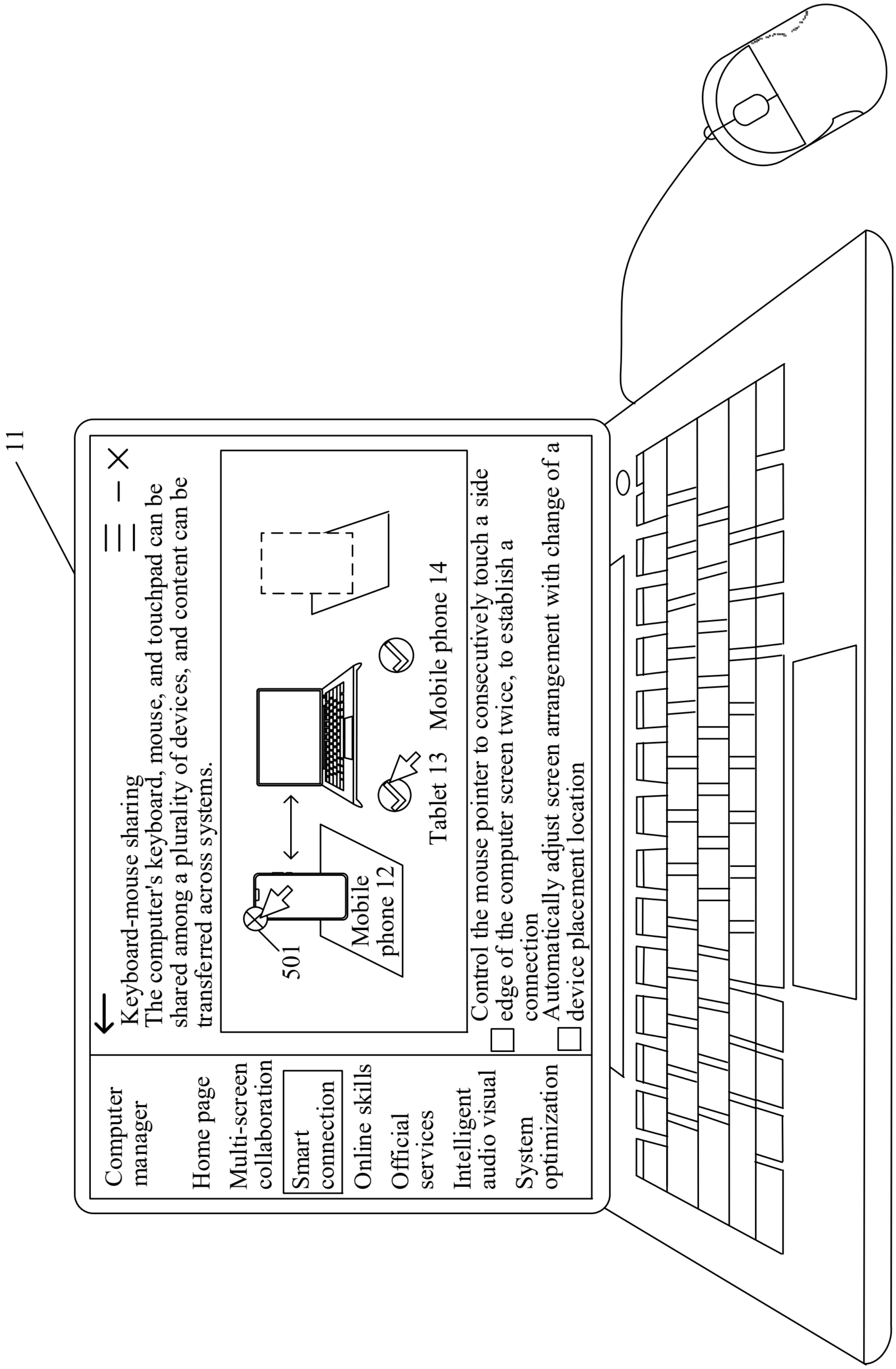
11
Computer manager
Home page
Multi-screen collaboration
Smart connection
Online skills
Official services
Intelligent audio visual
System optimization
Keyboard-mouse sharing
The computer's keyboard, mouse, and touchpad can be shared among a plurality of devices, and content can be transferred across systems.
501
Mobile phone 12
Tablet 13
Mobile phone 14
Control the mouse pointer to consecutively touch a side edge of the computer screen twice, to establish a connection
Automatically adjust screen arrangement with change of a device placement location

FIG. 5A

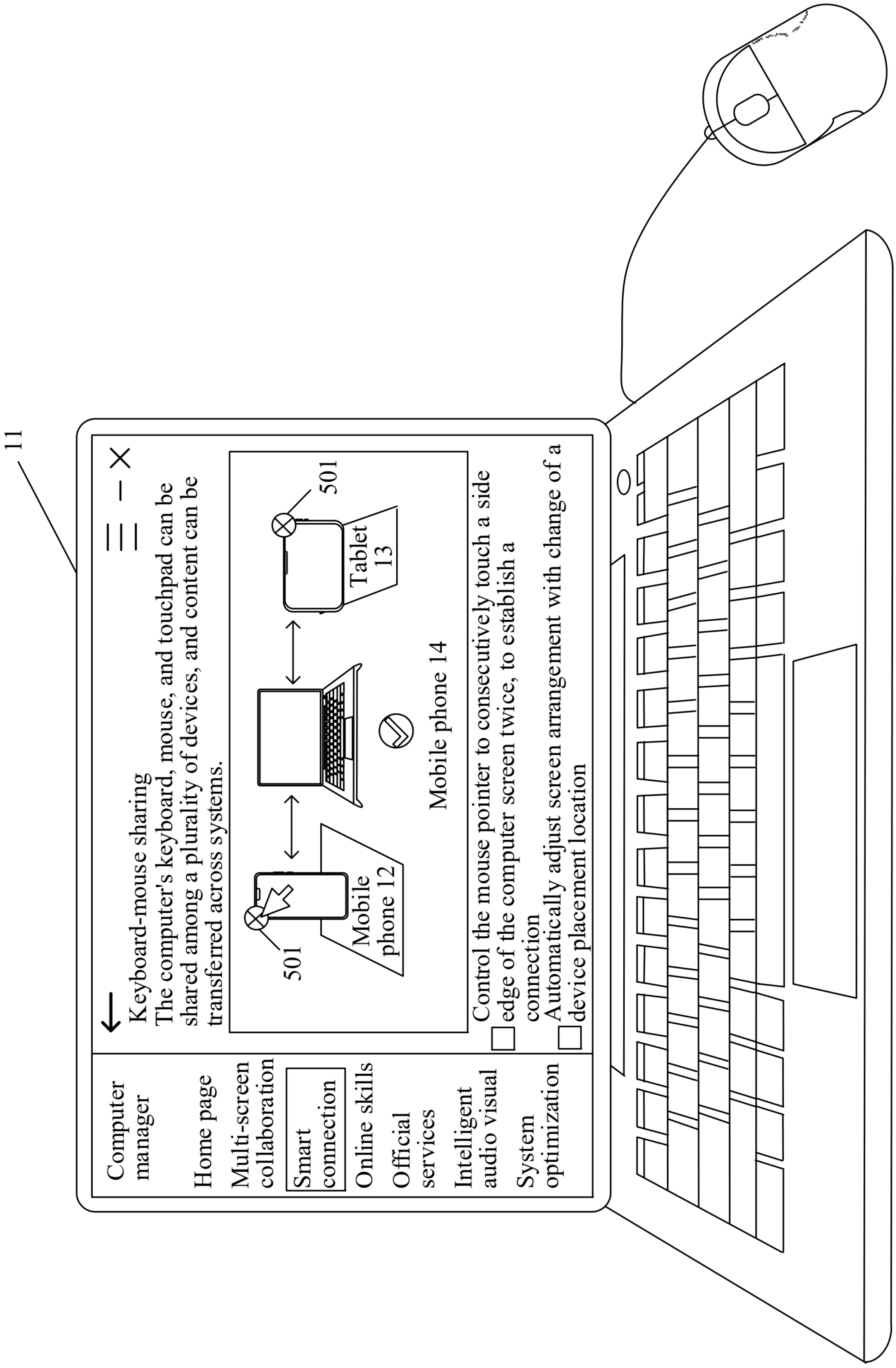
11
Computer manager
Home page
Multi-screen collaboration
Smart connection
Online skills
Official services
Intelligent audio visual
System optimization
Keyboard-mouse sharing
The computer's keyboard, mouse, and touchpad can be shared among a plurality of devices, and content can be transferred across systems.
501
Mobile phone 12
501
Tablet 13
Mobile phone 14
Control the mouse pointer to consecutively touch a side edge of the computer screen twice, to establish a connection
Automatically adjust screen arrangement with change of a device placement location

FIG. 5B

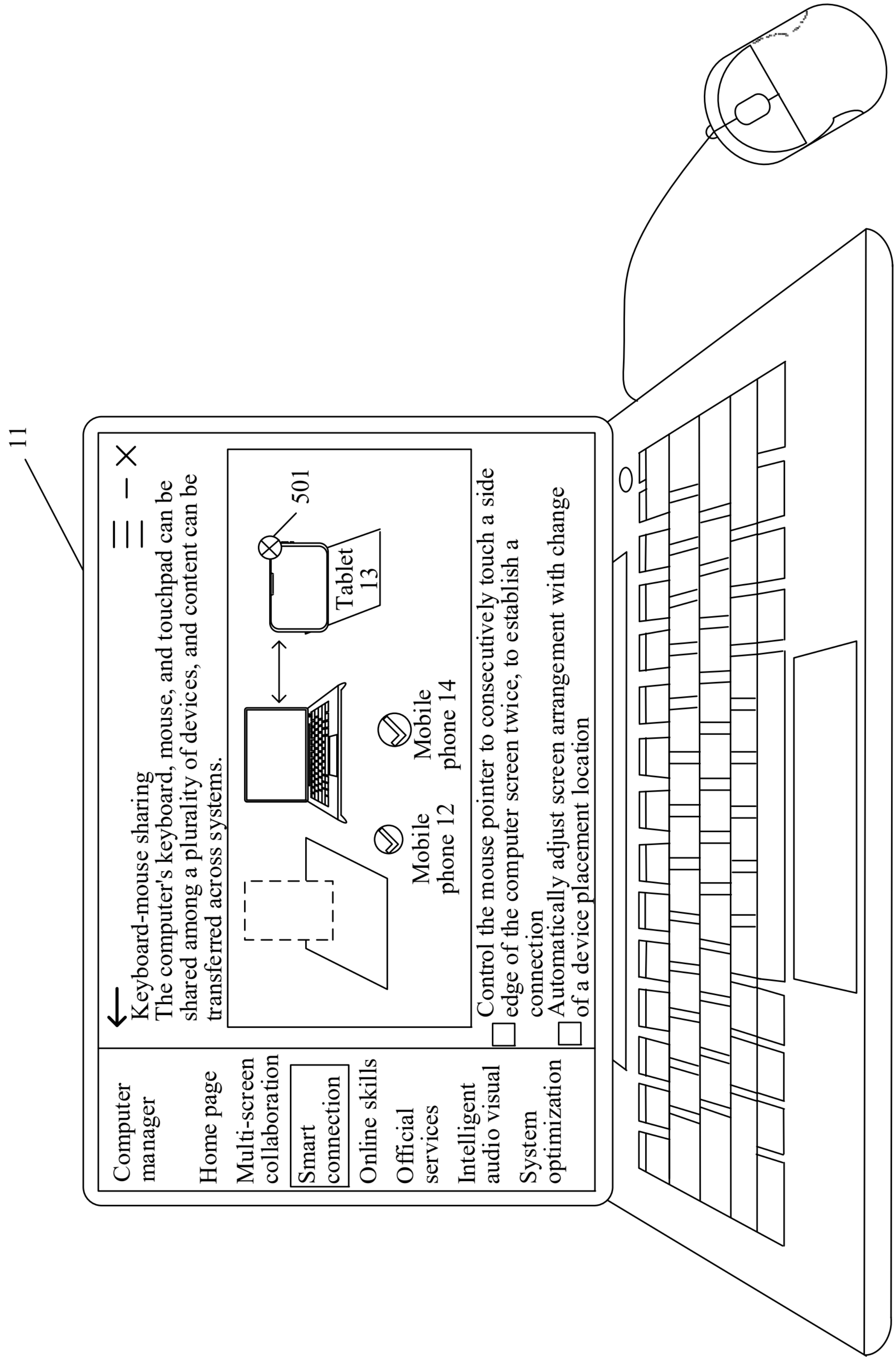
11
Computer manager
Home page
Multi-screen collaboration
Smart connection
Online skills
Official services
Intelligent audio visual
System optimization
Keyboard-mouse sharing
The computer's keyboard, mouse, and touchpad can be shared among a plurality of devices, and content can be transferred across systems.
501
Tablet 13
Mobile phone 12
Mobile phone 14
Control the mouse pointer to consecutively touch a side edge of the computer screen twice, to establish a connection
Automatically adjust screen arrangement with change of a device placement location

FIG. 5C

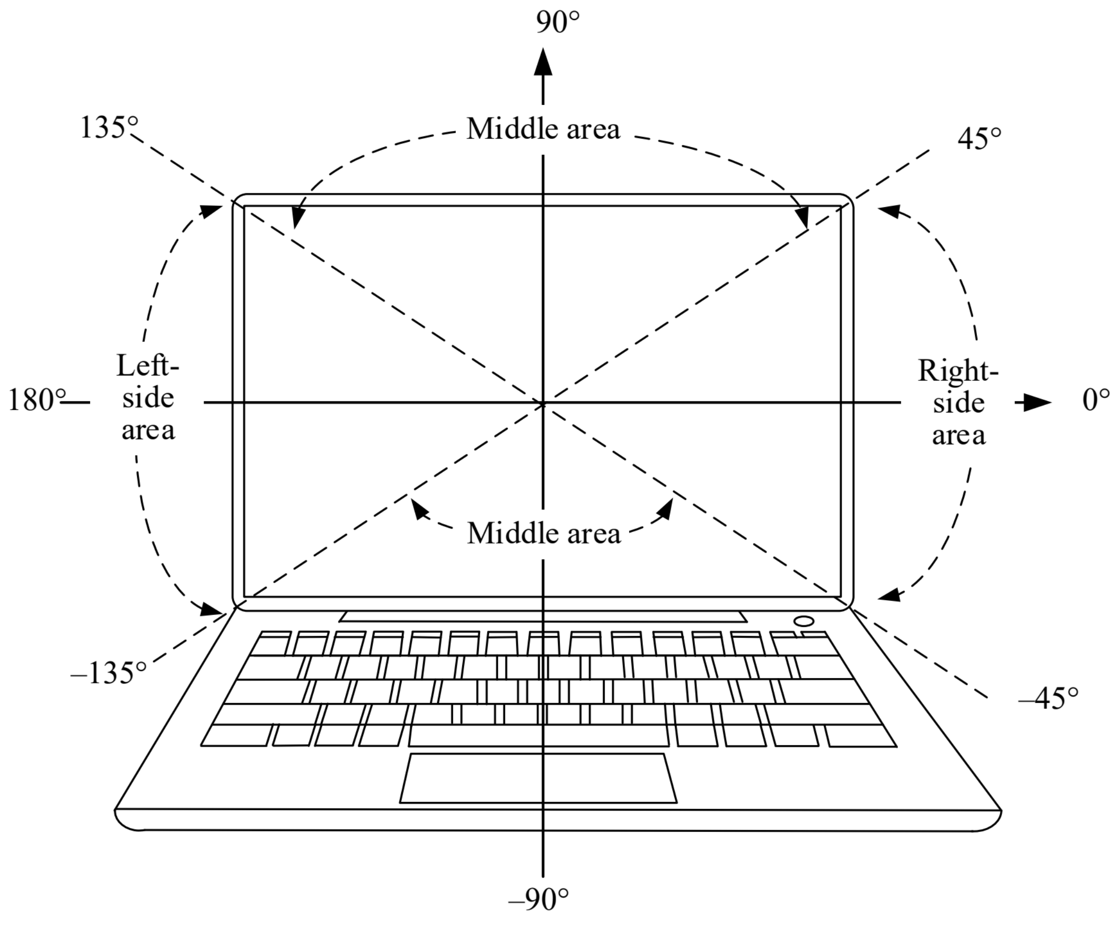
90°
135°
Middle area
45°
Left-side area
180°
Right-side area
0°
Middle area
–135°
–45°
–90°

FIG. 6

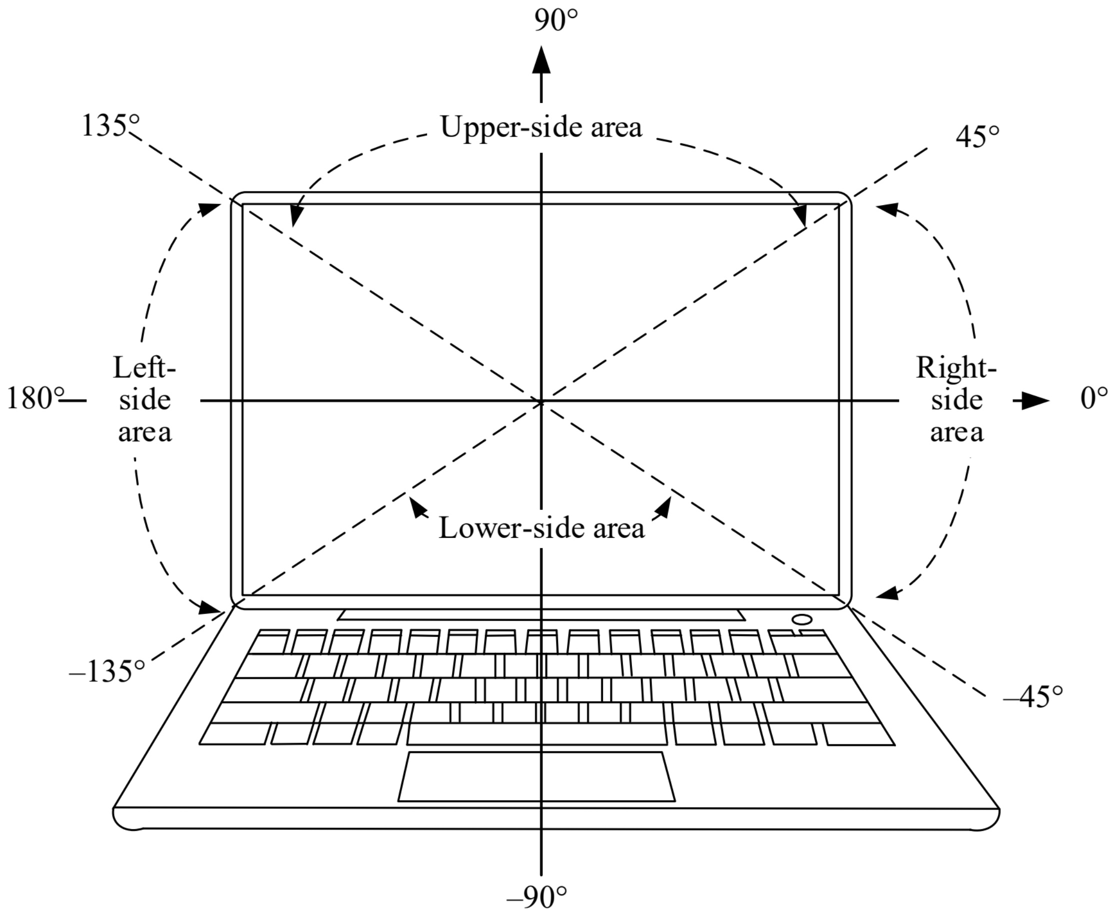
90°
135°
Upper-side area
45°
Left-side area
180°
Right-side area
0°
Lower-side area
–135°
–45°
–90°

FIG. 7

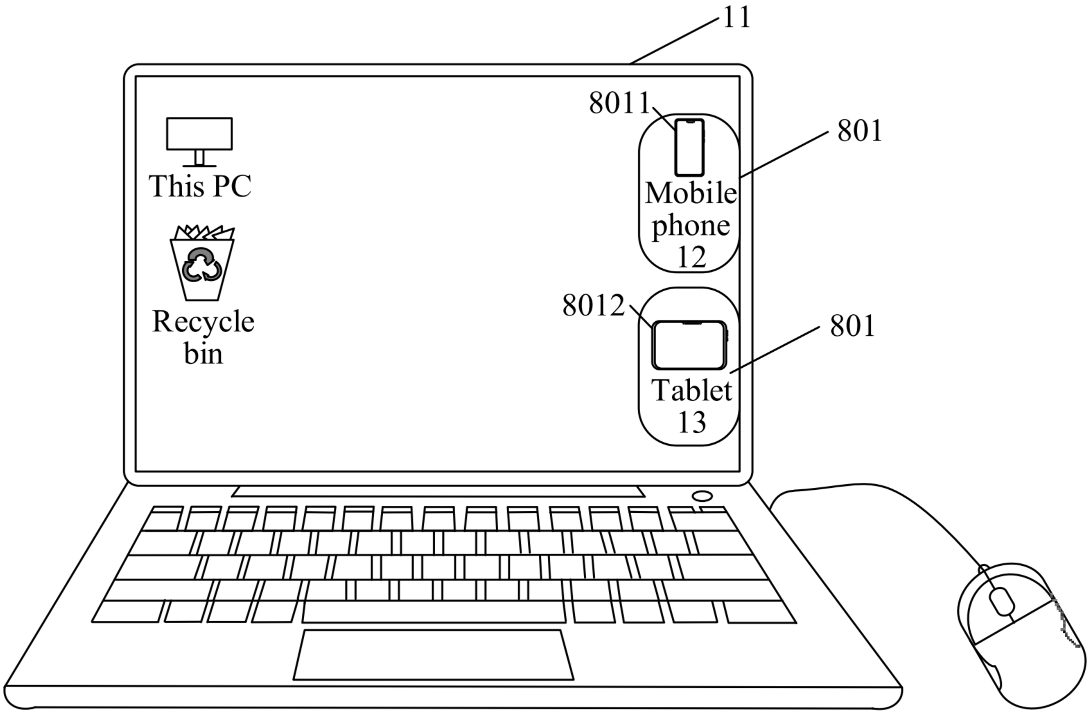
11
8011
801
This PC
Mobile
phone
12
Recycle
bin
8012
801
Tablet
13

FIG. 8

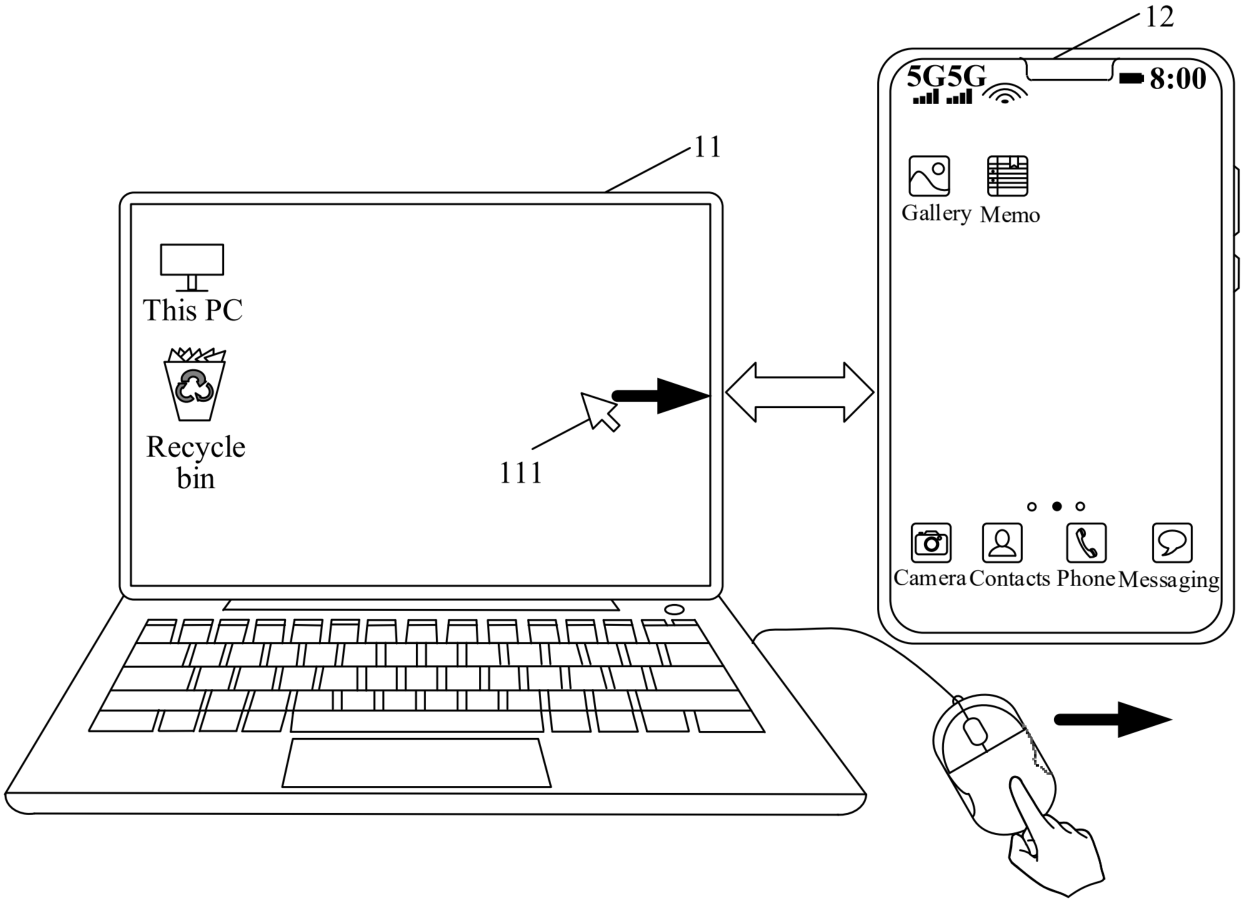
12
5G5G
8:00
Gallery
Memo
11
This PC
Recycle bin
111
Camera
Contacts
Phone
Messaging

FIG. 9A

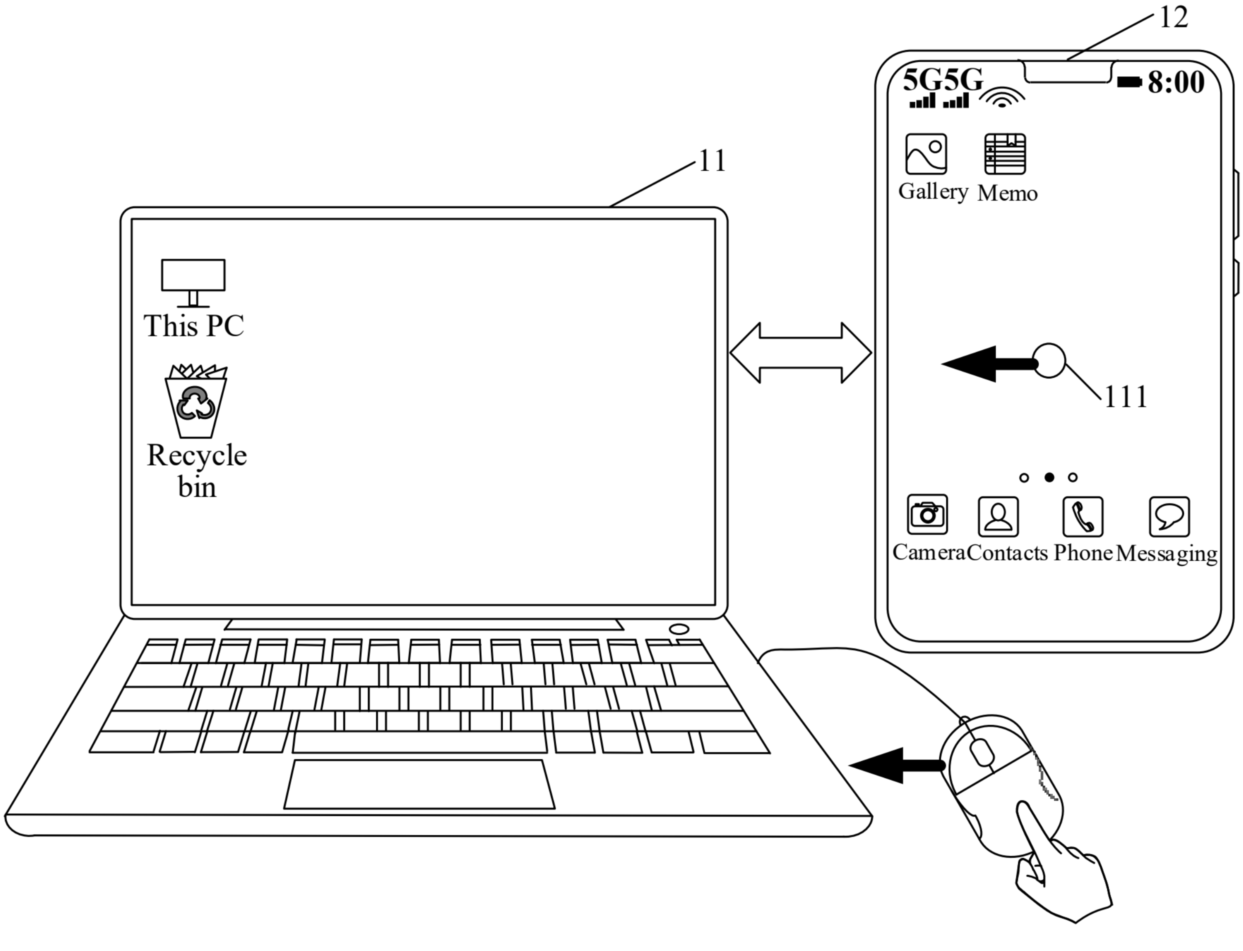
12
5G5G
8:00
Gallery
Memo
11
This PC
Recycle bin
111
Camera
Contacts
Phone
Messaging

FIG. 9B

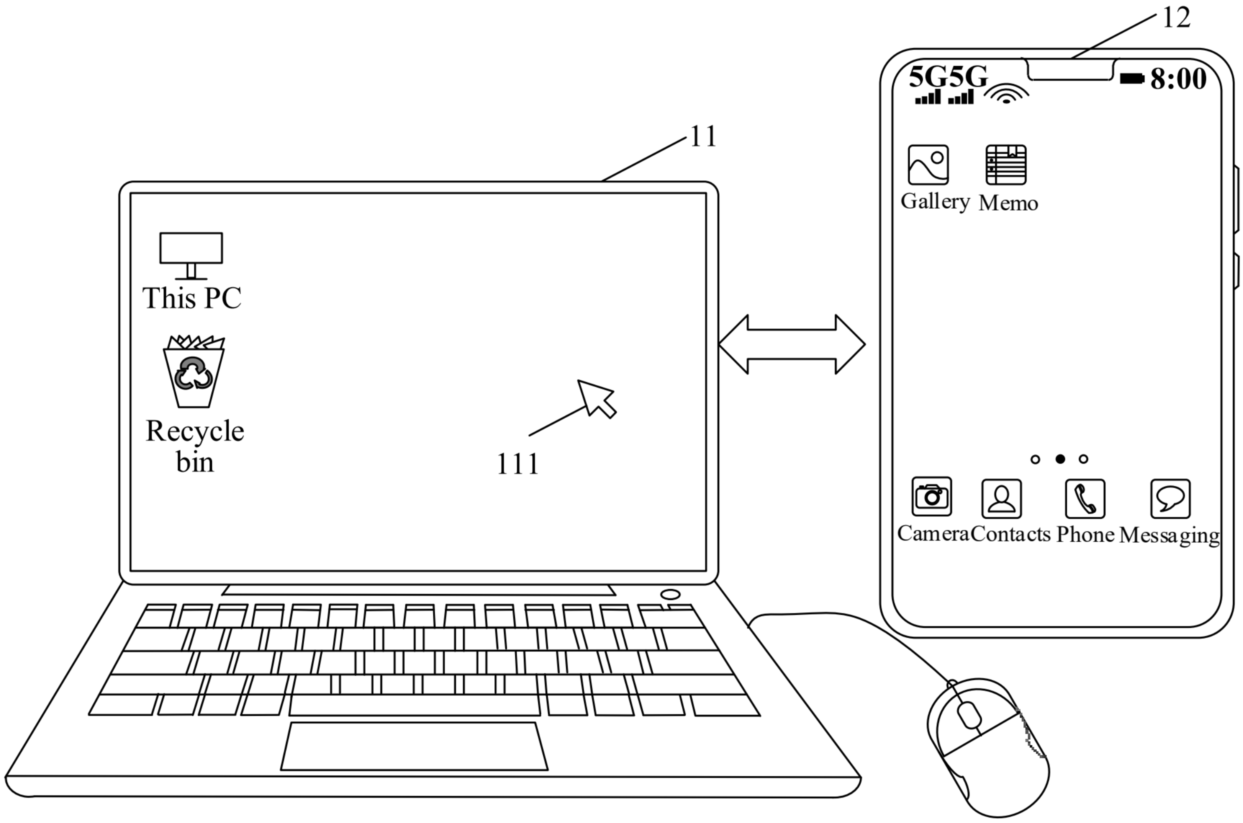
12
5G5G
8:00
Gallery
Memo
11
This PC
Recycle bin
111
Camera
Contacts
Phone
Messaging

FIG. 9C

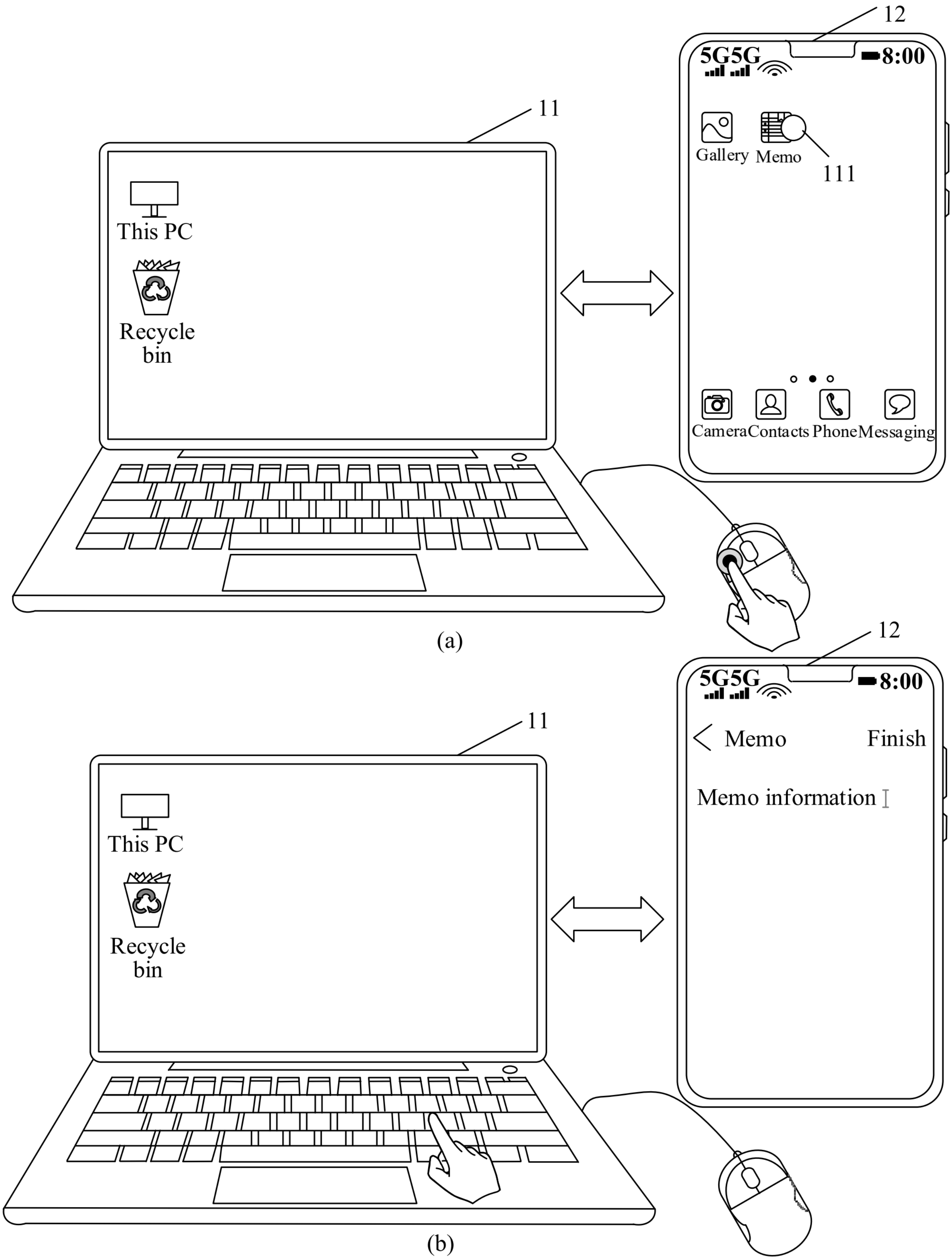
12
5G5G
8:00
11
Gallery
Memo
111
This PC
Recycle bin
Camera
Contacts
Phone
Messaging
(a)
12
5G5G
8:00
11
Memo
Finish
Memo information
This PC
Recycle bin
(b)

FIG. 10

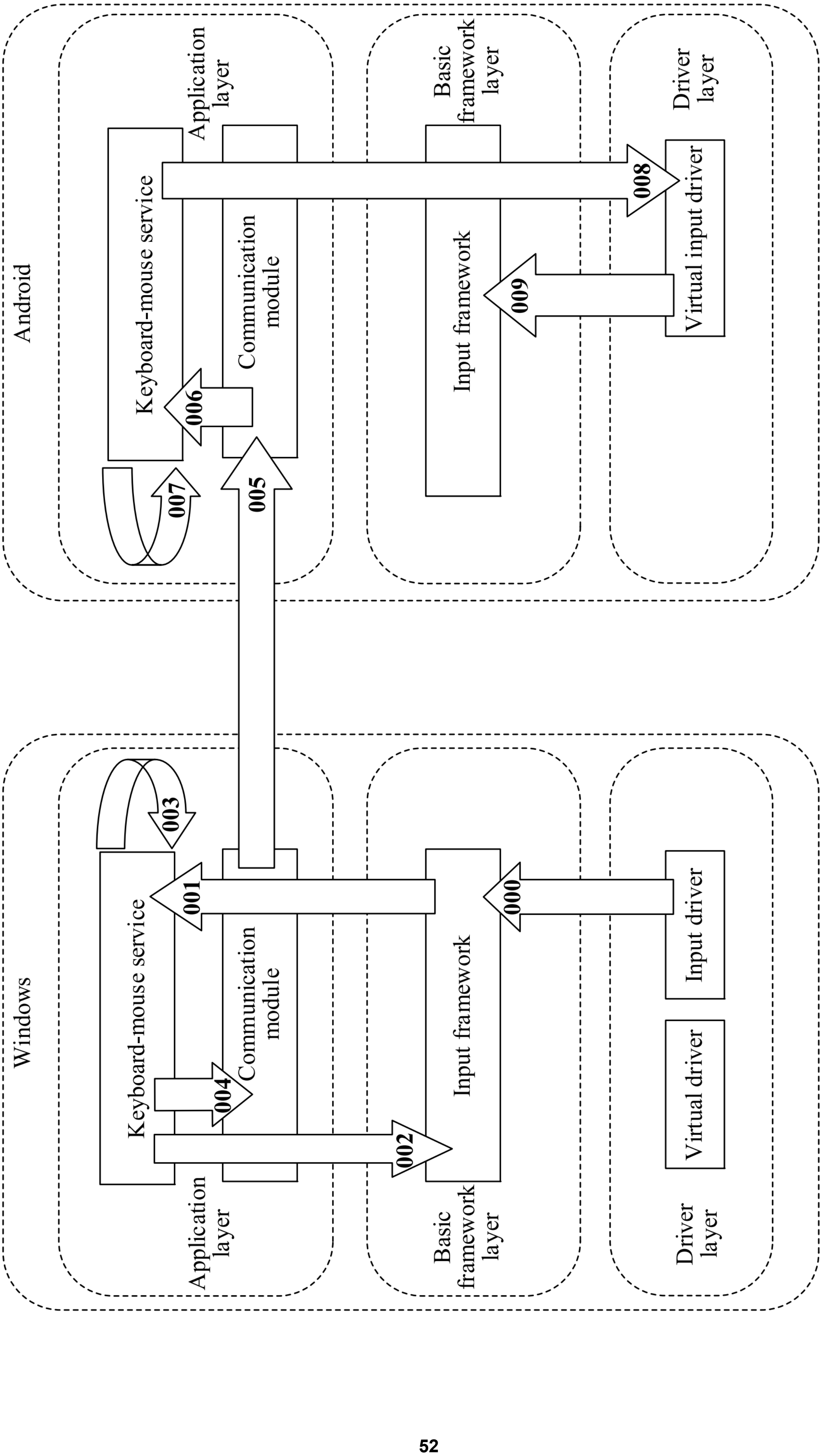
Android
Application layer
Keyboard-mouse service
Communication module
Basic framework layer
Input framework
Driver layer
Virtual input driver
005
006
007
008
009
Windows
Application layer
Keyboard-mouse service
Communication module
Basic framework layer
Input framework
Driver layer
Virtual driver
Input driver
000
001
002
003
004

FIG. 11

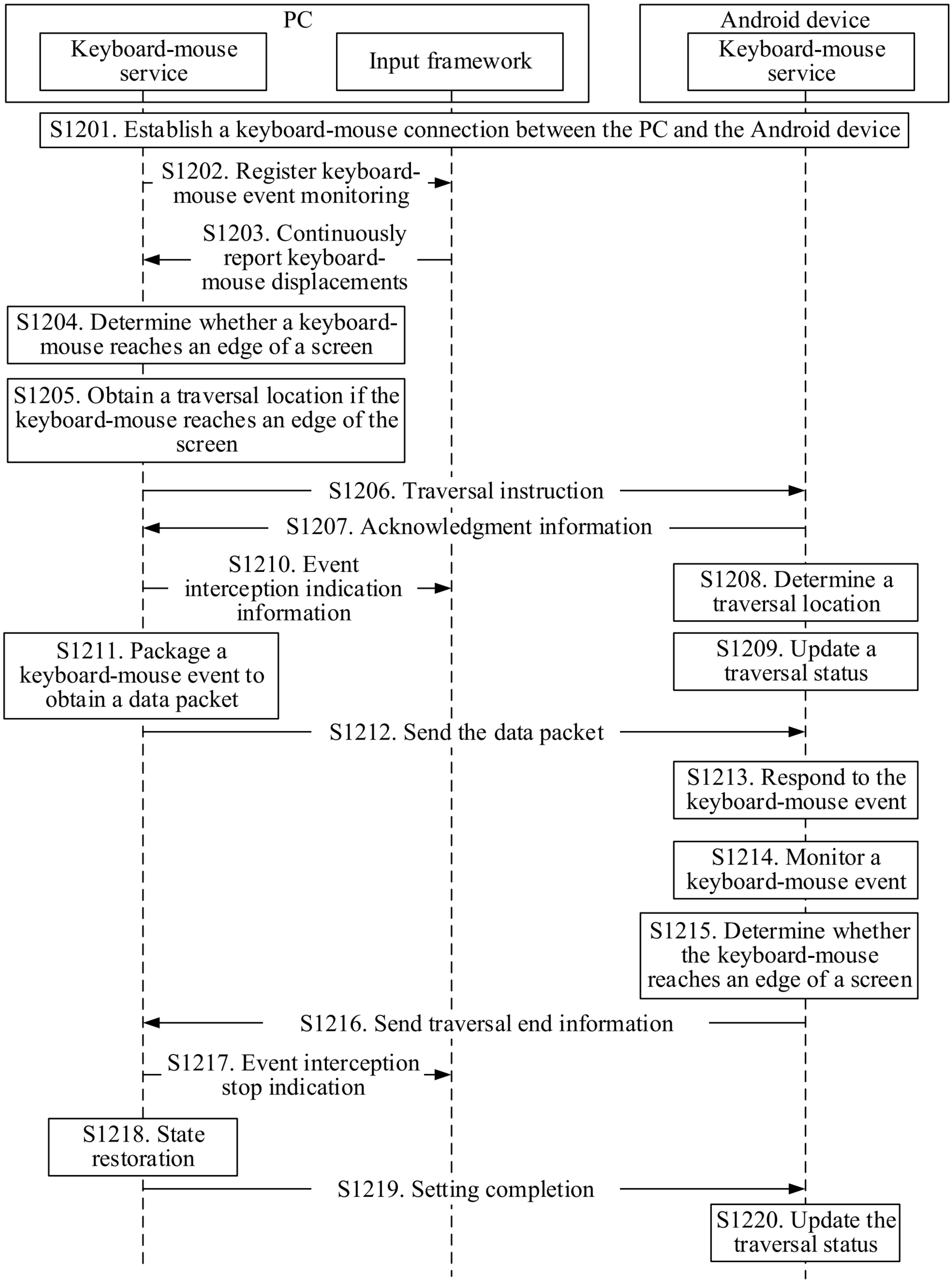
PC
Keyboard-mouse service
Input framework
Android device
Keyboard-mouse service
S1201. Establish a keyboard-mouse connection between the PC and the Android device
S1202. Register keyboard-mouse event monitoring
S1203. Continuously report keyboard-mouse displacements
S1204. Determine whether a keyboard-mouse reaches an edge of a screen
S1205. Obtain a traversal location if the keyboard-mouse reaches an edge of the screen
S1206. Traversal instruction
S1207. Acknowledgment information
S1210. Event interception indication information
S1208. Determine a traversal location
S1209. Update a traversal status
S1211. Package a keyboard-mouse event to obtain a data packet
S1212. Send the data packet
S1213. Respond to the keyboard-mouse event
S1214. Monitor a keyboard-mouse event
S1215. Determine whether the keyboard-mouse reaches an edge of a screen
S1216. Send traversal end information
S1217. Event interception stop indication
S1218. State restoration
S1219. Setting completion
S1220. Update the traversal status

FIG. 12

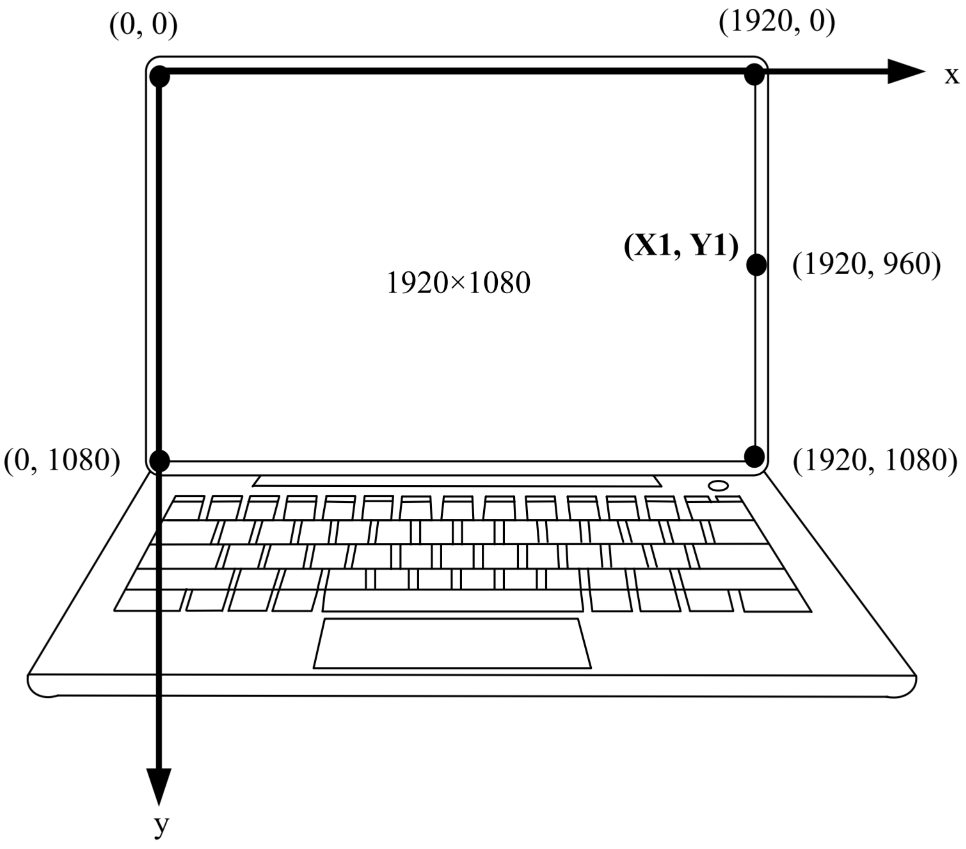


FIG. 13

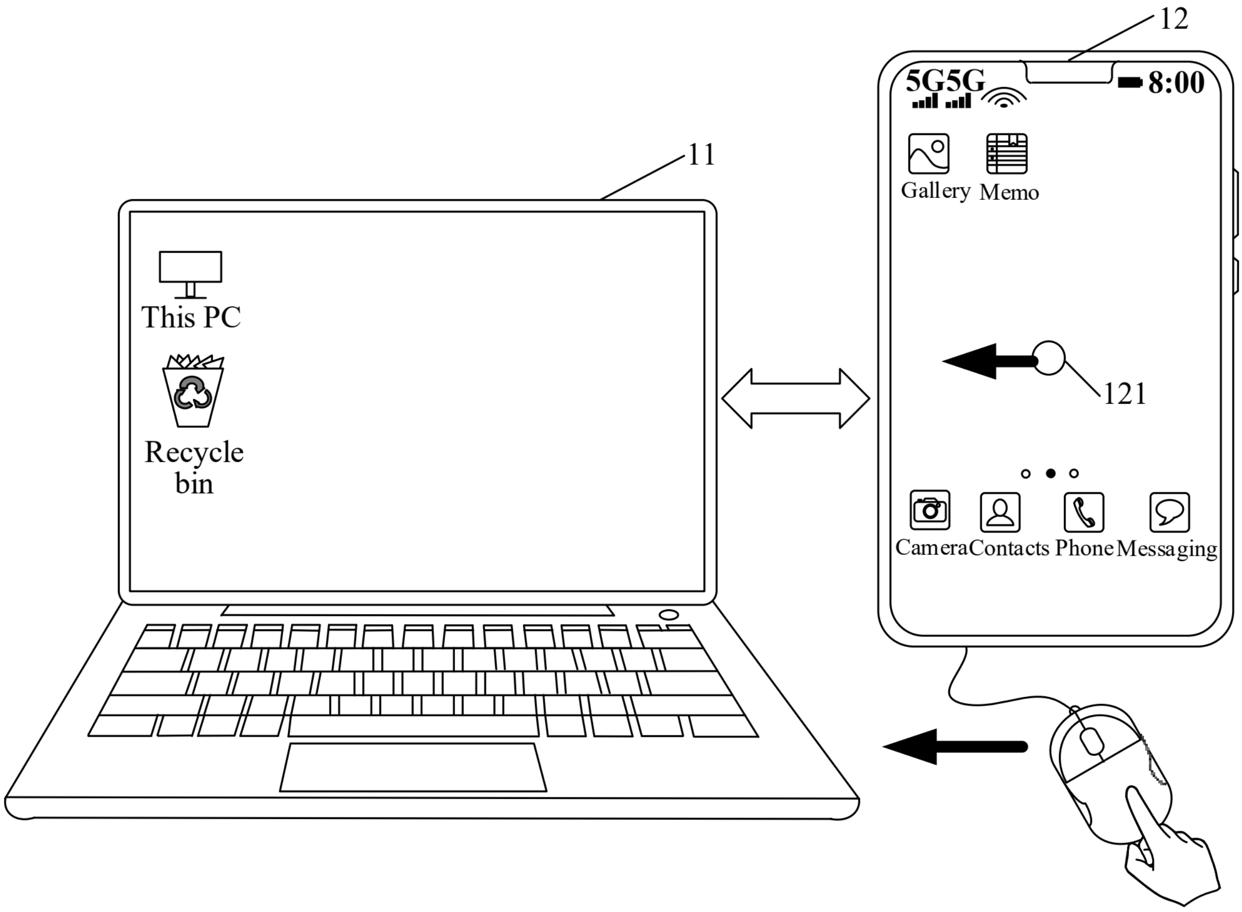
12
5G5G
8:00
Gallery
Memo
11
This PC
Recycle bin
121
Camera
Contacts
Phone
Messaging

FIG. 14A

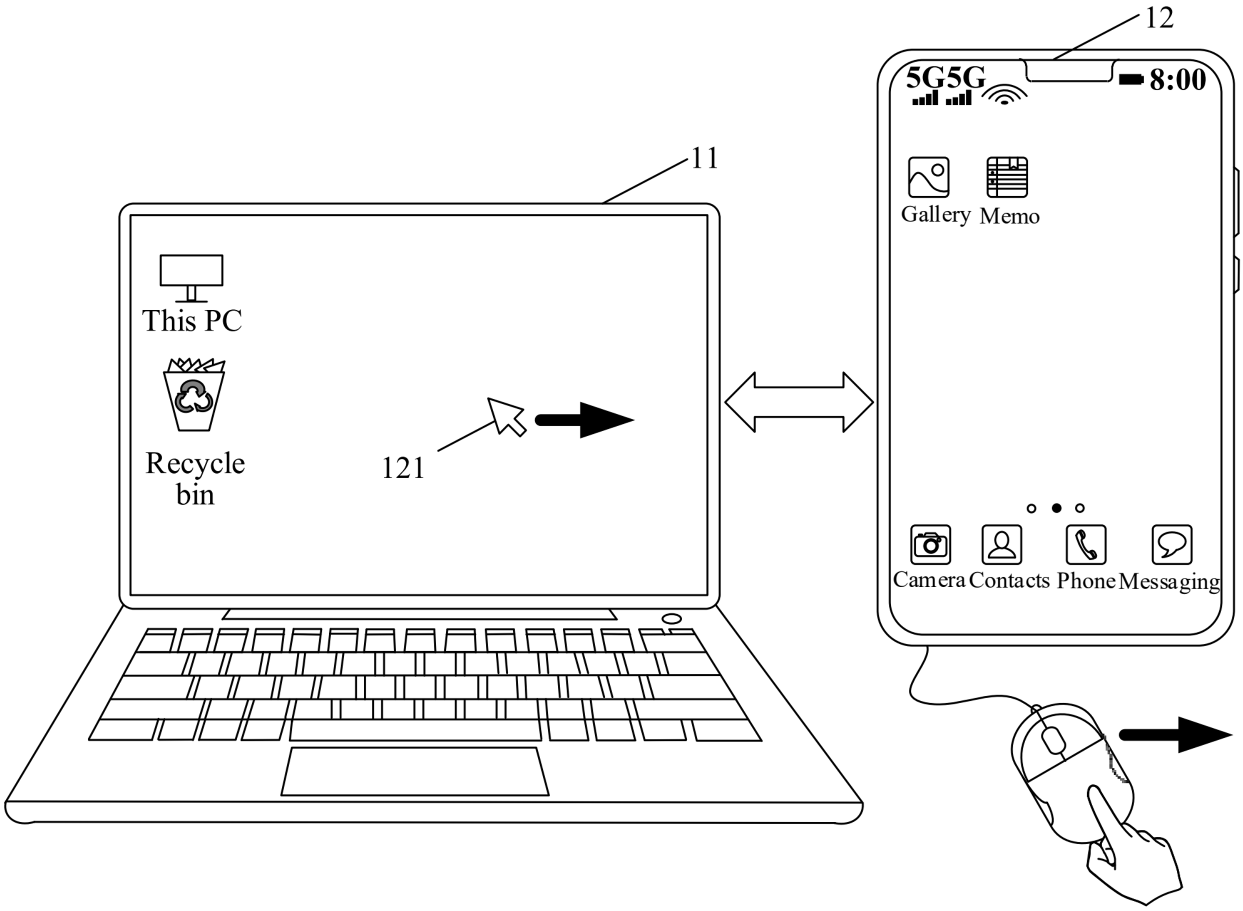
12
5G5G
8:00
Gallery
Memo
Camera
Contacts
Phone
Messaging
11
This PC
Recycle bin
121

FIG. 14B

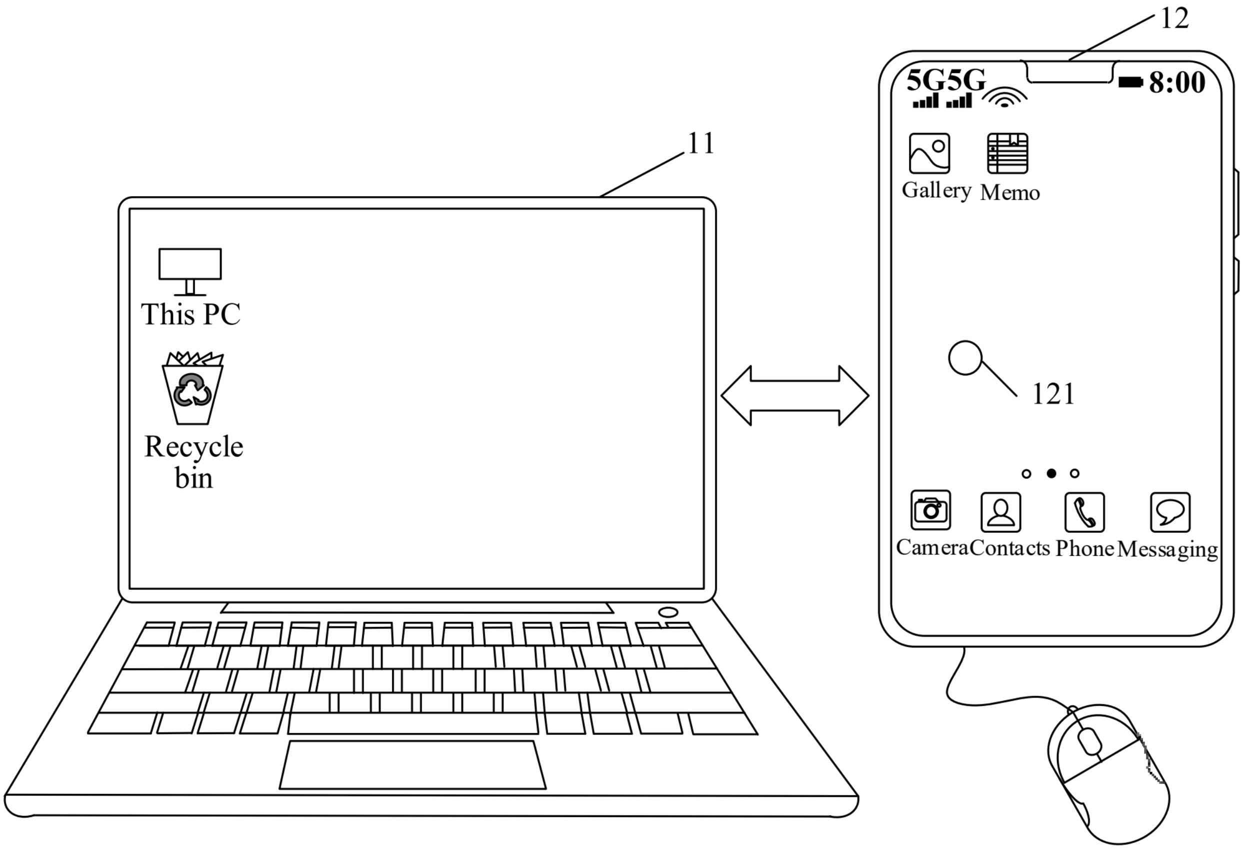
11
12
This PC
Recycle bin
5G5G
8:00
Gallery
Memo
121
Camera
Contacts
Phone
Messaging

FIG. 14C

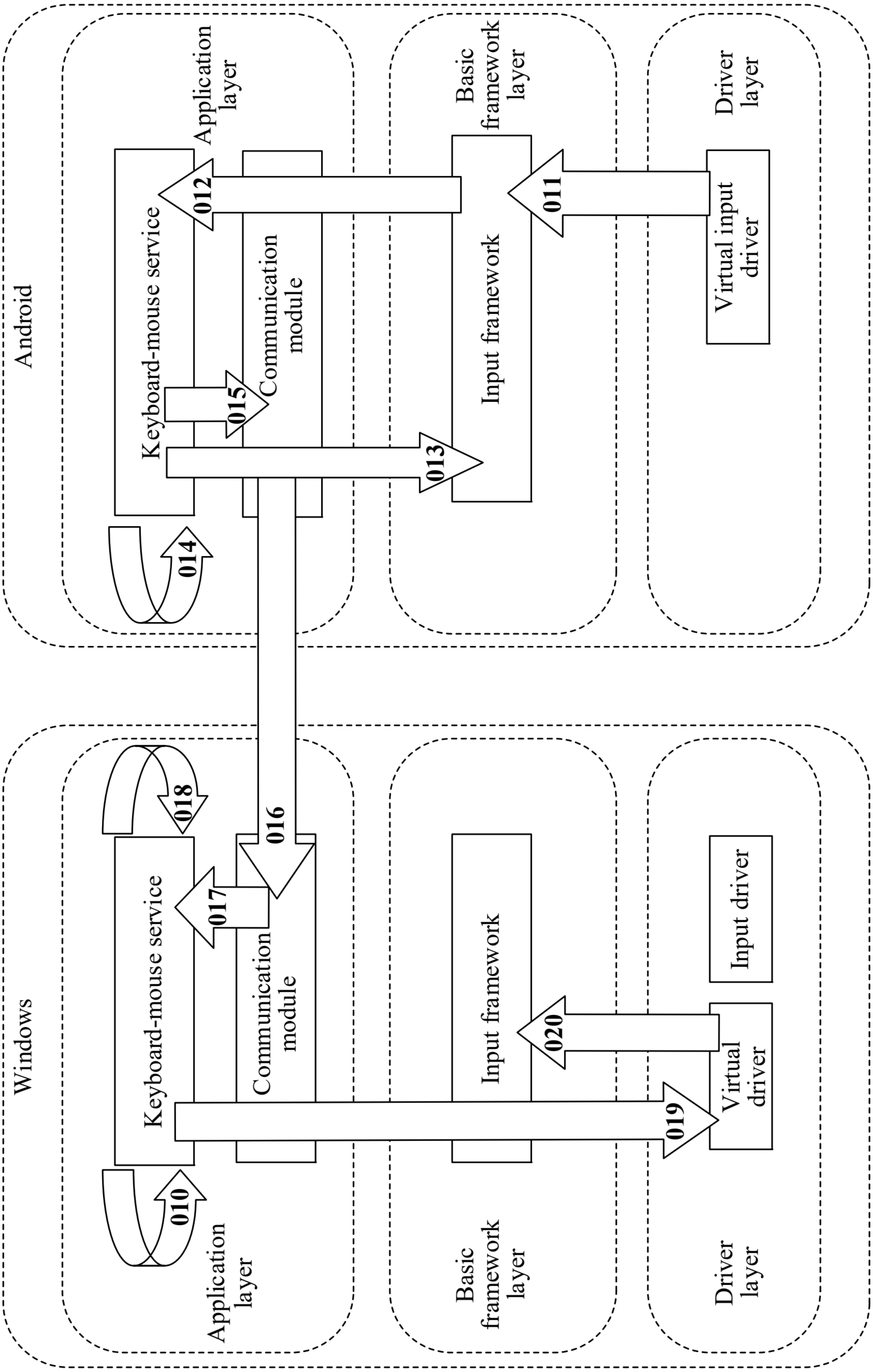

Android
Application layer
Keyboard-mouse service
Communication module
Basic framework layer
Input framework
Driver layer
Virtual input driver
011
012
013
014
015
016
Windows
Application layer
Keyboard-mouse service
Communication module
Basic framework layer
Input framework
Driver layer
Input driver
Virtual driver
010
017
018
019
020


FIG. 15

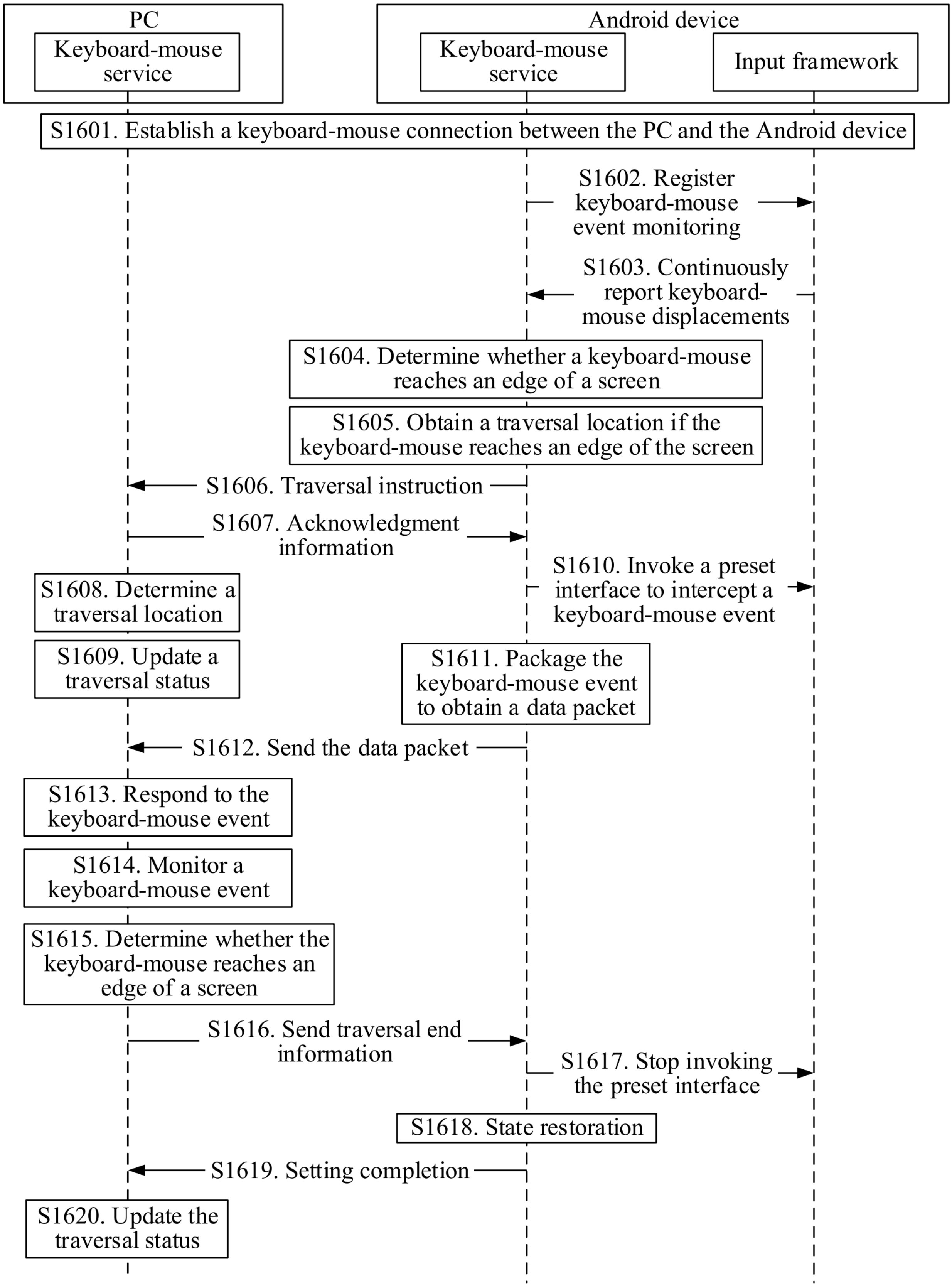
PC
Keyboard-mouse service
Android device
Keyboard-mouse service
Input framework
S1601. Establish a keyboard-mouse connection between the PC and the Android device
S1602. Register keyboard-mouse event monitoring
S1603. Continuously report keyboard-mouse displacements
S1604. Determine whether a keyboard-mouse reaches an edge of a screen
S1605. Obtain a traversal location if the keyboard-mouse reaches an edge of the screen
S1606. Traversal instruction
S1607. Acknowledgment information
S1608. Determine a traversal location
S1609. Update a traversal status
S1610. Invoke a preset interface to intercept a keyboard-mouse event
S1611. Package the keyboard-mouse event to obtain a data packet
S1612. Send the data packet
S1613. Respond to the keyboard-mouse event
S1614. Monitor a keyboard-mouse event
S1615. Determine whether the keyboard-mouse reaches an edge of a screen
S1616. Send traversal end information
S1617. Stop invoking the preset interface
S1618. State restoration
S1619. Setting completion
S1620. Update the traversal status

FIG. 16

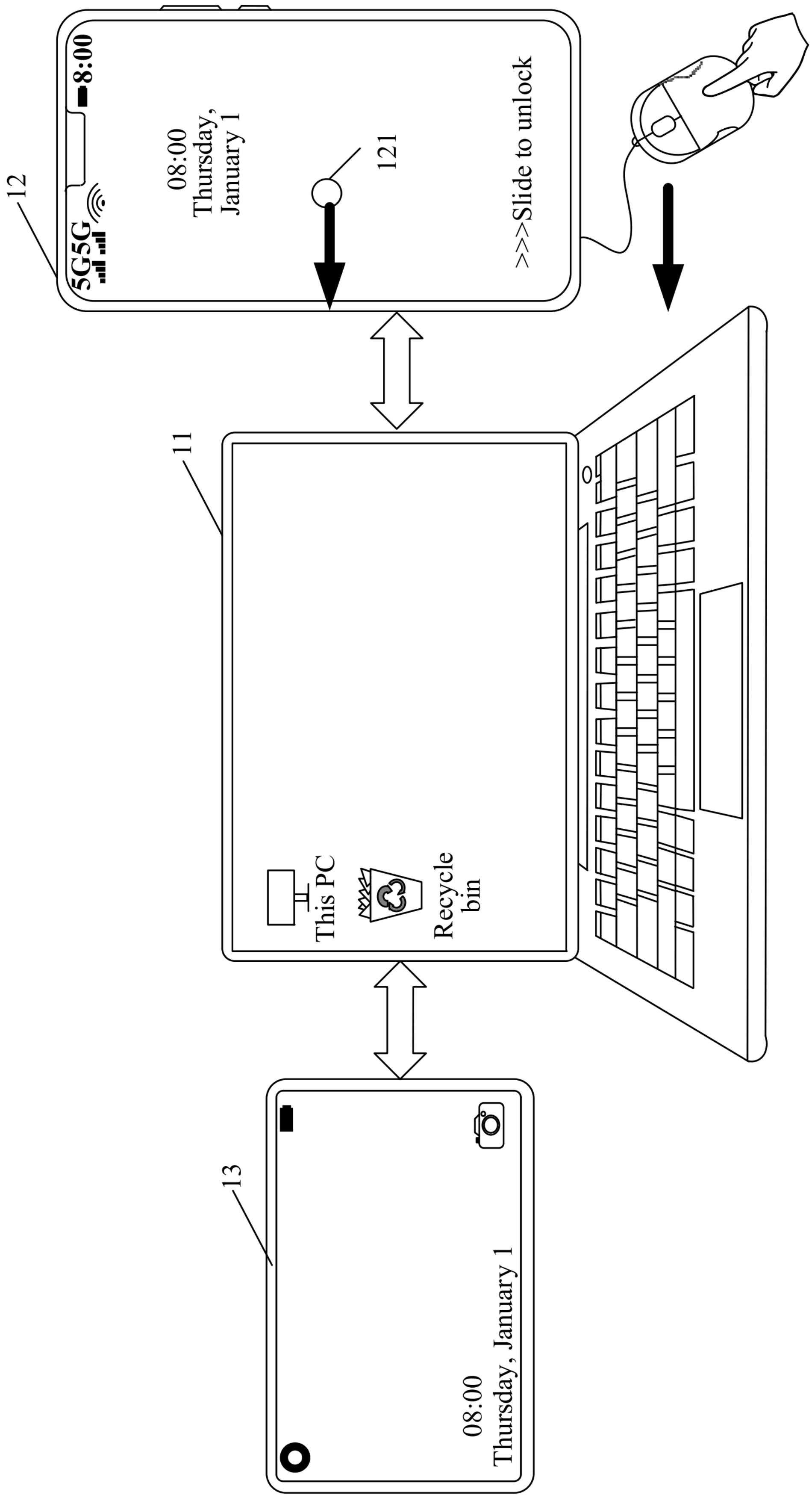
12
5G5G
8:00
08:00
Thursday,
January 1
121
>>>Slide to unlock
11
This PC
Recycle
bin
13
08:00
Thursday, January 1

FIG. 17A

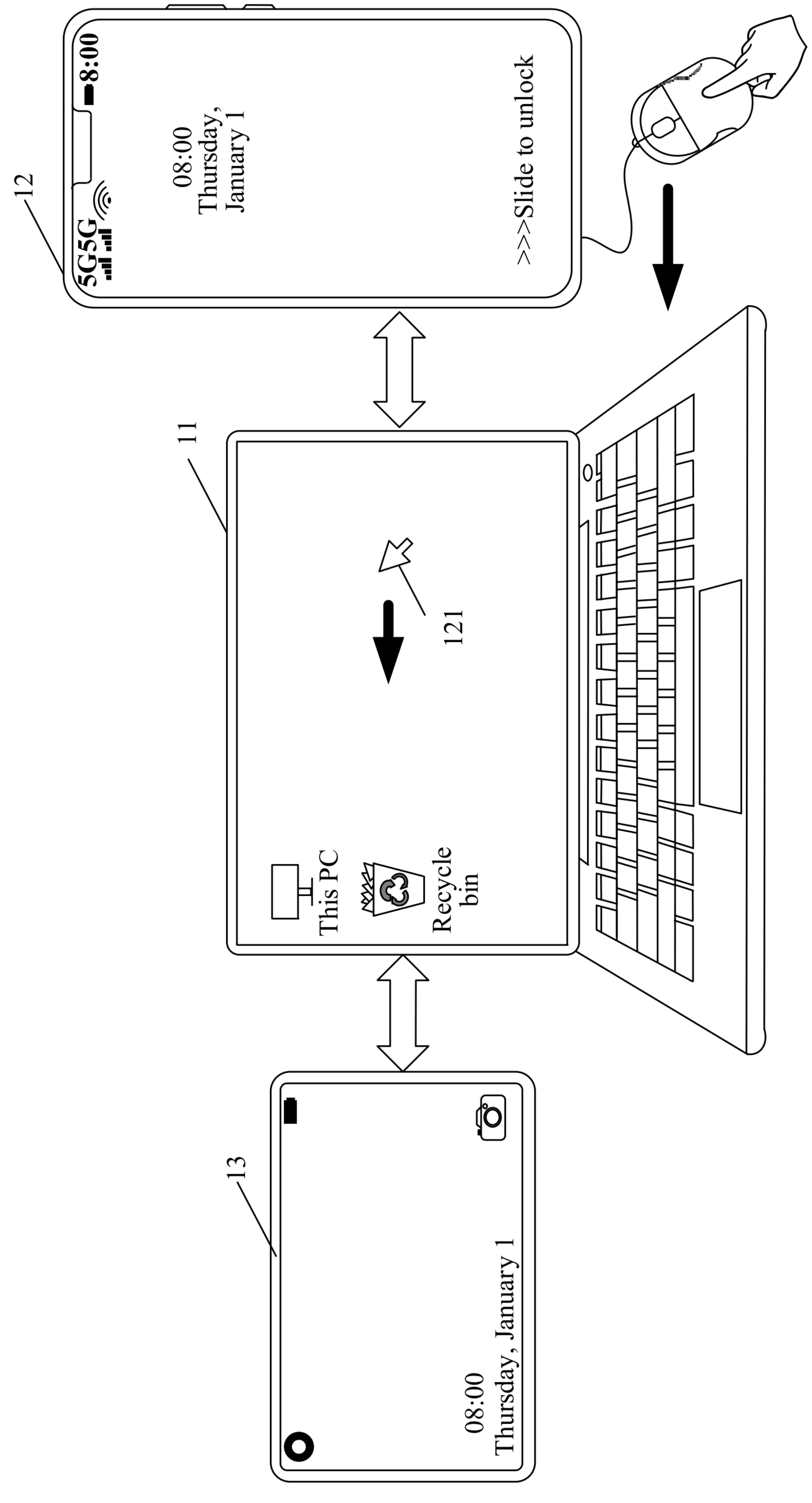
12
5G5G
8:00
08:00
Thursday,
January 1
>>>Slide to unlock
11
This PC
Recycle
bin
121
13
08:00
Thursday, January 1

FIG. 17B

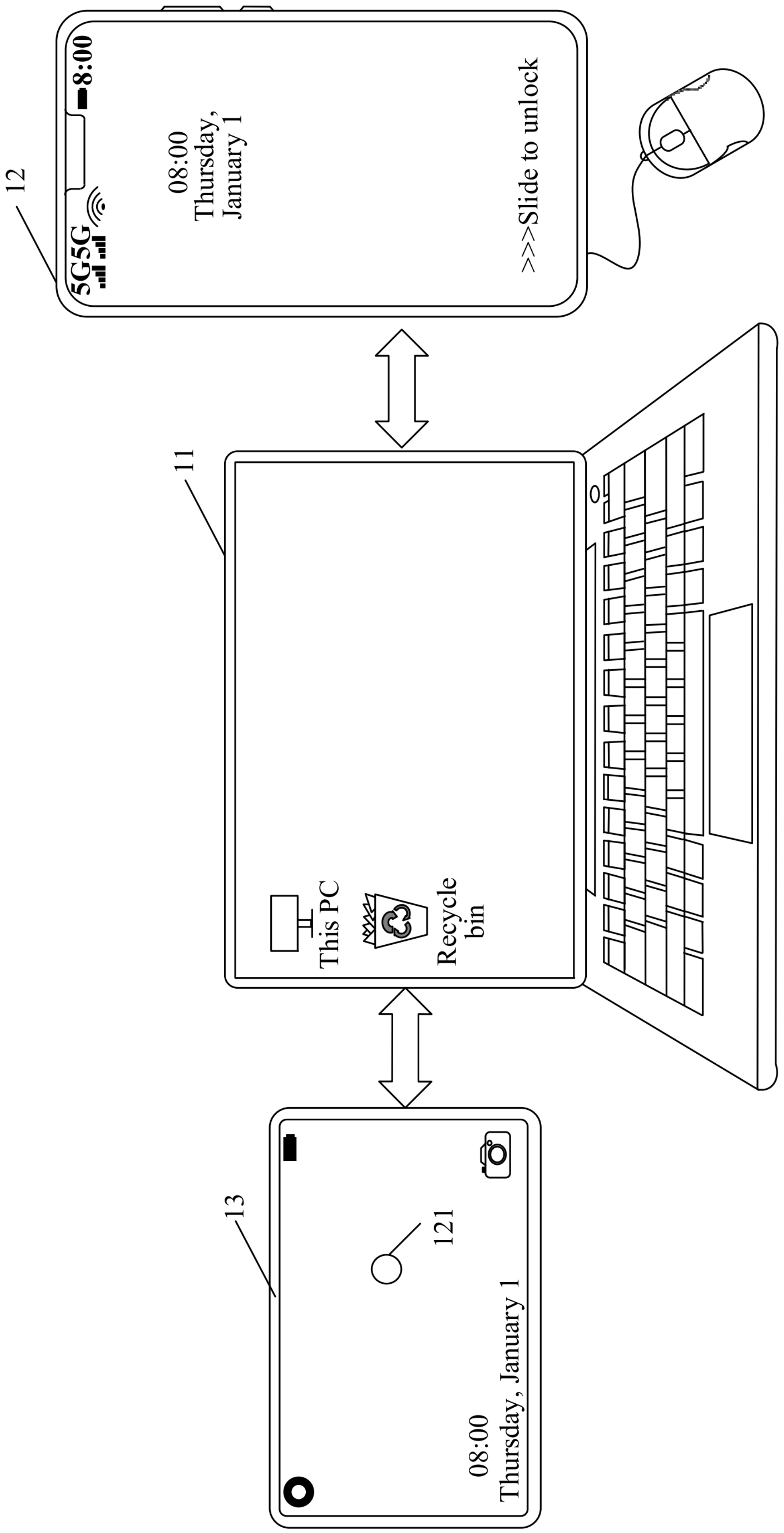
12
5G5G
8:00
08:00
Thursday,
January 1
>>>Slide to unlock
11
This PC
Recycle
bin
13
121
08:00
Thursday, January 1

FIG. 17C

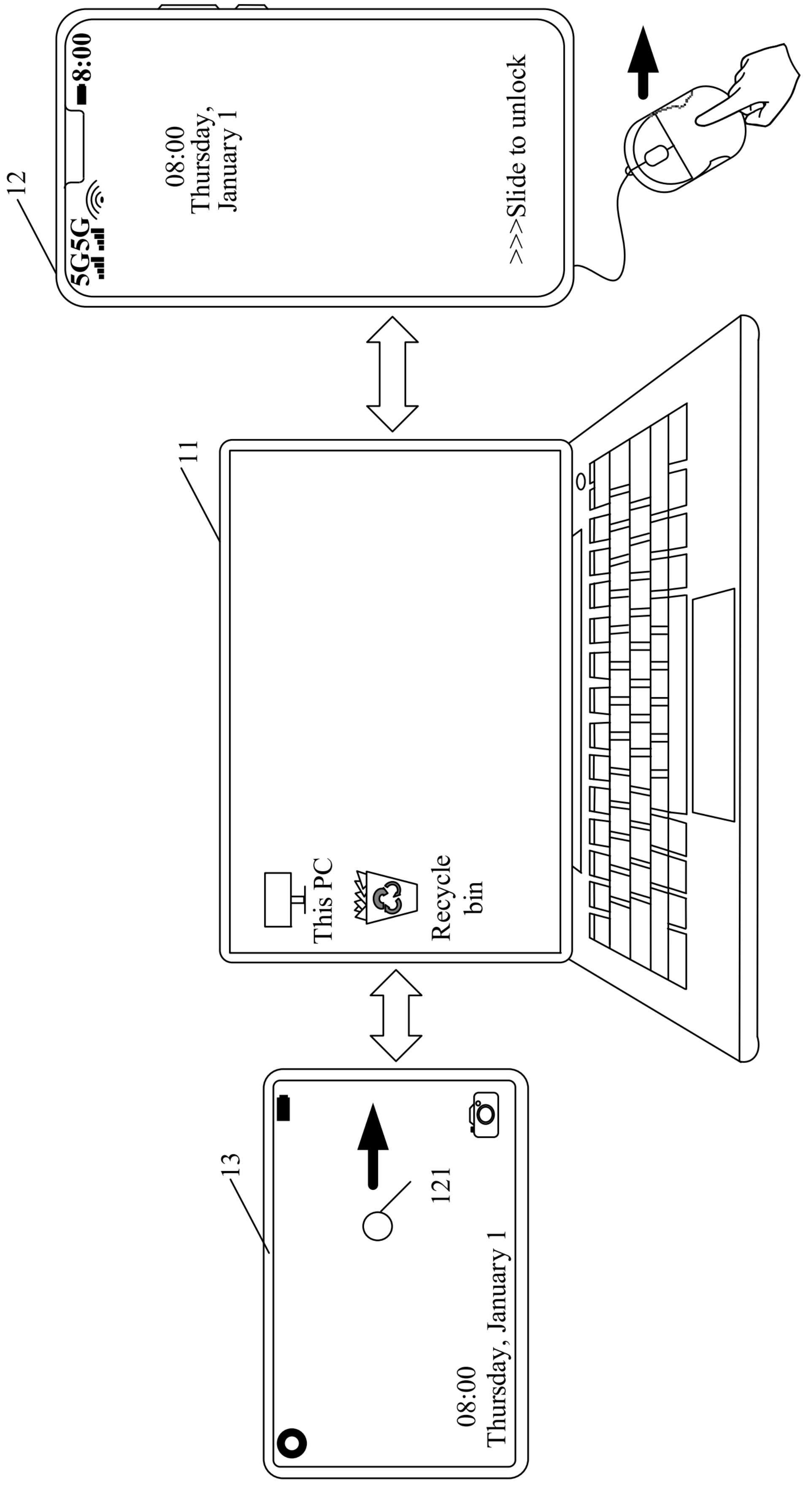
12
5G5G
8:00
08:00
Thursday,
January 1
>>>Slide to unlock
11
This PC
Recycle bin
13
121
08:00
Thursday, January 1

FIG. 18A

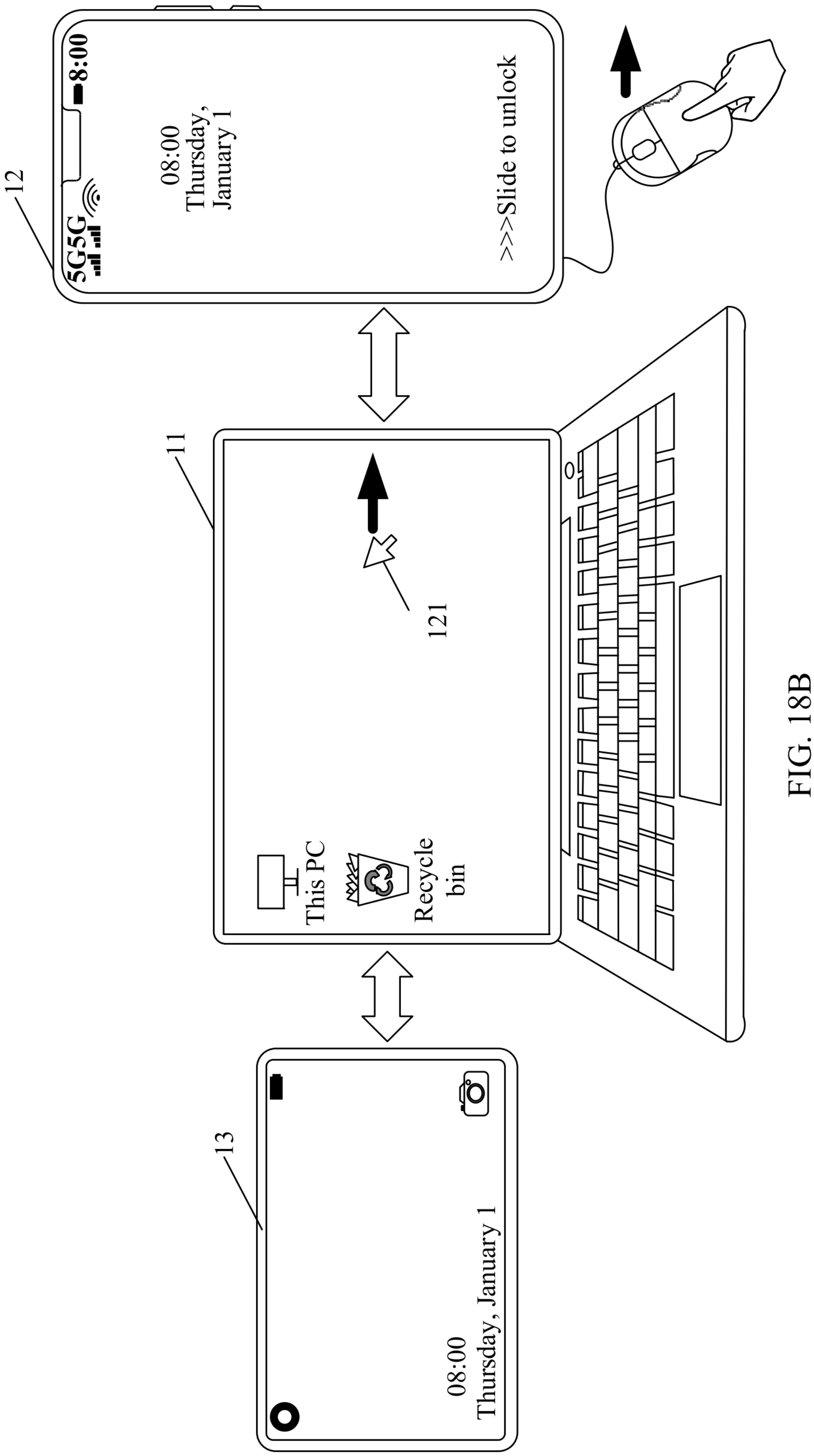
12
5G5G
8:00
08:00
Thursday,
January 1
>>>Slide to unlock
11
121
This PC
Recycle
bin
13
08:00
Thursday, January 1

FIG. 18B

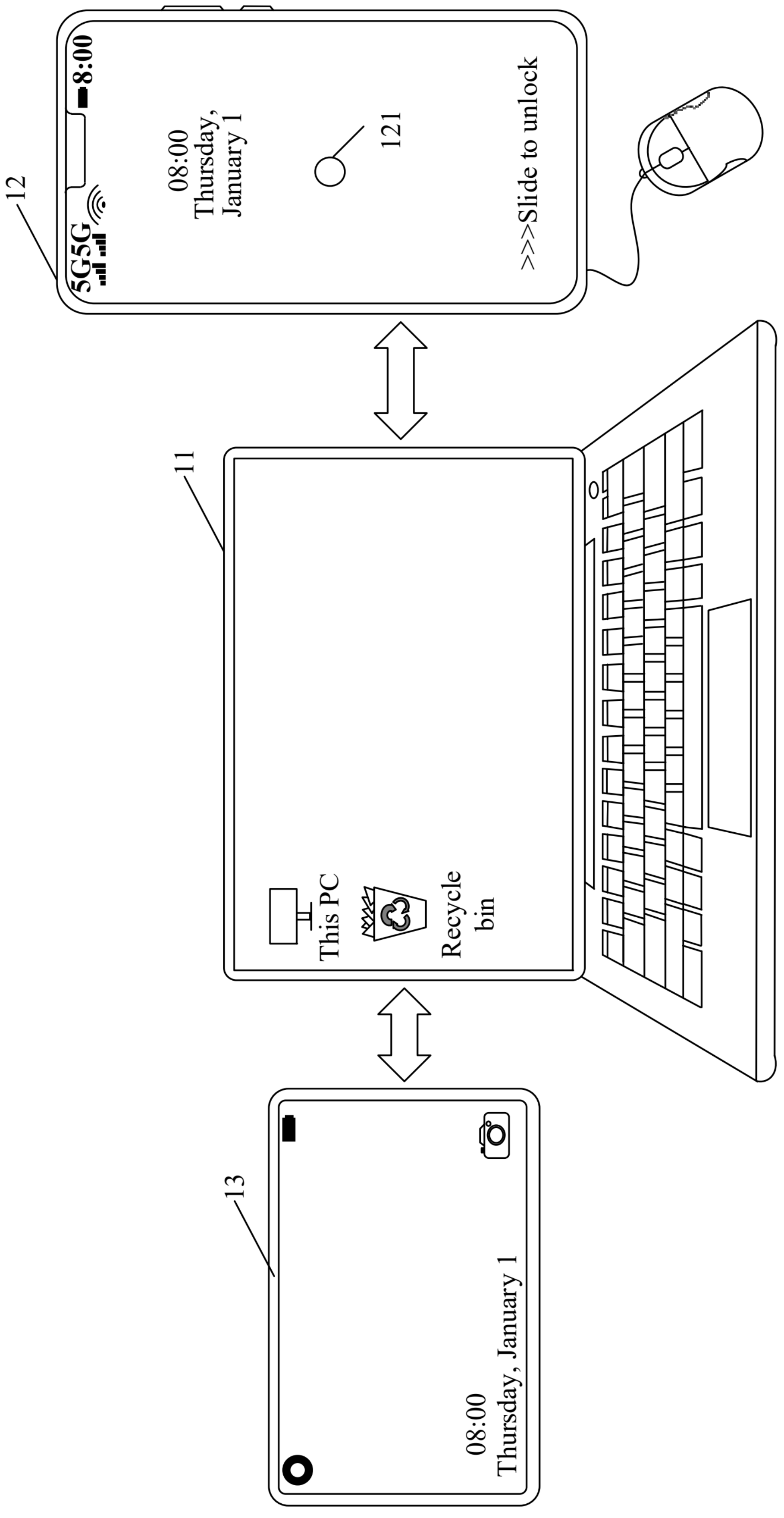
12
5G5G
8:00
08:00
Thursday,
January 1
121
>>>Slide to unlock
11
This PC
Recycle
bin
13
08:00
Thursday, January 1

FIG. 18C

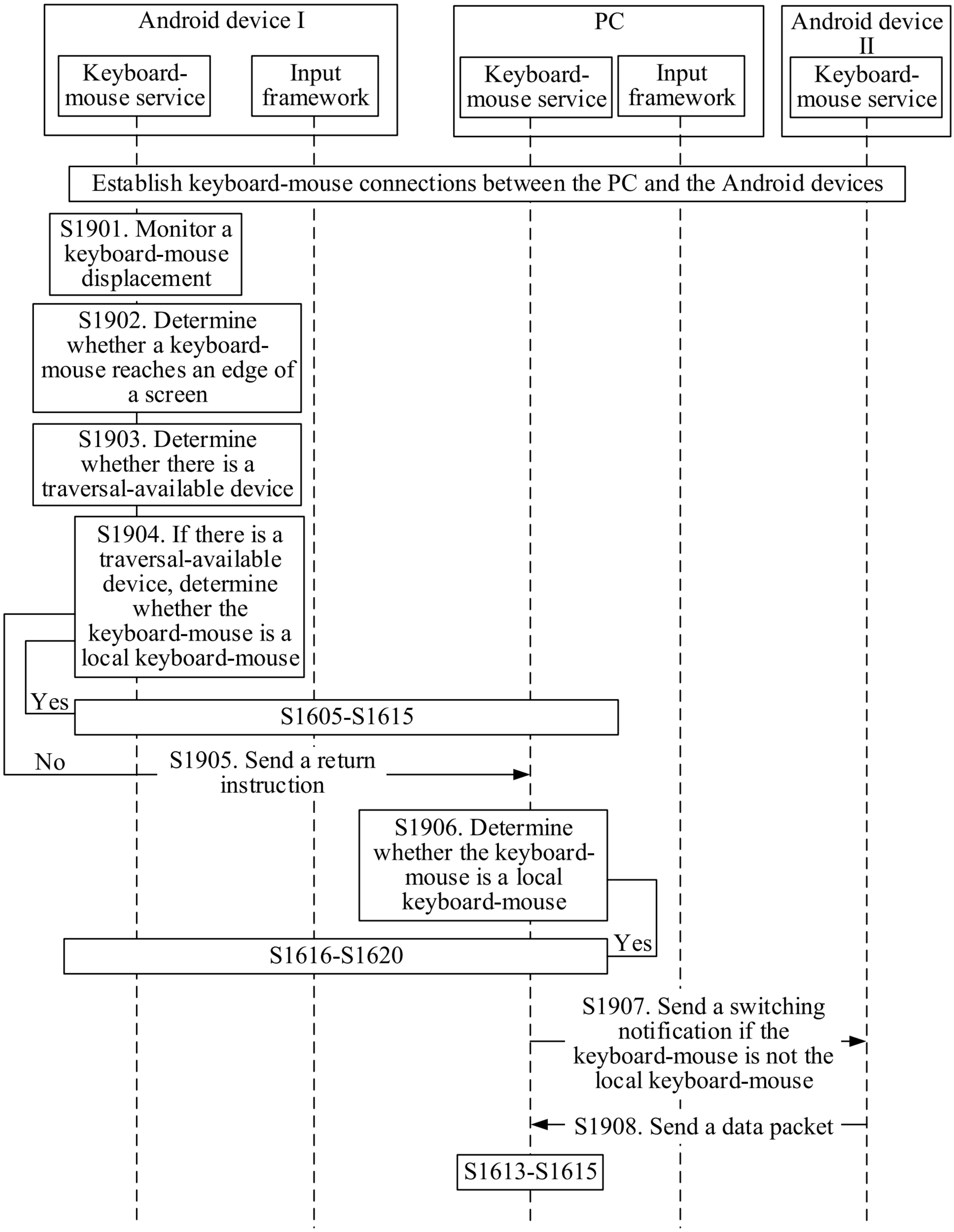
Android device I
Keyboard-mouse service
Input framework
PC
Keyboard-mouse service
Input framework
Android device II
Keyboard-mouse service
Establish keyboard-mouse connections between the PC and the Android devices
S1901. Monitor a keyboard-mouse displacement
S1902. Determine whether a keyboard-mouse reaches an edge of a screen
S1903. Determine whether there is a traversal-available device
S1904. If there is a traversal-available device, determine whether the keyboard-mouse is a local keyboard-mouse
Yes
S1605-S1615
No
S1905. Send a return instruction
S1906. Determine whether the keyboard-mouse is a local keyboard-mouse
Yes
S1616-S1620
S1907. Send a switching notification if the keyboard-mouse is not the local keyboard-mouse
S1908. Send a data packet
S1613-S1615

FIG. 19

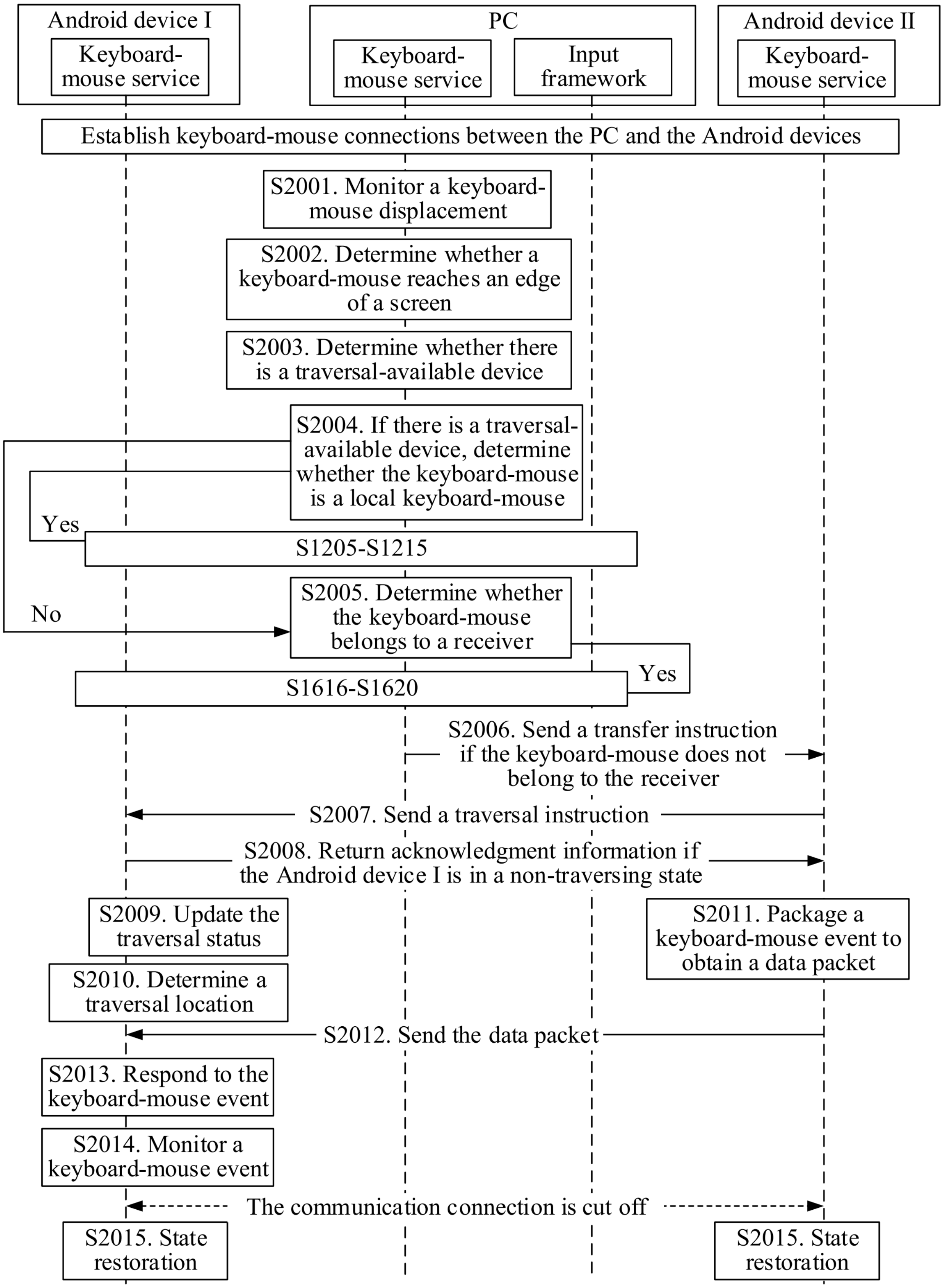
Android device I
Keyboard-mouse service
PC
Keyboard-mouse service
Input framework
Android device II
Keyboard-mouse service
Establish keyboard-mouse connections between the PC and the Android devices
S2001. Monitor a keyboard-mouse displacement
S2002. Determine whether a keyboard-mouse reaches an edge of a screen
S2003. Determine whether there is a traversal-available device
S2004. If there is a traversal-available device, determine whether the keyboard-mouse is a local keyboard-mouse
Yes
S1205-S1215
No
S2005. Determine whether the keyboard-mouse belongs to a receiver
Yes
S1616-S1620
S2006. Send a transfer instruction if the keyboard-mouse does not belong to the receiver
S2007. Send a traversal instruction
S2008. Return acknowledgment information if the Android device I is in a non-traversing state
S2009. Update the traversal status
S2010. Determine a traversal location
S2011. Package a keyboard-mouse event to obtain a data packet
S2012. Send the data packet
S2013. Respond to the keyboard-mouse event
S2014. Monitor a keyboard-mouse event
The communication connection is cut off
S2015. State restoration
S2015. State restoration

FIG. 20

## INTERNATIONAL SEARCH REPORT

International application No.
**PCT/CN2024/082324**

**A. CLASSIFICATION OF SUBJECT MATTER**

G06F3/0354(2013.01)i

According to International Patent Classification (IPC) or to both national classification and IPC

**B. FIELDS SEARCHED**

Minimum documentation searched (classification system followed by classification symbols)

IPC：G06F H04L

Documentation searched other than minimum documentation to the extent that such documents are included in the fields searched

Electronic data base consulted during the international search (name of data base and, where practicable, search terms used)

CNTXT: ENTXTC; DWPI; ENTXT: 键盘, 鼠标, 键鼠, 光标, 穿越, 共享, 移出, 穿梭, 边缘, 边界, 设备, 装置, 多个, 三个, 拦截, hook, keyboard, mouse, keymouse, cursor, three, share, multi, plurality, cross, remove, shuttle, edge, boundary

**C. DOCUMENTS CONSIDERED TO BE RELEVANT**

| Category* | Citation of document, with indication, where appropriate, of the relevant passages | Relevant to claim No. |
|---|---|---|
| PX | WO 2023231893 A1 (HUAWEI TECHNOLOGIES CO., LTD.) 07 December 2023 (2023-12-07)<br>description, paragraphs [0154]-[0175] | 1-3, 5, 14, 22-24 |
| X | CN 116400814 A (HUAWEI DEVICE CO., LTD.) 07 July 2023 (2023-07-07)<br>description, paragraphs [0156]-[0171] | 1-3, 5, 14, 22-24 |
| X | CN 114579016 A (HUAWEI TECHNOLOGIES CO., LTD.) 03 June 2022 (2022-06-03)<br>description, paragraphs [0250]-[0255] | 1-3, 5, 14, 22-24 |
| X | CN 113377272 A (TCL COMMUNICATION (NINGBO) CO., LTD.) 10 September 2021 (2021-09-10)<br>description, paragraph [0061] | 1-3, 5, 14, 22-24 |
| A | CN 114816153 A (HUAWEI TECHNOLOGIES CO., LTD.) 29 July 2022 (2022-07-29)<br>entire document | 1-24 |
| A | US 2023051203 A1 (BEIJING XIAOMI MOBILE SOFTWARE CO., LTD.) 16 February 2023 (2023-02-16)<br>entire document | 1-24 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 May 2024** | **04 June 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/082324**

| Patent document cited in search report | | | Publication date (day/month/year) | Patent family member(s) | | | Publication date (day/month/year) |
|---|---|---|---|---|---|---|---|
| WO | 2023231893 | A1 | 07 December 2023 | CN | 117193583 | A | 08 December 2023 |
| CN | 116400814 | A | 07 July 2023 | None | | | |
| CN | 114579016 | A | 03 June 2022 | WO | 2022111690 | A1 | 02 June 2022 |
| | | | | EP | 4235371 | A1 | 30 August 2023 |
| | | | | US | 2024045557 | A1 | 08 February 2024 |
| | | | | EP | 4235371 | A4 | 20 March 2024 |
| CN | 113377272 | A | 10 September 2021 | WO | 2022252733 | A1 | 08 December 2022 |
| CN | 114816153 | A | 29 July 2022 | WO | 2022161120 | A1 | 04 August 2022 |
| US | 2023051203 | A1 | 16 February 2023 | EP | 4134793 | A1 | 15 February 2023 |
| | | | | CN | 113687765 | A | 23 November 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310862162